(19) **Europäisches Patentamt / European Patent Office / Office européen des brevets**

(11) **EP 4 733 904 A1**

(12) # EUROPEAN PATENT APPLICATION
published in accordance with Art. 153(4) EPC

(43) Date of publication:
29.04.2026   Bulletin 2026/18

(21) Application number: 24843556.2

(22) Date of filing: 19.07.2024

(51) International Patent Classification (IPC):
*G06F 3/041* (2006.01)    *G06F 1/16* (2006.01)
*G06F 1/3234* (2019.01)    *G06F 3/0488* (2022.01)
*G06F 3/04883* (2022.01)

(52) Cooperative Patent Classification (CPC):
G06F 3/0416; G06F 1/16; G06F 1/1616;
G06F 1/1641; G06F 1/1647; G06F 1/1652;
G06F 1/1677; G06F 1/1694; G06F 1/3215;
G06F 1/3231; G06F 1/3265; G06F 3/041;
G06F 3/0488; G06F 3/04883; G06F 2203/04102

(86) International application number:
PCT/KR2024/010477

(87) International publication number:
WO 2025/018843 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:   20.07.2023   KR 20230094911
26.07.2023   KR 20230097507

(71) Applicant: Samsung Electronics Co., Ltd.
Suwon-si, Gyeonggi-do 16677 (KR)

(72) Inventors:
• KWAK, Sanghun
Suwon-si, Gyeonggi-do 16677 (KR)
• KIM, Jungwon
Suwon-si, Gyeonggi-do 16677 (KR)
• JUNG, Yoondo
Suwon-si, Gyeonggi-do 16677 (KR)
• KO, Bongjun
Suwon-si, Gyeonggi-do 16677 (KR)
• HEO, Hoondo
Suwon-si, Gyeonggi-do 16677 (KR)

(74) Representative: Gulde & Partner
Patent- und Rechtsanwaltskanzlei mbB
Berliner Freiheit 2
10785 Berlin (DE)

(54) **FOLDABLE ELECTRONIC DEVICE AND METHOD FOR OPERATING SAME**

(57)   An electronic device according to an embodiment of the present disclosure may comprise: a foldable housing including a first housing part and a second housing part; an external display accommodated in the foldable housing in a first direction so as to be visible to the outside when the electronic device is unfolded and folded; a flexible display accommodated in the foldable housing in a second direction so as to be visible to the outside when the electronic device is unfolded; a touch sensor disposed inside or outside the external display; a display driver (DDIC) for driving the external display and the flexible display; a touch sensor driver (touch IC) for driving the touch sensor; a processor for controlling operations of the display driver (DDIC) and the touch sensor driver (Touch IC); and a memory including instructions. When the instructions are executed by the processor, the electronic device may acquire touch data from the touch sensor driver (touch IC), may determine whether the electronic device is located in a pocket on the basis of the touch data, may perform a touch error prevention operation when it is determined that the electronic device is located in the pocket, and may suspend touch determination on the basis of the touch data for a preset time.

EP 4 733 904 A1

**(Cont. next page)**

# FIG. 20

START

INPUT TOUCH DATA ~2010

EXTRACT TOUCH COORDINATES, TOUCH ID, AND CHARACTERISTIC (position, ID, peak, area, major, minor) ~2015

IS TOUCH DETERMINATION USING ANOTHER SENSOR REQUIRED? 2020 — NO

YES

IS TOUCH AREA LESS THAN REFERENCE VALUE? 2035 — NO

YES

IS CHANGE AMOUNT OF TOUCH AREA LESS THAN REFERENCE VALUE? 2040 — NO

YES

N ≤ 3 ? (N=NUMBER OF FRAMES) 2055 — NO

YES

DETERMINE TOUCH IN POCKET ~2045

DETERMINE FINGER TOUCH 2025

PERFORM MISTOUCH PREVENTION OPERATION (RESTRICT TOUCH, RESTRICT SENSITIVITY, DISPLAY UI POP-UP, SCREEN OFF) ~2050

PROCESS TOUCH INPUT 2030

END

**Description**

[Technical Field]

Embodiments of the disclosure relate to a foldable electronic device and an operation method thereof.

[Background Art]

Electronic devices may refer to devices performing a particular function according to an equipped program thereof, such as a home appliance, an electronic scheduler, a portable multimedia player, a mobile communication terminal, a tablet PC, a video/sound device, a desktop/laptop computer, or a navigation system for automobile. Electronic devices have been developed to gradually become slimmer and have increased rigidity, strengthened design aspects, and differentiated functional elements. An electronic device is gradually changing from the uniform rectangular shape to more diverse shapes. The electronic device may have a changeable structure which may use a large screen display while securing convenient potability. An electronic device may include a rollable display (or flexible display) of which display area is variable (e.g., expanded or reduced) in response to a structural change in at least one housing. The electronic device may have a structure (e.g., a rollable structure or a slidable structure) that allows the display area of the flexible display to be varied (e.g., extended or reduced) through support of housings operating in a sliding manner with respect to each other.

In a folded state, the foldable electronic device may display a screen using an external display and perform operations according to a user's touch input. The external display that operates in the folded state of the foldable electronic device may have a smaller screen size and a smaller overall area of the touch sensor compared to a bar-type display. When the foldable electronic device is placed in the user's pocket (the inside of a pocket) in the folded state, a mistouch may occur if the user's body (e.g., a thigh or buttocks) and the external display come close to each other. In addition, when the foldable electronic device is placed in a bag in the folded state, a mistouch may occur if a conductive object inside the bag and the external display come close to each other.

The above information is provided solely as background information to aid in understanding the embodiments of the disclosure. No determination has been made, and no claim is made, as to whether any of the above information constitutes prior art in connection with the disclosure.

[Disclosure of Invention]

[Solution to Problem]

A mistouch may occur when an external display of a foldable electronic device and the user's body (e.g., a thigh or buttocks) or a conductive object in a bag come close to each other. The foldable electronic device may perform an operation to prevent a mistouch that is not intended by the user. Since the external display has a small screen size and a small total area of a touch sensor, it is difficult to clearly determine whether it is a finger touch intended by the user or an unintended mistouch by the user.

An embodiment of the disclosure may provide a foldable electronic device and an operating method thereof, which may determine that the foldable electronic device is located in a pocket or a bag by using a sensor module (e.g., a proximity sensor, an illuminance sensor, an acceleration sensor, a motion sensor, or a 6-axis sensor) arranged in the foldable electronic device, and block an operation of a display and the performance of a touch sensing operation. An embodiment of the disclosure may provide a foldable electronic device and an operating method thereof, which may distinguish whether the foldable electronic device is located in a user's hand or in a pocket (or a bag) by using characteristics of touch data acquired from a touch sensor. An embodiment of the disclosure may provide a foldable electronic device and an operating method thereof, which may block an unintended mistouch (e.g., a touch error) by the user by adjusting a touch re-input and controlling (e.g., restricting) a touch processing operation when the foldable electronic device is located in a pocket (or a bag).

The technical problems to be addressed in this document are not limited to the technical problems mentioned above, and may be expanded in a range that does not deviate from the spirit and scope of the disclosure. Those skilled in the art will more clearly understand other technical problems not mentioned above from the following description.

An electronic device according to an embodiment of the disclosure may include a foldable housing including a first housing part and a second housing part, an external display received in the foldable housing in a first direction so as to be visible to the outside when the electronic device is unfolded and folded, a flexible display received in the foldable housing in a second direction so as to be visible to the outside when the electronic device is unfolded, a touch sensor disposed inside or outside the external display, a display driver (DDIC) configured to drive the external display and the flexible display, a touch sensor driver (touch IC) configured to drive the touch sensor, a processor configured to control operations of the display driver (DDIC) and the touch sensor driver (touch IC), and a memory including instructions. When the instructions are executed by the processor, the electronic device may acquire touch data from the touch sensor driver (touch IC). When the instructions are executed by the processor, the electronic device may determine whether the electronic device is located in a pocket, based on the touch data. When the instructions are executed by the processor, the electronic device may perform a touch error prevention operation in case that it is determined that the electronic device is located in a pocket, and may suspend a touch determination based on touch data for a preconfigured time period.

In an operating method of a foldable electronic device according to an embodiment of the disclosure, the foldable electronic device may include an external display received in a foldable housing in a first direction so as to be visible to the outside when the electronic device is unfolded and folded, a flexible display received in the foldable housing in a second direction so as to be visible to the outside when the electronic device is unfolded, a touch sensor disposed inside or outside the external display, a display driver configured to drive the external display and the flexible display, a touch sensor driver configured to drive the touch sensor, and a processor configured to control operations of the display driver and the touch sensor driver. In the operating method, when the processor is executed, touch data from the touch sensor driver (touch IC) may be acquired. In the operating method, it may be determined whether the electronic device is located in a pocket based on the touch data. In the operating method, in case that it is determined that the electronic device is located in a pocket, a touch error prevention operation may be performed, and touch determination based on the touch data may be suspended for a preconfigured time period.

The electronic device (e.g., a foldable electronic device) according to various embodiments of the disclosure may determine that the foldable electronic device is located in a pocket or a bag by using a sensor module (e.g., a proximity sensor, an illuminance sensor, an acceleration sensor, a motion sensor, or a 6-axis sensor) arranged in the foldable electronic device, and block an operation of a display and the performance of a touch sensing operation. It may be distinguished whether the foldable electronic device is located in a user's hand or in a pocket (or a bag) by using characteristics of touch data acquired from a touch sensor. An unintended mistouch (e.g., a touch error) by the user may be blocked by adjusting (e.g., restricting) a touch re-input and controlling a touch processing operation when the foldable electronic device is located in a pocket (or a bag).

According to an embodiment of the disclosure, the electronic device may prevent a mistouch after being taken out of a pocket by restricting processing of a double tap (e.g., consecutive touch) and/or a touch swipe (suspending touch processing) for a predetermined time period (e.g., 1000 ms, 2000 ms, or 3000 ms) after the electronic device is taken out of the pocket.

It will be appreciated by a person skilled in the art that effects which may be achieved from the disclosure are not limited to the effects described above and other effects that are not described above will be clearly understood from the following detailed description.

[Brief Description of Drawings]

In connection with the description of the drawings, like or similar reference numerals may be used for like or similar elements.

FIG. 1 is a block view illustrating an electronic device in a network environment according to various embodiments of the disclosure.

FIGS. 2A and 2B are views illustrating an electronic device in a first state (e.g., an unfolded state or an unfolded stage) viewed from a front surface and a rear surface according to an embodiment of the disclosure.

FIGS. 2C and 2D are views illustrating an electronic device in a second state (e.g., a folded state) viewed from a front surface and a rear surface according to an embodiment of the disclosure.

FIG. 3A is a perspective view illustrating an electronic device in a first state (e.g., an unfolded state, a flat state, or an unfolding state) according to an embodiment of the disclosure.

FIG. 3B is a plan view illustrating a front surface of an electronic device in a first state (e.g., an unfolded state) according to an embodiment of the disclosure.

FIG. 3C is a plan view illustrating a rear surface of an electronic device in a first state (e.g., an unfolded state) according to an embodiment of the disclosure.

FIG. 3D is a perspective view illustrating an electronic device in a second state (e.g., a folded state or a folding state) according to an embodiment of the disclosure.

FIG. 3E is a perspective view illustrating an electronic device in a third state (e.g., an intermediate state) according to an embodiment of the disclosure.

FIGS. 4A and 4B are views illustrating a front surface and a rear surface of an electronic device in a first state (e.g., a slide-out state) according to various embodiments of the disclosure.

FIGS. 4C and 4D are views illustrating a front surface and a rear surface of an electronic device in a second state (e.g., a slide-in state) according to various embodiments of the disclosure.

FIGS. 5A and 5B are views illustrating a front surface and a rear surface of an electronic device in a first state (e.g., a slide-out state) according to an embodiment of the disclosure.

FIGS. 5C and 5D are views illustrating a front surface and a rear surface of an electronic device in a second state (e.g., a slide-in state) according to an embodiment of the disclosure.

FIG. 6A is a view illustrating an unfolded state of a multi-foldable electronic device according to an embodiment of the disclosure.

FIG. 6B is a view illustrating a folded state of a multi-foldable electronic device according to an embodiment of the disclosure.

FIG. 7A is a perspective view illustrating a first surface (e.g., a front surface) of an electronic device according to an embodiment of the disclosure.

FIG. 7B is a perspective view illustrating a second surface (e.g., a rear surface) of an electronic device according to an embodiment of the disclosure.

FIG. 8 is a block view illustrating a configuration of an electronic device according to an embodiment.

FIG. 9 is a view illustrating an electronic device (e.g., a foldable electronic device) located in a user's pocket.

FIG. 10 is a view illustrating an operation of processing touch coordinates in an electronic device.

FIGS. 11 to 12C are views illustrating characteristics of touch data generated from a finger touch.

FIGS. 13 to 14C are views illustrating characteristics of touch data generated from a mistouch of a user's body (e.g., a thigh or buttocks) when an electronic device (e.g., a foldable electronic device) is located in a user's pocket (inside the pocket).

FIG. 15 is a view illustrating acquiring and utilizing a peak strength (e.g., a maximum strength), a touch area, a major value, and a minor value based on touch data.

FIGS. 16A and 16B are views illustrating examples of touch data according to a touch of the thumb.

FIGS. 17A and 17B are views illustrating examples of touch data according to a touch of two fingers.

FIG. 18 is a flowchart illustrating an operating method of an electronic device according to an embodiment of the disclosure.

FIGS. 19A to 19F are views illustrating determining of touch characteristics according to an amount of change in a touch area over multiple frames.

FIG. 20 is a flowchart illustrating an operating method of an electronic device according to an embodiment of the disclosure.

FIGS. 21A to 21F are views illustrating characteristics of touch data generated from a mistouch of a user's body (e.g., a thigh or buttocks) when an electronic device (e.g., a foldable electronic device) is located in a user's pocket (inside the pocket).

FIGS. 22A to 22D are views illustrating characteristics of touch data according to a palm touch.

FIG. 23 is a flowchart illustrating an operating method of an electronic device according to an embodiment of the disclosure.

FIG. 24 is a view illustrating an electronic device according to an embodiment of the disclosure, showing a sensor hub integrated and operating within a processor.

FIG. 25 is a view illustrating an electronic device according to an embodiment of the disclosure, in which a processor and a sensor hub are separated from each other and operate.

FIGS. 26A to 26B are views illustrating characteristics of large-area touch due to a mistouch of a user's body (e.g., a thigh or buttocks) and examples of small-area touch re-input occurring when an electronic device (e.g., a foldable electronic device) is located in a user's pocket (the inside of a pocket).

FIGS. 27A to 27B are views illustrating characteristics of large-area touch due to a mistouch of a user's body (e.g., a thigh or buttocks) and examples of swipe touch re-input occurring when an electronic device (e.g., a foldable electronic device) is located in a user's pocket (the inside of a pocket).

FIG. 28 is a flowchart illustrating an operating method of an electronic device according to an embodiment of the disclosure.

FIG. 29 is a view illustrating an example of an electronic device (e.g., a foldable notebook PC, or a foldable tablet PC) that may be used by folding or unfolding a display.

It should be noted that throughout the drawings, an identical reference number is used to describe identical or similar elements, features, and structures.

[Mode for the Invention]

The following description, with reference to the accompanying drawings, is provided to aid in a comprehensive understanding of various embodiments of the disclosure as defined by the claims and their equivalents. The disclosure includes various specific details for illustrative purposes, but these should be considered merely exemplary. Therefore, those skilled in the art will recognize that various changes and modifications may be made to the various embodiments described herein without departing from the scope and spirit of the disclosure. Furthermore, descriptions of well-known functions and configurations may be omitted for clarity and brevity.

The terms and words used in the following description and claims are not limited to their dictionary meanings but are used by the applicant solely to enable a clear and consistent understanding of this document. Therefore, it should be clear to those skilled in the art that the following description of various embodiments of the document is provided for illustrative purposes only and is not intended to limit the document as defined by the appended claims and their equivalents.

The singular form shall be understood to include the plural unless the context clearly indicates otherwise. Thus, for example, a reference to a "component surface" may include a reference to one or more such surfaces.

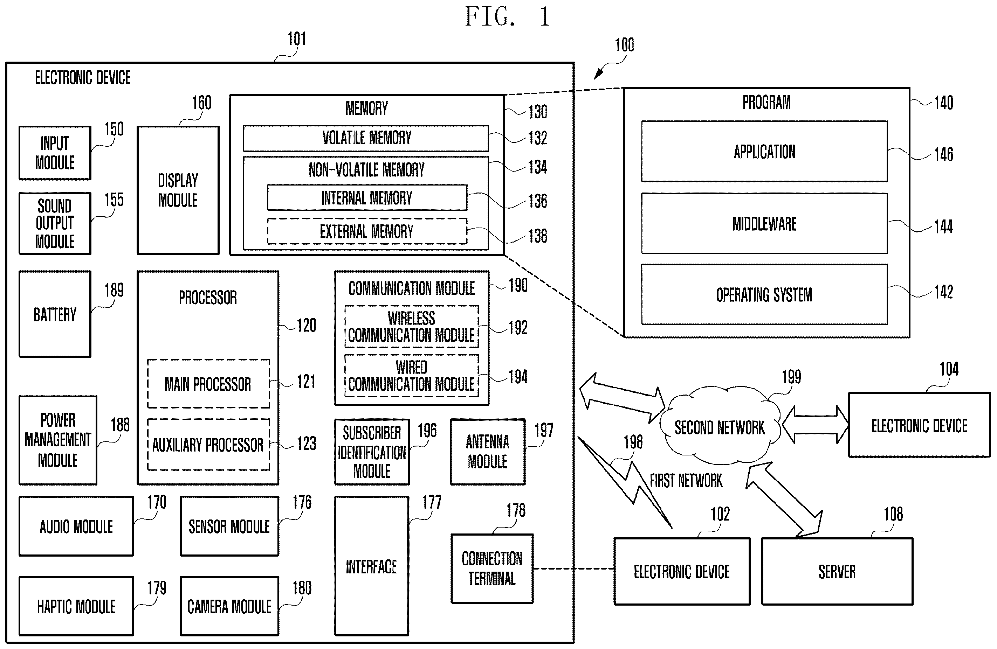

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network

EP 4 733 904 A1

198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, the display module 160 may include a flexible display configured to be folded or unfolded.

According to an embodiment, the display module 160 may include a flexible display disposed to be slidable in a first direction (e.g., slidable in the x-axis direction) or slidable in a second direction (e.g., slidable in the y-axis direction) and providing a screen (e.g., a display screen).

According to an embodiment, the display module 160 may be also referred to as a variable display (e.g., a stretchable display), an expandable display, or a slide-in/out display.

According to an embodiment, the display module 160 may include a bar type or plate type display.

According to an embodiment, the sensor module 176 may include a movement distance detection sensor configured to detect a movement distance of the second housing from the first housing of the electronic device.

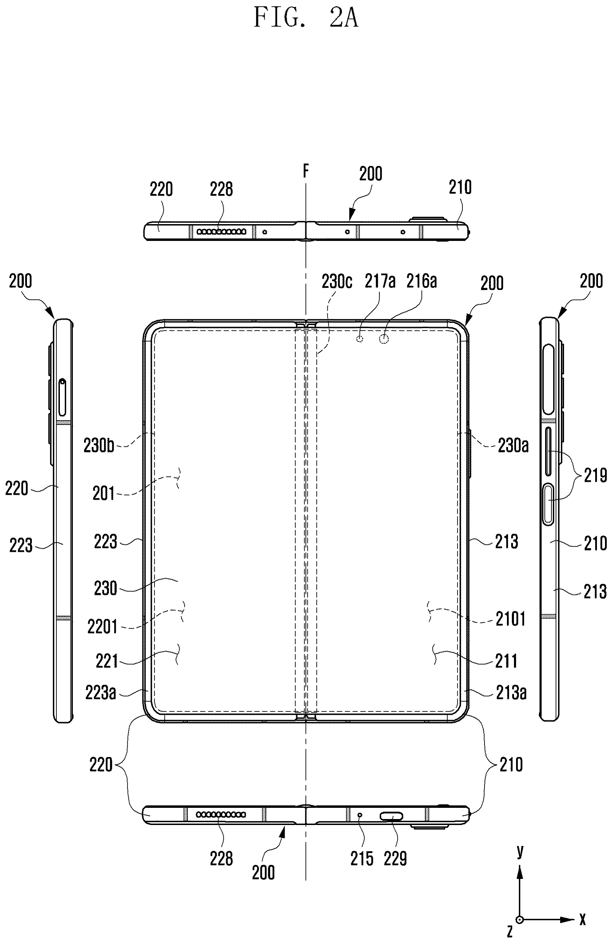

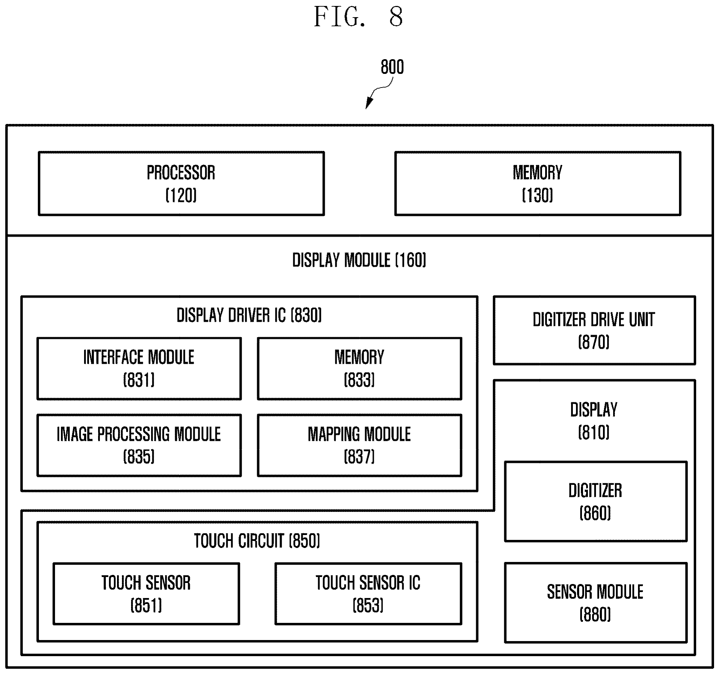

According to an embodiment, the sensor module 176 may detect a first state corresponding to a slide-in state, a second state corresponding to a slide-out state, or a third state corresponding to an intermediate state, between the slide-in state (e.g., the first state) and the slide-out state (e.g., the second state) when the second housing 220 moves from the first housing 210. In some embodiments, the processor 120 may detect a movement distance in real time through the sensor module 176 while the second housing 220 is moved from the first housing 210. The processor 120 may control an operation of a touch sensor (e.g., a touch sensor 851 in FIG. 8) in response to a variable display area through the flexible display (e.g., a flexible display 230 in FIG. 2A).

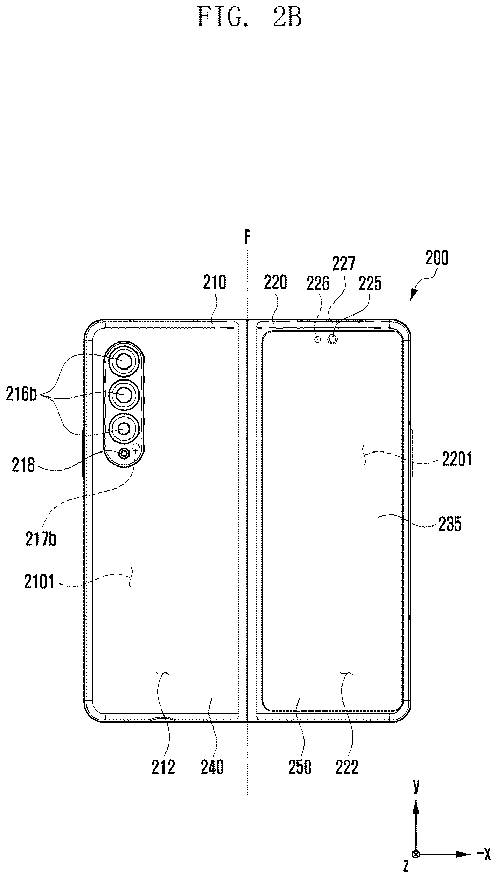

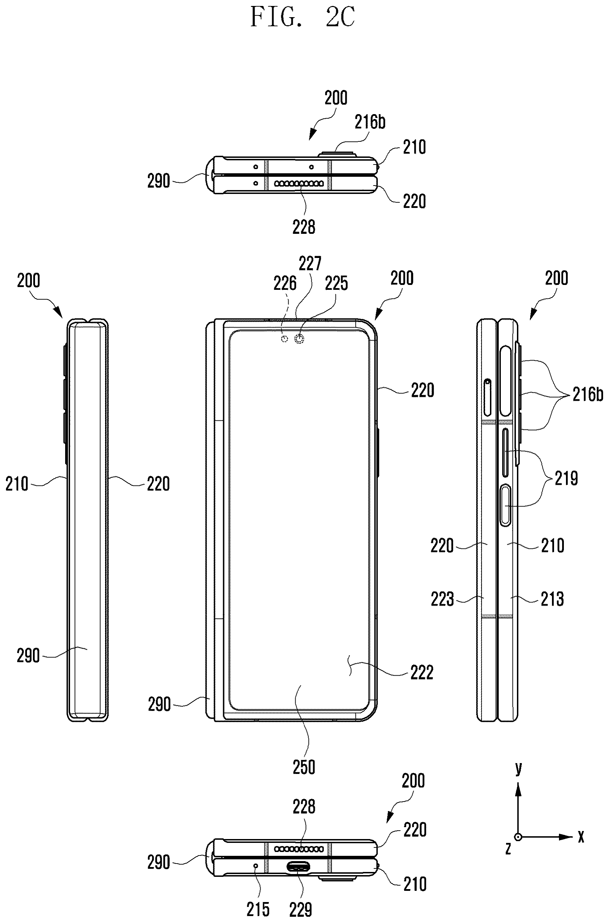

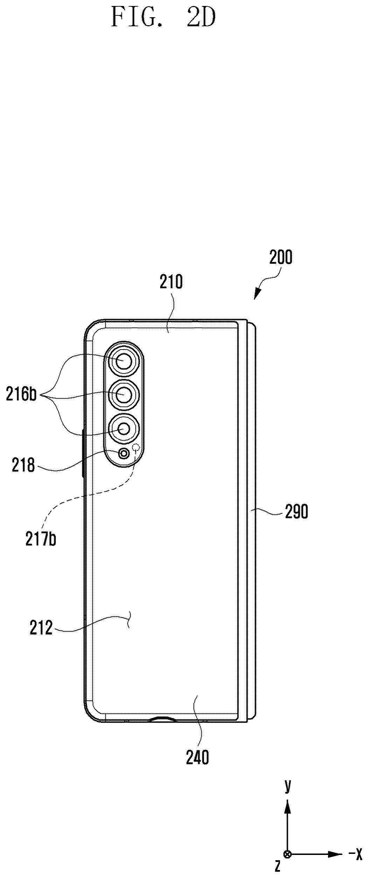

FIGS. 2A and 2B are views illustrating an electronic device in a first state (e.g., an unfolded state or an unfolded stage) viewed from a front surface and a rear surface according to an embodiment of the disclosure. FIGS. 2C and 2D are views illustrating an electronic device in a second state (e.g., a folded state) viewed from a front surface and a rear surface according to an embodiment of the disclosure.

The electronic device 200 in FIGS. 2A to 2D may be at least partially similar to the electronic device 101 in FIG. 1 or may further include other embodiments of the electronic device 101.

Referring to FIGS. 2A to 2D, the electronic device 200 (e.g., the electronic device 101 in FIG. 1) according to an embodiment of the disclosure may include a pair of housings 210 and 220 (e.g., a foldable housing structure) rotatably coupled to each other around a folding axis F through at least one hinge device (e.g., the hinge module or hinge structure) to be foldable with respect to each other, a first display 230 (e.g., a flexible display, a foldable display, or a main display) disposed through the pair of housings 210 and 220, and/or a second display 235 (e.g., a sub-display) disposed through a second housing 220.

According to an embodiment, at least a portion of the at least one hinge device may be disposed not to be seen from the outside through a first housing 210 and the second housing 220 and disposed not to be seen through a hinge housing 290 (e.g., a hinge cover) configured to cover a foldable portion in the first state (e.g., the unfolded state). In the disclosure, a surface on which the first display 230 is disposed may be defined as a front surface of the electronic device 200. In the disclosure, a surface opposite to the front surface may be defined as a rear surface of the electronic device 200. A surface surrounding a space between the front surface and the rear surface may be defined as a lateral surface of the electronic device 200.

According to an embodiment, the pair of housings 210 and 220 may include the first housing 210 and the second housing 220 arranged to be foldable with respect to each other through the at least one hinge device.

According to an embodiment, the pair of housings 210 and 220 are not limited to the shape and combination described in FIGS. 2A to 2D, and may be implemented by another shape or a combination and/or coupling of components.

According to an embodiment, the first housing 210 and the second housing 220 may be arranged on opposite sides around the folding axis F, folded an overall symmetric shape with respect to the folding axis F, and folded to match each other.

According to an embodiment, the first housing 210 and the second housing 220 may be folded to be asymmetric based on the folding axis F.

According to an embodiment, an angle and a distance between the first housing 210 and the second housing 220 may vary according to whether the electric device 200 is in the first state (e.g., the unfolded state), the second state (e.g., the folded state), or the third state (e.g., the intermediate state). For example, the electronic device 200 may sense whether it is in the first state (e.g., the unfolded state), the second state (e.g., the folded state), or the third state (e.g., the intermediate state), by using a sensor module (e.g., the sensor module 176 in FIG. 1). The electronic device 200 may sense the angle between the first housing 210 and the second housing 220 by using the sensor module (e.g., the sensor module 176 in FIG. 1).

According to an embodiment, the first housing 210 may be connected to the at least one hinge device in the first state (e.g., the unfolded state) of the electronic device 200. The first housing 210 may include a first surface 211 disposed to face the front surface of the electronic device 200, a second surface 212 facing a direction opposite to the first surface 211, and/or a first lateral member 213 surrounding at least a portion of a first space 5101 between the first surface 211 and the second surface 212.

According to an embodiment, the second housing 220 may be connected to the at least one hinge device in the first state (e.g., the unfolded state) of the electronic device 200. The second housing 220 may include a third surface 221 disposed to face the front surface of the electronic device 200, a fourth surface 222 facing a direction opposite to the third surface 221, and/or a second lateral member 223 surrounding at least a portion of a second space 5201 between the third surface 221 and the fourth surface 222.

According to an embodiment, the first surface 211 may face a direction substantially identical to the third surface 221 in the first state (e.g., the unfolded state), and may be at least partially face the third surface 221 in the second state (e.g., the folded state).

According to an embodiment, the electronic device 200 may include a recess 201 configured to receive the first display 230 through a structural coupling of the first housing 210 and the second housing 220.

According to an embodiment, the recess 201 may have a size substantially identical to that of the first display 230.

According to an embodiment, the first housing 210 may be coupled to the first lateral member 213 when viewing the first display 230 from above. The first housing 210 may include a first protection frame 213a (e.g., a first decoration member) disposed to overlap an edge of the first display 230 so as to cover the edge of the first display 230 not to be seen from the outside.

According to an embodiment, the first protection frame 213a may be integrally formed with the first lateral member 213.

According to an embodiment, the second housing 220 may be coupled to the second lateral member 223 when viewing the first display 230 from above. The second housing 220 may include a second protection frame 223a disposed to overlap an edge of the first display 230 so as to cover the edge of the first display 230 not to be seen from the outside.

According to an embodiment, the second protection frame 223a may be integrally formed with the second lateral member 223. According to an embodiment, the first protection frame 213a and the second protection frame 233a may be omitted.

According to an embodiment, the hinge structure 290 (e.g., the hinge cover) may be disposed between the first housing 210 and the second housing 220. The hinge housing 290 may be disposed to cover a portion (e.g., at least one hinge module) of the at least one hinge device.

According to an embodiment, the hinge housing 290 may be covered or exposed to the outside by a portion of the first housing 210 and the second housing 220 depending of the first state (e.g., the unfolded state), the second state (e.g., the folded state), or the third state (e.g., the intermediate state) of the electronic device 200. For example, in case that the electronic device 200 is in the first state (e.g., the unfolded state), at least a portion of the hinge cover 290 may be disposed to be covered by the first housing 210 and the second housing 220 and not to be substantially seen from the outside.

According to an embodiment, in case that the electronic device 200 is in the second state (e.g., the folded state), at least a portion of the hinge housing 290 may be disposed between the first housing 210 and the second housing 220 to be seen from the outside.

According to an embodiment, in the third state (e.g., the intermediate state) in which the first housing 210 and the second housing 220 are folded with a certain angle, the hinge housing 290 may be disposed to be at least partially seen from the outside of the electronic device 200 between the first housing 210 and the second housing 220. For example, an area through which the hinge housing 290 is exposed to the outside may be smaller than that of a completed folded state. According to an embodiment, the hinge housing 290 may include a curved surface.

According to an embodiment, in case that the electronic device 200 is in first state (e.g., the unfolded state), the first housing 210 and the second housing 220 may have an angle of 180° therebetween, and a first area 230a, a second area 230b, and a folding area 230c of the first display 230 may be arranged to define the same plane. The first area 230a, the second area 230b, and the folding area 230c of the first display 230 may be arranged to face a substantially identical direction (e.g., the z-axis direction). In an embodiment, in case that the electronic device 200 is in the first state (e.g., the unfolded state), the first housing 210 may rotate at an angle of about 360° with respect to the second housing 220 to be reversely folded (e.g., an out-folding method) so that the second surface 212 and the fourth surface 222 face each other.

According to an embodiment, in case that the electronic device 200 is in the second state (the folded state), the first surface 211 of the first housing 210 and the third surface 221 of the second housing 220 may be arranged to face each other. In this case, the first area 230a and the second area 230b of the first display 230 may be arranged to face each other while configuring a narrow angle (e.g., a range of 0 degrees to about 10 degrees) therebetween through the folding area 230c. According to an embodiment, at least a portion of the folding area 230c may be changed to be a curved shape having a certain curvature.

According to an embodiment, in case that the electronic device 200 is in the third state (e.g., the intermediate state), the first housing 210 and the second housing 220 may be arranged to have a certain angle therebetween. In this case, the first area 230a and the second area 230b of the first display 230 may configure an angle larger than that of the second state (e.g., the folded state) and smaller than that of the first state (e.g., the unfolded state), and the curvature of the folding area 230c may be smaller than that of the second state (e.g., the folded state) and larger than that of the first state (e.g., the unfolded state). According to an embodiment, the first housing 210 and the second housing 220 may configure an angle that may stop at a specified folding angle between the second state (e.g., the folded state) and the third state (e.g., the intermediate state) through the at least one hinge device (e.g., a free stop function). According to an embodiment, the first housing 210 and the second housing 220 may be continuously operated while being pressurized in an unfolding direction or a folding direction based on a designated inflection angle, through the at least one hinge device.

According to an embodiment, the electronic device 200 may include at least one of at least one display 230 or 235 disposed in the first housing 210 and/or the second housing 220, an input device 215, audio output devices 227 and 228, a sensor module 217a, 217b, or 226, camera modules 216a, 216b, and 225, a key input device 219, an indicator (not shown), or a connector port 229. According to an embodiment, the electronic device 200 may omit at least one of the components or may additionally include at least one other component.

According to an embodiment, the at least one display 230 or 235 may include the first display 230 (e.g., a flexible display) disposed from the first surface 211 of the first housing 210 to be supported by the third surface 221 of the second housing 220 through the at least one hinge device and the second display 235 disposed in an internal space of the second housing 220 to be at least partially seen from the outside through the fourth surface 222.

According to an embodiment, the second display 235 may be disposed in an internal space of the first housing 210 to be seen from the outside through the second surface 212.

According to an embodiment, the first display 230 may be mainly used in the first state (e.g., the unfolded state) of the electronic device 200. The second display 235 may be also used in the first state (e.g., the unfolded state) of the electronic device 200.

According to an embodiment, the second display 235 may be mainly used in the second state (e.g., the folded state) of the electronic device 200. The first display 230 may be also used in the second state (e.g., the folded state) of the electronic device 200.

According to an embodiment, in the third state (e.g., the intermediate state), the electronic device 200 may control the first display 230 and/or the second display 235 to be usable based on a folding angle of the first housing 210 and the second housing 220.

According to an embodiment, the first display 230 may be disposed in a reception space defined by the pair of housings 210 and 220. For example, the first display 200 may be disposed in the recess 201 defined by the pair of housings 210 and 220, and may be disposed to occupy substantially most of the front surface of the electronic device 200 in the first state (e.g., the unfolded state). According to an embodiment, the first display 230 may include a flexible display having at least a partial area transformable to a flat surface or a curved surface.

According to an embodiment, the first display 230 may include the first area 230a facing the first housing 210 and the second area 230b facing the second housing 220. According to an embodiment, the first display 230 may include the folding area 230c including a portion of the first area 230a and a portion of the second area 230b based the folding axis F.

According to an embodiment, at least a portion of the folding area 230c may include an area corresponding to the at least one hinge device.

According to an embodiment, the area division of the first display 230 is an exemplary physical division by the pair of housings 210 and 220 and the at least one hinge device, and the first display 230 may be displayed as a substantially seamless single full screen through the pair of housings 210 and 220 and the at least one hinge device.

According to an embodiment, the first area 230a and the second area 230b may have an overall symmetrical shape or a partially asymmetrical shape based on the folding area 230c.

According to an embodiment, the electronic device 200 may include a first rear cover 240 disposed on the second surface 212 of the first housing 210 and a second rear cover 250 disposed on the fourth surface 222 of the second housing 220. According to an embodiment, at least a portion of the first rear cover 240 may be integrally formed with the first lateral member 213. According to an embodiment, at least a portion of the second rear cover 250 may be integrally formed with the second lateral member 223.

According to an embodiment, at least one of the first rear cover 240 and the second rear cover 250 may be made of a substantially transparent plate (e.g., a polymer plate or a glass plate including various coating layers) or an opaque plate. According to an embodiment, the first rear cover 240 may be made of an opaque plate such as coated or tinted glass, ceramic, polymer, a metal (e.g., aluminum, stainless steel (STS), or magnesium), or a combination of at least two of the materials.

According to an embodiment, the second rear cover 250 may be configured through a substantially transparent plate such as glass or polymer. Accordingly, the second display 235 may be disposed in an internal space of the second housing 220 to be seen from the outside through the second rear cover 250.

According to an embodiment, the input device 215 may include a microphone. According to an embodiment, the input device 215 may include multiple microphones arranged so as to detect a direction of a sound.

According to various embodiments, the audio output devices 227 and 228 may include speakers. According to an embodiment, the audio output devices 227 and 228 may include a call receiver 227 disposed through the fourth surface 222 of the second housing 220 and an external speaker 228 disposed through at least a portion of the second lateral member 223 of the second housing 220.

According to an embodiment, the input device 215, the audio output devices 227 and 228, and the connector port 229 may be disposed in spaces of the first housing 210 and/or the second housing 220. The input device 215, the audio output devices 227 and 228, and the connector port 229 may be exposed to an external environment through at least one hole provided through the first housing 210 and/or the second housing 220. According to an embodiment, holes disposed through the first housing 210 and/or the second housing 220 may be commonly used for the input device 215 and the audio output devices 227 and 228. According to an embodiment, the audio output devices 227 and 228 may include a speaker (e.g., a piezo speaker) operating without a hole provided through the first housing 210 and/or the second housing 220.

According to an embodiment, the camera modules 216a, 216b, and 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220.

According to an embodiment, the electronic device 200 may include a flash 218 disposed adjacent to the second camera module 216b. According to an embodiment, the flash 218 may include, for example, a light-emitting diode or a xenon lamp.

According to an embodiment, the camera modules 216a, 216b, and 225 may include one or more of lenses, an

EP 4 733 904 A1

image sensor, and/or an image signal processor. According to an embodiment, at least one of the camera modules 216a, 216b, and 225 may include two or more lenses (e.g., a wide-angle and telephoto lens) and image sensors and may be disposed together on one surface of the first housing 210 and/or the second housing 220.

According to an embodiment, the sensor modules 217a, 217b and 226 (e.g., the sensor module 176 in FIG. 1) may generate an electrical signal or data value corresponding to an internal operation state or an external environment state of the electronic device 200.

According to an embodiment, the sensor modules 217a, 217b and 226 (e.g., the sensor module 176 in FIG. 1) may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220.

According to an embodiment, the sensor modules 217a, 217b and 226 (e.g., the first sensor module 176 in FIG. 1) may include at least one of a gesture sensor, a gyro sensor, a grip sensor, a color sensor, an infrared (IR) sensor, an illuminance sensor, an ultrasonic sensor, a proximity sensor, a biometric sensor (e.g., an iris recognition sensor), a distance detection sensor (e.g., a time of flight (TOF) sensor, or a light detection and ranging (LiDAR) sensor), a barometric sensor, a magnetic sensor (e.g., a 6-axis sensor, or a geomagnetic sensor), an acceleration sensor, a temperature sensor, a humidity sensor, and/or a fingerprint recognition sensor.

According to an embodiment, a processor (e.g., the processor 120 in FIG. 1) of the electronic device 200 may operate the sensor modules 217a, 217b and 226 (e.g., the sensor module 176 in FIG. 1) and sense an illuminance and/or an IR strength of a periphery of the electronic device 200. The processor 120 may acquire information about the illuminance and information about the IR strength of the periphery of the electronic device 200.

According to an embodiment, the electronic device 200 may include at least one of a gesture sensor now shown in the drawings, a gyro sensor, a grip sensor, a color sensor, an infrared (IR) sensor, an illuminance sensor, an ultrasonic sensor, a proximity sensor, a biometric sensor (e.g., an iris recognition sensor), a distance detection sensor (e.g., a time of flight (TOF) sensor, or a light detection and ranging (LiDAR) sensor), a barometric sensor, a magnetic sensor (e.g., a 6-axis sensor, or a geomagnetic sensor), an acceleration sensor, a temperature sensor, a humidity sensor, and/or a fingerprint recognition sensor.

According to an embodiment, the fingerprint recognition sensor may be disposed through at least one of the first lateral member 213 of the first housing 210 and/or the second lateral member 223 of the second housing 220.

According to an embodiment, the key input device 219 may be disposed to be exposed to the outside through the first lateral member 213 of the first housing 210. According to an embodiment, the key input device 219 may be disposed to be exposed to the outside through the second lateral member 223 of the second housing 220. According to an embodiment, the electronic device 200 may not include a portion or entirety of the key input device 219, and the excluded key input device 219 may be implemented as various forms, such as a soft key, on the at least one display 230 or 235. As an embodiment, the key input device 219 may be implemented using a pressure sensor included in the at least one display 230 or 235.

According to an embodiment, the connector port 229 may include a connector (e.g., a USB connector or an interface connector port (IF) module) configured to transmit or receive power and/or data to or from an external electronic device. According to an embodiment, the connector port 229 may concurrently perform functions to transmit or receive an audio signal to or from an external electronic device or may further include a separate connector port (e.g., an ear jack hole) to perform function to transmit or receive an audio signal.

According to an embodiment, at least one camera module 216a or 225 among the camera modules 216a, 216b, and 225, at least one sensor module 217a or 226 among the sensor modules 217a, 217b, and 226, and/or the indicator may be arranged to be visually exposed through the at least one display 230 or 235. For example, at least one camera module 216a or 225, at least one sensor module 217a or 226, and/or the indicator may be arranged under an activation area (display area) of the at least one display 230 or 235 within an internal space of at least one housing 210 or 220. At least one camera module 216a or 225, at least one sensor module 217a or 226, and/or the indicator may be arranged to be in contact with the external environment through a transparent area or an opening perforated through a cover member (e.g., a window layer (not shown) of the first display 230 and/or the second rear cover 250).

According to an embodiment, an area in which the at least one display 230 or 235 and the at least one camera module 216a or 225 face each other may correspond to a portion of an area configured to display contents, and may be configured as a transmission area having predetermined transmittance.

According to an embodiment, the transmission area may be configured to have transmittance in the range of about 5 % to about 20%. The transmission area may include an area overlapping an effective area (e.g., a view-angle area) of the at least one camera module 216a or 225 through which light for imaging to an image sensor to generate an image passes. For example, the transmission area of the display 230 or 235 may include an area having a lower pixel density than a peripheral area. For example, the transmission area may be substituted with the opening. For example, the at least one camera module 216a or 225 may include an under-display camera (UDC) or an under panel camera (UPC). As an embodiment, some of camera modules or sensor modules 217a and 226 may be disposed to perform functions thereof without being visually exposed through the display. For example, an area facing the camera module 216a or 225 and/or the sensor module 217a or 226 disposed under the display 230 or 235 (e.g., a display panel) may have an under-display camera structure and may not need a perforated opening.

The electronic device 200 in FIG. 2A may include a touch circuit (e.g., a touch circuit 850 in FIG. 8) including a touch sensor (e.g., a touch sensor 851 in FIG. 8) and a touch sensor IC (e.g., a touch sensor IC 853 in FIG. 8).

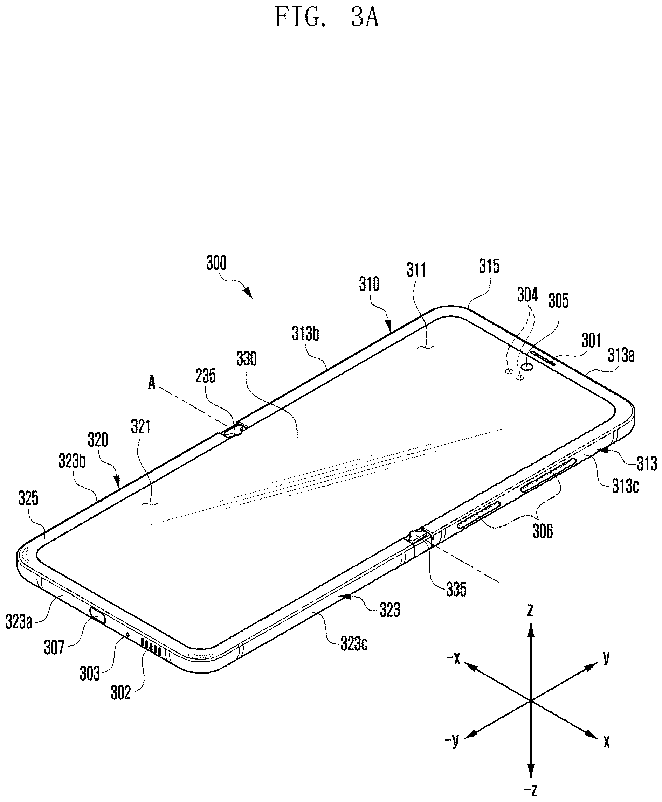

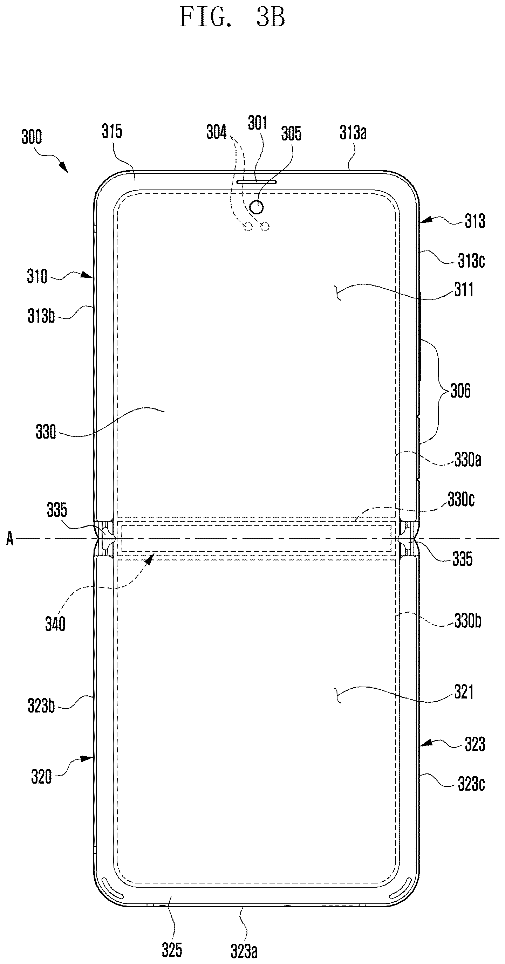

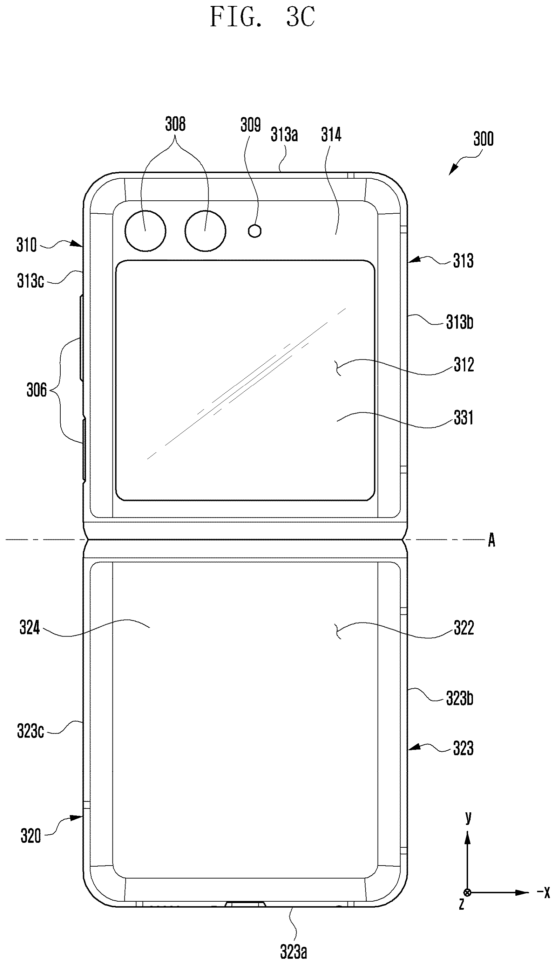

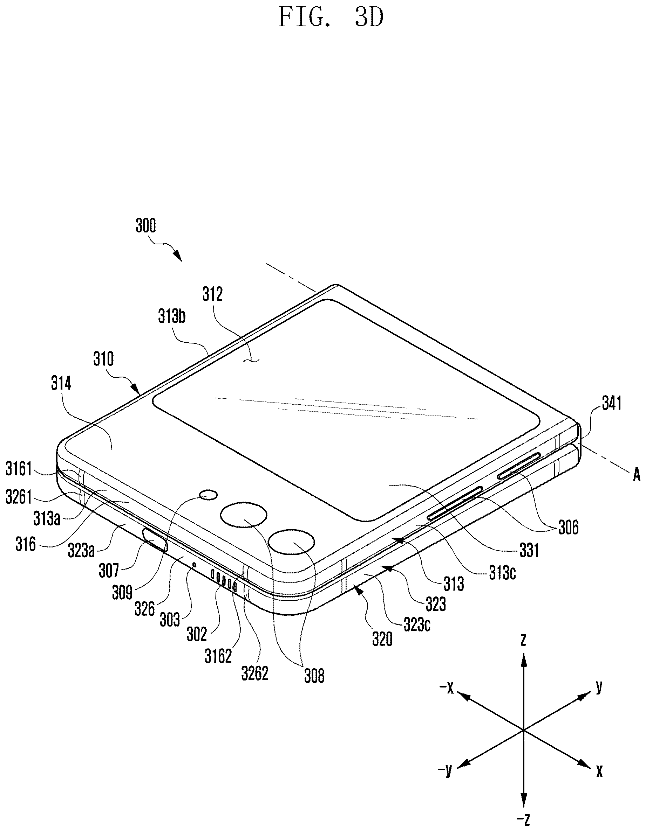

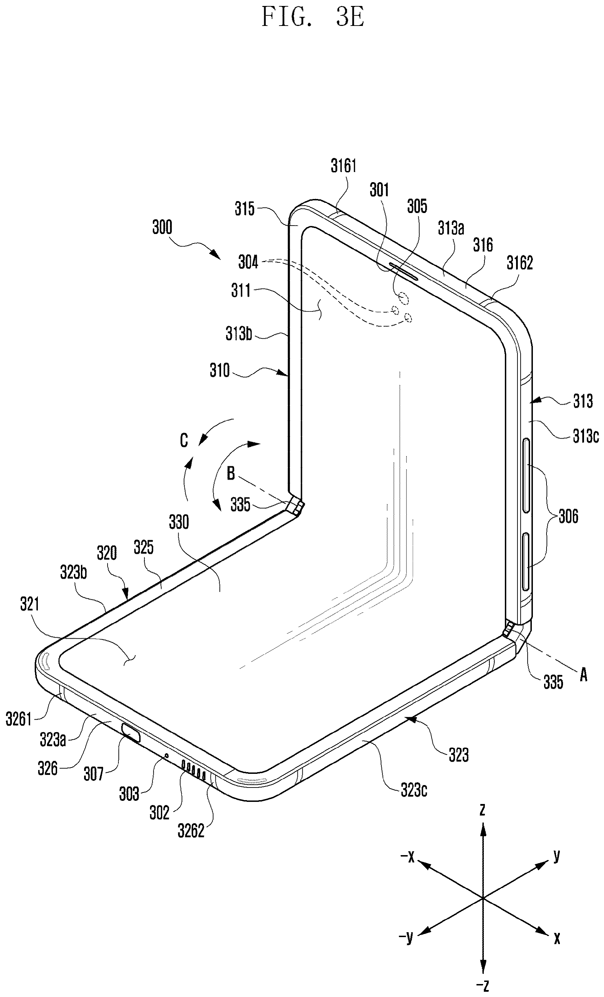

FIG. 3A is a perspective view illustrating an electronic device in a first state (e.g., an unfolded state, a flat state, or an unfolding state) according to an embodiment of the disclosure. FIG. 3B is a plan view illustrating a front surface of an electronic device in a first state (e.g., an unfolded state) according to an embodiment of the disclosure. FIG. 3C is a plan view illustrating a rear surface of an electronic device in a first state (e.g., an unfolded state) according to an embodiment of the disclosure. FIG. 3D is a perspective view illustrating an electronic device in a second state (e.g., a folded state or a folding state) according to an embodiment of the disclosure. FIG. 3E is a perspective view illustrating an electronic device in a third state (e.g., an intermediate state) according to an embodiment of the disclosure.

The electronic device 300 in FIGS. 3A to 3E may be at least partially similar to the electronic device 101 in FIG. 1 or may further include other embodiments of the electronic device.

Referring to FIGS. 3A to 3E, the electronic device 300 according to an embodiment of the disclosure may include a pair of housings 310 and 320 (e.g., foldable housings) that are rotatably coupled to face each other and foldable based on a hinge structure (e.g., the hinge structure 340 in FIG. 3B, a hinge device, or a hinge module).

According to an embodiment, the hinge structure 340 may be arranged in the x-axis direction or in the y-axis direction. According to an embodiment, two or more hinge structures 340 may be arranged to be folded in the same direction or different directions.

According to an embodiment, the electronic device 300 may include a flexible display 330 (e.g., a foldable display) disposed on an area defined by the pair of housings 310 and 320.

According to an embodiment, a first housing 310 and a second housing 320 are arranged on opposite sides around a folding axis (A-axis) and have substantially symmetric shapes with respect to the folding axis (A-axis).

According to an embodiment, an angle and a distance between the first housing 310 and the second housing 320 may vary according to whether the electric device 300 is in the first state (e.g., the unfolded state, the flat state, or the unfolding state), the second state (e.g., the folded state or the folding state), or the third state (e.g., the intermediate state).

According to an embodiment, the pair of housings 310 and 320 may include the first housing 310 (e.g., a first housing structure or a first housing part) coupled to the hinge structure 340 and the second housing 320 (e.g., a second housing structure or a second housing part) coupled to the hinge structure 340.

According to an embodiment, the first housing 310 may include a first surface 311 facing a first direction (e.g., a front direction) (the z-axis direction) and a second surface 312 facing a second direction (e.g., a rear direction) (the -z-axis direction) opposite to the first surface 311 in the first state (e.g., the unfolded state).

According to an embodiment, the second housing 320 may include a third surface 321 facing the first direction (the z-axis direction) and a fourth surface 322 facing the second direction (the -z-axis direction) in the first state (e.g., the unfolded state).

According to an embodiment, the electronic device 300 may operate in a manner in which the first surface 311 of the first housing 310 and the third surface 321 of the second housing 320 face substantially the same first direction (the z-axis direction) in the first state (e.g., the unfolded state), and the first surface 311 and the third surface 321 face each other in the second state (e.g., the folded state).

According to an embodiment, the electronic device 300 may operate so that the second surface 312 of the first housing 310 and the fourth surface 322 of the second housing 320 face substantially the same second direction (the -z-axis direction) in the first state (e.g., the unfolded state), and the second surface 312 and the fourth surface 322 face opposite directions in the second state (e.g., the folded state). For example, in the second state (e.g., the folded state), the second surface 312 may face the first direction (the z-axis direction) and the fourth surface 322 may face the second direction (the -z-axis direction).

According to an embodiment, the first housing 310 may include a first lateral member 313 at least partially forming the exterior of the electronic device 300 and a first rear cover 314 coupled to the first lateral member 313 and forming at least a portion of the second surface 312 of the electronic device 300.

According to an embodiment, the first lateral member 313 may include a first lateral surface 313a, a second lateral surface 313b extending from one end of the first lateral surface 313a, and a third lateral surface 313c extending from the other end of the first lateral surface 313a. According to an embodiment, the first lateral member 313 may be formed to have a rectangular (e.g., square or rectangular) shape through the first lateral surface 313a, the second lateral surface 313b, and the third lateral surface 313c.

According to an embodiment, the second housing 320 may include a second lateral member 323 at least partially forming the exterior of the electronic device 300 and a second rear cover 324 coupled to the second lateral member 323 and forming at least a portion of the fourth surface 322 of the electronic device 300. According to an embodiment, the second lateral member 323 may include a fourth lateral surface 323a, a fifth lateral surface 323b extending from one end of the fourth lateral surface 323a, and a sixth lateral surface 323c extending from the other end of the fourth lateral surface 323a. According to an embodiment, the second lateral member 323 may be formed to have a rectangular shape through the fourth lateral surface 323a, the fifth lateral surface 323b, and the sixth lateral surface 323c.

According to an embodiment, the pair of housings 310 and 320 are not limited to the shape and combination described above, and may be implemented by another shape or a combination and/or coupling of components. For example, the first lateral member 313 and the first rear cover 314 may be integrally formed and the second lateral member 323 and the second rear cover 324 may be integrally formed.

According to an embodiment, in the first state (e.g., the unfolded state) of the electronic device 300, the second surface 313b of the first lateral member 313 and the fifth surface 323b of the second lateral member 323 may be connected without any gap. According to an embodiment, in the first state (e.g., the unfolded state) of the electronic device 300, the third surface 313c of the first lateral member 313 and the sixth surface 323c of the second lateral member 323 may be connected without any gap.

According to an embodiment, the electronic device 300 may be configured such that, in the first state (e.g., the unfolded state), a combined length of the second surface 313b and the fifth surface 323b is greater than a length of the first surface 313a and/or the fourth surface 323a. In addition, the electronic device 300 may be configured such that, a combined length of the third surface 313c and the sixth surface 323c is greater than a length of the first surface 313a and/or the fourth surface 323a.

According to an embodiment, the first lateral member 313 and/or the second lateral member 323 may be made of a metal or additionally include a polymer injected on a metal. According to an embodiment, the first lateral member 313 and/or the second lateral member 323 may include at least one conductive part 316 and/or 326 electrically segmented through at least one segmentation part 3161 or 3162, and/or 3261 or 3262 made of a polymer. In this case, at least one conductive part may be electrically connected to a wireless communication circuit included in the electronic device 300 so as to be used as an antenna operating in at least one predetermined band (e.g., from about 400 MHz to about 6 GHz).

According to an embodiment, the first rear cover 314 and/or the second rear cover 324 may be made of, for example, at least one of coated or colored glass, ceramic, polymers, or metals (e.g., aluminum, stainless steel (STS), or magnesium), or a combination of at least two thereof.

According to an embodiment, the flexible display 330 may be disposed to extend from the first surface 311 of the first housing 310 across the hinge structure 340 to at least a portion of the third surface 321 of the second housing 320. For example, the flexible display 330 may include a first part 330a substantially corresponding to the first surface 311, a second part 330b corresponding to the third surface 321, and a third part 330c (e.g., a bendable area) connecting the first part 330a and the second part 330b and corresponding to the hinge structure 340.

According to an embodiment, the electronic device 300 may include a first protection cover 315 (e.g., a first protection frame or a first decoration member) coupled along an edge of the first housing 310. According to an embodiment, the electronic device 300 may include a second protection cover 325 (e.g., a second protection frame or a second decoration member) coupled along an edge of the second housing 320.

According to an embodiment, the first protection cover 315 and/or the second protection cover 325 may be made of a metal or polymer material. According to an embodiment, the first protection cover 315 and/or the second protection cover 325 may be used as a decoration member.

According to an embodiment, the flexible display 330 may be positioned such that an edge of the first part 330a is interposed between the first housing 310 and the first protective cover 315. According to an embodiment, the flexible display 330 may be positioned such that an edge of the second part 330b is interposed between the second housing 320 and the second protective cover 325.

According to an embodiment, the flexible display 330 may include a protection cap 335 positioned in an area corresponding to the hinge structure 340.

According to an embodiment, the electronic device 300 may include a hinge housing 341 (e.g., a hinge cover) configured to support the hinge structure 340.

According to an embodiment, the flexible display 330 may be disposed to extend from at least a portion of the second surface 312 to at least a portion of the fourth surface 322. In this case, the electronic device 300 may be folded so that the flexible display 330 may be exposed to the outside (out-folding manner).

According to an embodiment, the electronic device 300 may include a sub-display 331 (e.g., an external display) disposed separately from the flexible display 330. According to an embodiment, the sub-display 331 (e.g., an external display) may be disposed on the second surface 312 of the first housing 310 to be at least partially exposed and thus display state information (e.g., first state information, second state information, or third state information), which substitutes for a display function of the flexible display 330, of the electronic device 300 in the second state (e.g., the folded state).

According to an embodiment, the sub-display 331 (e.g., an external display) may be disposed to be seen from the outside through at least a portion of the first rear cover 314. According to an embodiment, the sub-display 331 (e.g., an external display) may be disposed on the fourth surface 322 of the second housing 320. In this case, the sub-display 331 (e.g., an external display) may be disposed to be seen from the outside through at least a portion of the second rear cover 324.

According to an embodiment, the electronic device 300 may include at least one of an input device 303 (e.g., a microphone), an audio output device 301 or 302, a sensor module 304, a camera device 305 or 308, a key input device 306, or a connector port 307. The electronic device 300 may also include a substantial electronic component (e.g., an input device, an audio output device, a sensor module, or a camera device) that is arranged inside the electronic device and operates through a hole or shape.

According to an embodiment, the input device 303 may include at least one microphone 303 disposed in the second housing 320.

According to an embodiment, the audio output device 301 or 302 may include speakers 301 and 302.

According to an embodiment, the at least one connector port 307 may be used to transmit and receive power and/or data to and from an external electronic device. According to an embodiment, at least one connector port (e.g., an ear jack hole) may also receive a connector (e.g., an ear jack) for transmitting and receiving audio signals to and from an external electronic device.

According to an embodiment the sensor module 304 may generate an electrical signal or a data value corresponding to an internal operation state or external environment state of the electronic device 300. The sensor module 304 may detect an external environment, for example, through the first surface 311 of the first housing 310. According to an embodiment, the electronic device 300 may further include at least one sensor module arranged to detect an external environment through the second surface 312 of the first housing 310.

According to an embodiment, the sensor module 304 (e.g., an illuminance sensor) may be disposed under the flexible display 330 to detect an external environment through the flexible display 330.

According to an embodiment, the sensor module 304 (e.g., the first sensor module 176 in FIG. 1) may include at least one of a gesture sensor, a gyro sensor, a grip sensor, a color sensor, an infrared (IR) sensor, an illuminance sensor, an ultrasonic sensor, a proximity sensor, a biometric sensor (e.g., an iris recognition sensor), a distance detection sensor (e.g., a time of flight (TOF) sensor, or a light detection and ranging (LiDAR) sensor), a barometric sensor, a magnetic sensor (e.g., a 6-axis sensor, or a geomagnetic sensor), an acceleration sensor, a temperature sensor, a humidity sensor, and/or a fingerprint recognition sensor.

According to an embodiment, the camera devices 305 and 308 may include a first camera device 305 (e.g., a front camera device) disposed on the first surface 311 of the first housing 310 and a second camera device 308 disposed on the second surface 312 of the first housing 310. The electronic device 300 may further include a flash 309 disposed adjacent to the second camera device 308.

According to an embodiment, the camera devices 305 and 308 may include lenses for time of flight (TOF) and/or an image sensor.

According to an embodiment, the key input device 306 (e.g., a key button) may be disposed on the third lateral member 313c of the first lateral member 313 of the first housing 310. According to an embodiment, the key input device 306 may also be disposed on at least one of the other lateral members 313a and 313b of the first housing 310 and/or the lateral members 323a, 323b, and 323c of the second housing 320.

According to an embodiment, a certain camera device (e.g., the first camera device 305) of the camera devices 305 and 308 or the sensor module 304 may be arranged to be exposed through the flexible display 330. For example, the first camera 305 or the sensor module 304 may be arranged to come in contact with an external environment through an opening (e.g., a through-hole) at least partially formed on the flexible display 330 in the internal space of the electronic device 300.

According to an embodiment, a certain sensor module 304 may be disposed in the internal space of the electronic device 300 to perform functions thereof without being visually exposed through the flexible display 330. For example, in this case, an opening of the flexible display 330 in an area facing the sensor module 304 may be omitted.

According to an embodiment, the electronic device 300 may be operated to maintain the third state (e.g., the intermediate state) through the hinge structure 340. Here, the electronic device 300 may control the flexible display 330 to display different contents on a display area corresponding to the first surface 311 and a display area corresponding to the third surface 321.

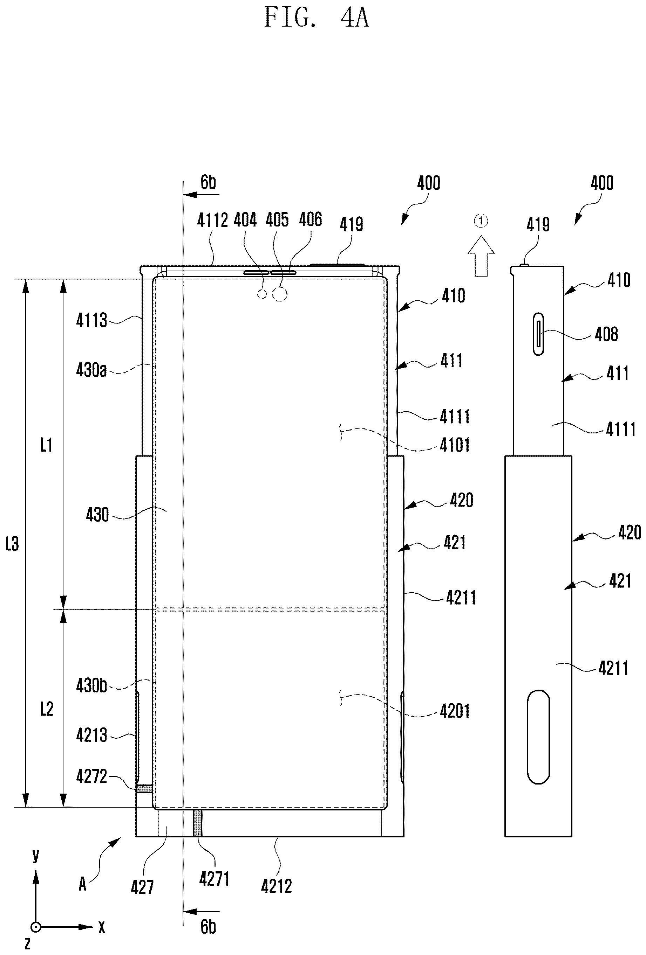

According to an embodiment, the electronic device 300 may be operated substantially in the first state (e.g., the unfolded state, or the unfolded state in FIG. 3A) and/or substantially in the second state (e.g., the folded state or the folded state in FIG. 4A) based on a predetermined inflection angle (e.g., an angle between the first housing 310 and the second housing 320 when in the intermediate state) through the hinge structure 340. For example, the electronic device 300 may be operated to transition to the first state (e.g., the unfolded state or the unfolded state in FIG. 3A) when a pressure is applied in the unfolding direction (direction B) from a state in which the electronic device is unfolded at a predetermined inflection angle through the hinge structure 340. For example, the electronic device 300 may be operated to transition to the second state (e.g., the folded state or the folded state in FIG. 3D) when a pressure is applied in the folding direction (direction C) from a state in which the electronic device is unfolded at a predetermined inflection angle through the hinge structure 340. According to an embodiment, the electronic device 300 may be operated to maintain a state in which the electronic device is unfolded at various angles (not shown) through the hinge structure 340.

The electronic device 300 in FIG. 3A may include a touch circuit (e.g., the touch circuit 850 in FIG. 8) including a touch sensor (e.g., the touch sensor 851 in FIG. 8) and a touch sensor IC (e.g., the touch sensor IC 853 in FIG. 8).

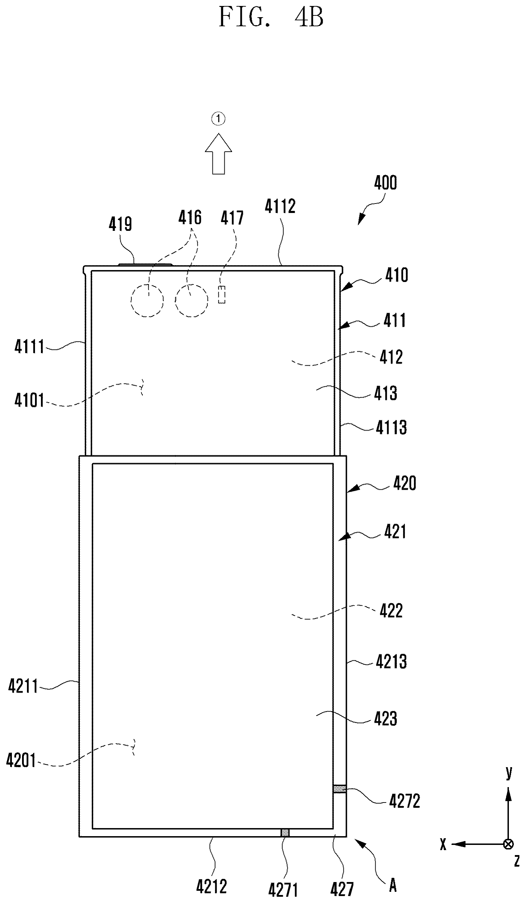

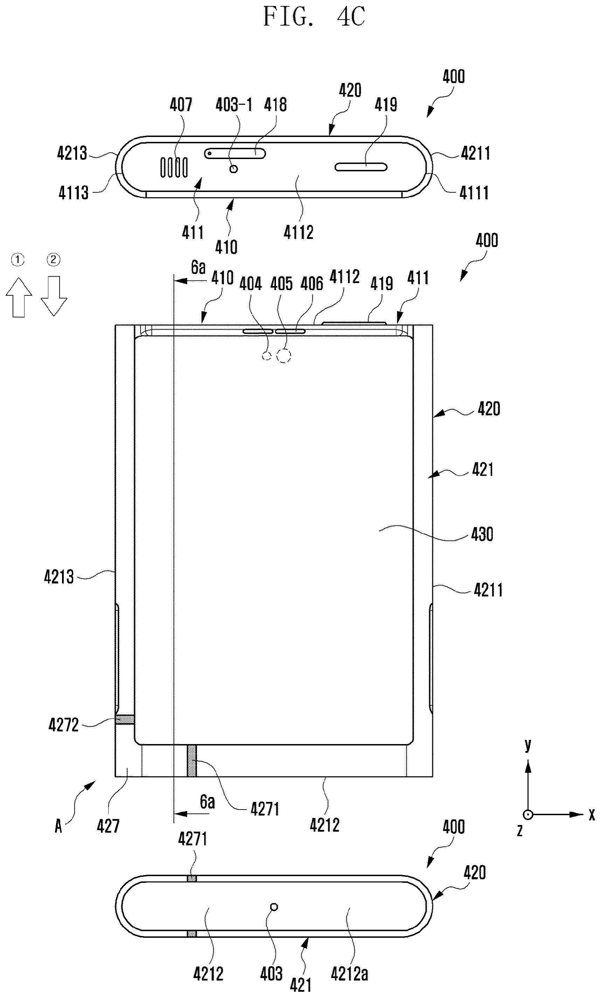

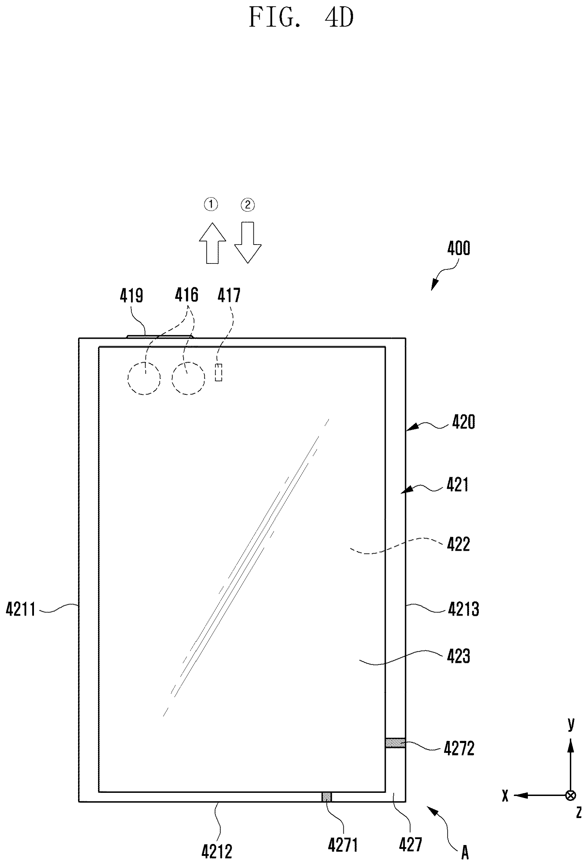

FIGS. 4A and 4B are views illustrating a front surface and a rear surface of an electronic device in a first state (e.g., a slide-out state) according to various embodiments of the disclosure. FIGS. 4C and 4D are views illustrating a front surface and a rear surface of an electronic device in a second state (e.g., a slide-in state) according to various embodiments of the disclosure.

The electronic device 400 in FIGS. 4A to 4D may be at least partially similar to the electronic device 101 in FIG. 1 or may further include other embodiments of the electronic device.

Referring to FIGS. 4A to 4D, the electronic device 400 according to an embodiment of the disclosure may vary (e.g., extend or reduce) a display area of a rollable display 430 (e.g., a flexible display) by sliding two housings 410 and 420 with respect to each other in a designated direction (e.g., direction ① or direction ②) (e.g., ± y-axis direction). However, the disclosure is not limited thereto, and the electronic device 400 may also be configured to induce variation (e.g., expansion or reduction) of the display area of the rollable display 430 by sliding two housings 410 and 420 in a direction (e.g., ± x-axis direction) perpendicular to the designated direction.

According to an embodiment, the electronic device 400 may include a first housing 410 (e.g., a first housing structure, a moving part, or a sliding housing), a second housing 420 (e.g., a second housing structure, a fixed part, or a base housing) coupled to the first housing 410 to be slidable in a designated direction (e.g., direction ① or direction ②) (e.g., the ± y-axis direction), and a rollable display 430 (e.g., a flexible display) (e.g., an expandable display or a stretchable display) disposed to be supported by at least a portion of the first housing 410 and the second housing 420.

According to an embodiment, the electronic device 400 may be configured to have the first housing 420 disposed to be slid out in a first direction (direction ①) (e.g., the y-axis direction) or to be slid in in a second direction (direction ②) (e.g., the -y-axis direction) opposite to the first direction (direction ①) based on the second housing 220 gripped by the user.

According to an embodiment, at least a portion of the first housing 410 including a first space 4101 may be received in a second space 4201 of the second housing 420 so as to be converted into the slide-in state. For example, the state may be changed from the first state (e.g., the slide-out state) to the second state (e.g., the slide-in state).

According to an embodiment, the electronic device 400 may include a bendable member (or bendable support member) (e.g., a multi-joint hinge module or a multi-bar assembly) to define at least partially the same plane with at least a portion of the first housing 410 in the slide-out state.

According to an embodiment, in the slide-in state of the electronic device 400, the bendable member (or bendable support member) (e.g., a multi-joint hinge module or a multi-bar assembly) may be at least partially received in the second space 4201 of the second housing 420.

According to an embodiment, in the slide-in state, at least a portion of the rollable display 430 may be received in the second space 4201 of the second housing 420 while being supported by the bendable member so as to be disposed to be invisible from the outside.

According to an embodiment, in the slide-out state, at least a portion of the rollable display 430 may be disposed to be visible from the outside while being supported by the bendable member configured to at least partially configure the same plane with first housing 410.

According to an embodiment, the electronic device 400 may include the first housing 410 including a first lateral member 411 and the second housing 420 including a second lateral member 421.

According to an embodiment, the first lateral member 411 may include a first lateral surface 4111 having a first length along a first direction (e.g., the y-axis direction), a second lateral surface 4112 extending to have a second length shorter than the first length along a direction (e.g., the x-axis direction) substantially perpendicular to the first lateral surface 4111, and a third lateral surface 4113 extending from the second lateral surface 4112 to be substantially perpendicular to the first lateral surface 4111 and having the first length.

According to an embodiment, the first lateral member 411 may be at least partially made of a conductive member (e.g., a metal). For example, the first lateral member 411 may be made of a combination of a conductive member and a non-conductive member (e.g., polymer).

According to an embodiment, the first housing 410 may include a first support member 412 extending from at least a portion of the first lateral member 411 to at least a portion of the first space 4101.

According to an embodiment, the first support member 412 may be integrally formed with the first lateral member 411. For example, the first support member 412 may be configured separately from the first lateral member 411 and structurally coupled to the first lateral member 411.

According to an embodiment, the second lateral member 421 may at least partially correspond to the first lateral surface 4111. The second lateral member 421 may include a fourth lateral surface 4211 having a third length, a fifth lateral surface 4212 extending from the fourth lateral surface 4211 in a direction substantially parallel to the second lateral surface 4112 and having a fourth length shorter than the third length, and a sixth lateral surface 4213 extending from the fifth lateral surface 4212 to correspond to the third lateral surface 4113 and having the third length.

According to an embodiment, the second lateral member 421 may be at least partially made of a conductive member (e.g., a metal). For example, the second lateral member 421 may be made of a combination of a conductive member and a non-conductive member (e.g., polymer).

According to an embodiment, at least a portion of the second lateral member 421 may include a second support member 422 extending to at least a portion of the second space 4201 of the second housing 420.

According to an embodiment, the second support member 422 may be integrally formed with the second lateral member 421. For example, the second support member 422 may be configured separately from the second lateral member 421 and structurally coupled to the second lateral member 421.

According to an embodiment, the first lateral surface 4111 and the fourth lateral surface 4211 may be slidably coupled to each other.

According to an embodiment, the third lateral surface 4113 and the sixth lateral surface 4213 may be slidably coupled to each other.

According to an embodiment, in the slide-in state, the first lateral surface 4111 may be disposed to be substantially invisible from the outside by overlapping the fourth lateral surface 4211.

According to an embodiment, in the slide-in state, the third lateral surface 4113 may be disposed to be substantially invisible from the outside by overlapping the sixth lateral surface 4213. For example, at least a portion of the first lateral surface 4111 and the third lateral surface 4113 may be disposed to be at least partially visible from the outside in the slide-in state.

According to an embodiment, in the slide-in state, the first support member 412 may be disposed to be substantially invisible from the outside by overlapping the second support member 422.

According to an embodiment, the first housing 410 may include a first rear cover 413 coupled to at least a portion of the first lateral member 411.

According to an embodiment, the first rear cover 413 may be disposed in a manner of being coupled to at least a portion of the first support member 412. For example, the first rear cover 413 may be integrally formed with the first lateral member 411.

According to an embodiment, the first rear cover 413 may be made of a polymer, coated or colored glass, ceramic, or a metal (e.g., aluminum, stainless steel (STS), or magnesium), or a combination of at least two thereof. For example, the first rear cover 413 may extend to at least a portion of the first lateral member 411. For example, at least a portion of the first support member 412 may be replaced by the first rear cover 413.

According to an embodiment, the second housing 420 may include a second rear cover 423 coupled to at least a portion of the second lateral member 421.

According to an embodiment, the second rear cover 423 may be disposed in a manner of being coupled to at least a portion of the second support member 422. For example, the second rear cover 423 may be integrally formed with the second lateral member 421.

According to an embodiment, the second rear cover 423 may be made of a polymer, coated or colored glass, ceramic, or a metal (e.g., aluminum, stainless steel (STS), or magnesium), or a combination of at least two thereof. For example, the second rear cover 423 may extend to at least a portion of the second lateral member 421. For example, at least a portion of the second support member 422 may be replaced by the second rear cover 423.

According to an embodiment, the rollable display 430 may be disposed to be supported by at least a portion of the first housing 410 and the second housing 420.

According to an embodiment, the rollable display 430 may include a first part 430a (e.g., a flat part) always visible from the outside and a second part 430b (e.g., a bendable part) extending from the first part 430a. The second part 430b (e.g., the bendable part) may be at least partially received in the second space 4201 of the second housing 420 so as not to be visible from the outside in the slide-in state.

According to an embodiment, the first part 430a may be disposed to be supported by the first housing 410. The second part 430b may be disposed to be supported at least partially by the bendable member.

According to an embodiment, the second part 430b of the rollable display 430 may be extended from the first part 430a while receiving support from the bendable member in a state where the first housing 410 is slid out along the first direction (direction ①). The second part 430b of the rollable display 430 may be disposed to define substantially the same plane with the first part 430a and be visible from the outside in a state where the first housing 410 is slid out along the first direction (direction ①).

According to an embodiment, the second part 430b of the rollable display 430 may be received in the second space 4201 of the second housing 420 in a state where the first housing 410 is slid in along the second direction (direction ②). According to an embodiment, the second part 430b of the rollable display 430 may be disposed so as not to be visible from the outside in a state where the first housing 410 is slid in along the second direction (direction ②). Accordingly, the electronic device 400 may have a display area of the rollable display 430 to be variable (e.g., extended or reduced) according to the first housing 410 moving from the second housing 420 along a designated direction (e.g., the $\pm$ y-axis

direction) in a sliding manner.

According to an embodiment, the rollable display 430 may have a length variable (e.g., extended or reduced) in the first direction (direction ①) according to a sliding movement of the first housing 410 moved based on the second housing 420. For example, the rollable display 430 may have a first display area (e.g., an area corresponding to the first part 430a) corresponding to a first length L1 in the slide-in state.

According to an embodiment, the rollable display 430 may slide the first housing 410 by a second length L2 relative to the second housing 420 in the slide-out state. The rollable display 430 may correspond to a third length L3 greater than the first length L1 in the slide-out state. The rollable display 430 may be extended to have a third display area (e.g., an area including the first part 430a and the second part 430b) greater than the first display area in the slide-out state.

According to an embodiment, in the first state (e.g., the slide-out state) of the electronic device 400, a screen size (e.g., a screen area) of the rollable display 430 visible to the outside may be maximized (e.g., substantially maximum).

According to an embodiment, in the second state (e.g., the slide-in state) of the electronic device 400, a screen size (e.g., a screen area) of the rollable display 430 visible to the outside may be minimized (e.g., substantially minimum).

According to an embodiment, in a third state (e.g., an intermediate state) of the electronic device 400, a screen size (e.g., a screen area) of the rollable display 430 visible to the outside may be smaller than that of the first state (e.g., the slide-out state) and larger than that of the second state (e.g., the slide-in state). For example, in the third state (e.g., the intermediate state) of the electronic device 400, a screen size (e.g., a screen area) of the rollable display 430 visible to the outside may be smaller than the maximum size (e.g., the maximum screen area) and larger than the minimum size (e.g., the minimum screen area).

According to an embodiment, the electronic device 400 may include at least one of an audio input device (e.g., a microphone 403-1), an audio output device (e.g., a call receiver 406 or a speaker 407), a sensor module 404 or 417, a camera module (e.g., a first camera module 405 or a second camera module 416), a connector port 408, a key input device 419, or an indicator (not shown) each of which is disposed in the first space 4101 of the first housing 410.

According to an embodiment, the electronic device 400 may include another input device (e.g., a microphone 403) disposed in the second housing 420. For another embodiment, the electronic device 400 may be configured to omit at least one of the above-described components or additionally include other components. For another embodiment, at least one of the aforementioned components may be disposed in the second space 4201 of the second housing 420.

According to an embodiment, the audio input device may include the microphone 403-1. In an embodiment, the audio input device (e.g., the microphone 403-1) may include multiple microphones arranged so as to detect a direction of a sound. The sound output device may include, for example, the call receiver 406 and the speaker 407.

According to an embodiment, the speaker 407 may correspond to the outside through at least one speaker hole provided in the first housing 410 at a position (e.g., the second lateral surface 4112) always exposed to the outside regardless of the slide-in/slide-out state.

According to an embodiment, the connector port 408 (e.g., a universal serial bus (USB) type C terminal) may correspond to the outside through at least one connector hole port disposed in the first housing 410 in the slide-out state. For example, the connector port 408 may correspond to the outside through an opening disposed through the second housing and corresponding to the connector port hole in the slide-in state. For example, the call receiver 406 may include a speaker (e.g., a piezo speaker) operating without a separate speaker hole.

According to an embodiment, the sensor module 404 or 417 may generate an electrical signal or a data value corresponding to an internal operation state or external environment state of the electronic device 400. For example, the sensor module 404 or 417 may include a first sensor module 404 (e.g., a proximity sensor, an illuminance sensor, an acceleration sensor, or a 6-axis sensor) disposed on the front surface of the electronic device 400 and/or a second sensor module 417 (e.g., a heart rate monitoring (HRM) sensor) disposed on the rear surface of the electronic device 400.

According to an embodiment, the first sensor module 404 may be disposed under (e.g., a lower part based on the z-axis direction) the rollable display 430 on the front surface of the electronic device 400.

According to an embodiment, the first sensor module 404 and/or the second sensor module 417 may include at least one of a proximity sensor, an illuminance sensor, a time of flight (TOF) sensor, an ultrasonic sensor, a fingerprint recognition sensor, a gesture sensor, a gyro sensor, an air pressure sensor, a magnetic sensor, an acceleration sensor, a grip sensor, a color sensor, an infrared (IR) sensor, a biometric sensor, a temperature sensor, or a humidity sensor.

According to an embodiment, the camera module may include a first camera module 405 disposed on the front surface of the electronic device 400 and a second camera module 416 disposed on the rear surface of the electronic device 400.

According to an embodiment, the electronic device 400 may include a flash (not shown) located adjacent to the second camera module 416.

According to an embodiment, the camera modules 405 or 416 may include one or more of lenses, an image sensor, and/or an image signal processor.

According to an embodiment, the first camera module 405 may be disposed under (e.g., a lower part based on the z-axis direction) the rollable display 430. The first camera module 405 may be disposed under (e.g., a lower part based on the z-axis direction) the rollable display 430 and configured to photograph a subject through a partial portion of an activation area (e.g., a display area) of the rollable display 430.

According to an embodiment, the first camera module 405 among the camera modules may be disposed to detect an external environment through the rollable display 430. A certain sensor module 404 among the sensor modules 404 and 417 may be disposed to detect an external environment through the rollable display 430. For example, the first camera module 405 or the certain sensor module 404 may be disposed in the first space 4201 of the first housing 410 to be in contact with the external environment through a transmission area or a perforated opening formed on the rollable display 430.

According to an embodiment, an area facing the first camera module 405 of the rollable display 430 may correspond to a portion of the display area configured to display contents, and may be formed to be a transmission area having predetermined transmittance.

According to an embodiment, the transmission area of the rollable display 430 may be configured to have transmittance in the range of about 5 % to about 20%. Such transmission area may include an area overlapping an effective area (e.g., a view-angle region) of the first camera module 405 through which light for imaging to an image sensor to generate an image passes. For example, the transmission area of the rollable display 430 may include an area having a lower pixel arrangement density and/or wire density than a peripheral area. For example, the transmission area may be substituted with the aforementioned opening. For example, a certain camera module 405 may include an under display camera (UDC). For example, a certain sensor module 404 may be disposed in the internal space of the electronic device 400 to perform functions thereof without being visually exposed through the rollable display 430.

According to an embodiment, the electronic device 400 may include a bezel antenna A disposed through the conductive second lateral member 421 of the second housing 420. For example, the bezel antenna A may be disposed on at least a portion of the fifth lateral surface 4212 and the sixth lateral surface 4213 of the second lateral member 421 and may include a conductive part 427 that is electrically segmented through at least one segment part 4271 or 4272 formed of a non-conductive material (e.g., polymer).

According to an embodiment, a wireless communication circuit (e.g., the wireless communication module 192 in FIG. 1) may be configured to transmit or receive a wireless signal in at least one frequency band (e.g., about 600MHz to 9000MHz) (e.g., a legacy band or NR band) designated through the conductive part 427.

According to an embodiment, the electronic device 400 may include a lateral cover 4212a disposed on the fifth lateral surface 4212 to cover at least a portion of the at least one segment part 4271. For example, the bezel antenna A may be disposed on at least one of the fourth lateral surface 4211, the fifth lateral surface 4212, and the sixth lateral surface 4213. For example, the bezel antenna A may be disposed on at least one of the first lateral surface 4111, the second lateral surface 4112, and the third lateral surface 4113 of the first housing 410.

According to an embodiment, the electronic device 400 may further include at least one antenna module (e.g., a 5G antenna module or antenna structure). For example, the at least one antenna module (e.g., a 5G antenna module or antenna structure) may be disposed in the internal space (e.g., the first space 4101 or the second space 4201) of the electronic device 400. The at least one antenna module (e.g., a 5G antenna module or antenna structure) may be disposed to transmit or receive a wireless signal in a frequency band ranging from about 3 GHz to 100 GHz through another wireless communication circuit (e.g., the wireless communication module 192 in FIG. 1).

According to an embodiment, a slide-in/slide-out operation of the electronic device 400 may be automatically preformed. For example, the slide-in/slide-out operation of the electronic device 400 may be performed through a combination of a drive motor (e.g., a gear drive unit) including a pinion gear and a rack gear. The rack gear may be disposed in the first space 4101 of the first housing 410. The drive motor (e.g., gear drive unit) including a pinion gear may be disposed in the second space 4201 of the second housing 420.

For example, in case of detecting a triggering operation for switching from the slide-in state to the slide-out state, the processor (e.g., the processor 120 in FIG. 1) of the electronic device 400 may operate the drive motor disposed inside the electronic device 400.

For example, in case of detecting a triggering operation for switching from the slide-out state to the slide-in state, the processor (e.g., the processor 120 in FIG. 1) of the electronic device 400 may operate the drive motor disposed inside the electronic device 400.

For example, the triggering operation for a state change (e.g., a change in the slide-in or slide-out state) of the electronic device 400 may include an operation of selecting (e.g., touching) an object displayed on the rollable display 430 or manipulating a physical button (e.g., a key button) included in the electronic device 400.

According to an embodiment, the electronic device 400 may have a drive motor disposed at an end part in a direction (direction ①) of sliding-out closest to the first space 4101 of the first housing 410 in the second space 4201 of the second housing 420. The electronic device 400 may have an electrical connection structure that is electrically connected to a first substrate (e.g., a main substrate) disposed in the first space 4101 through an electrical connection member.

The electronic device 400 in FIG. 4A may include a touch circuit (e.g., the touch circuit 850 in FIG. 8) including a touch sensor (e.g., the touch sensor 851 in FIG. 8) and a touch sensor IC (e.g., the touch sensor IC 853 in FIG. 8).

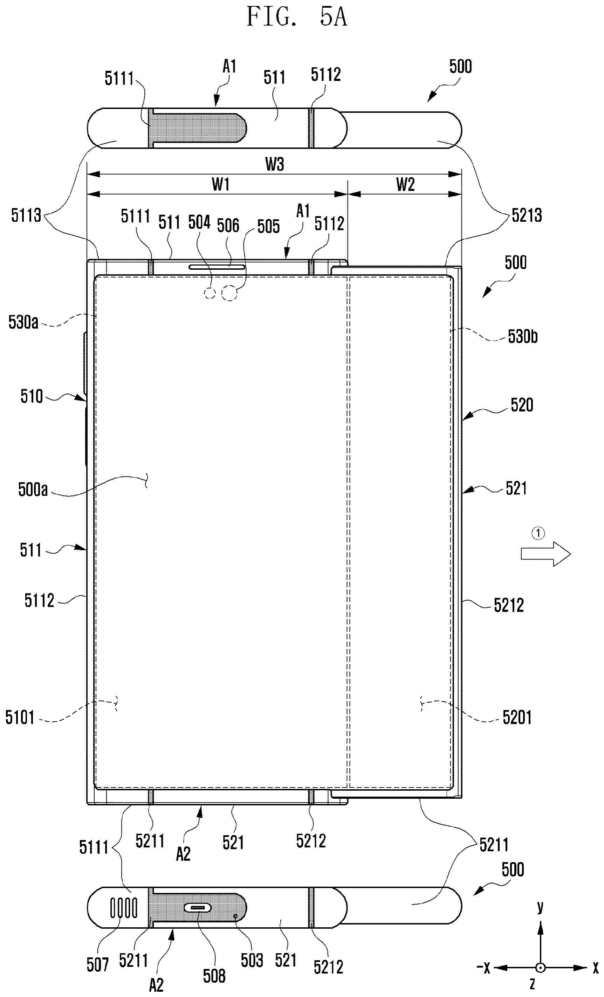

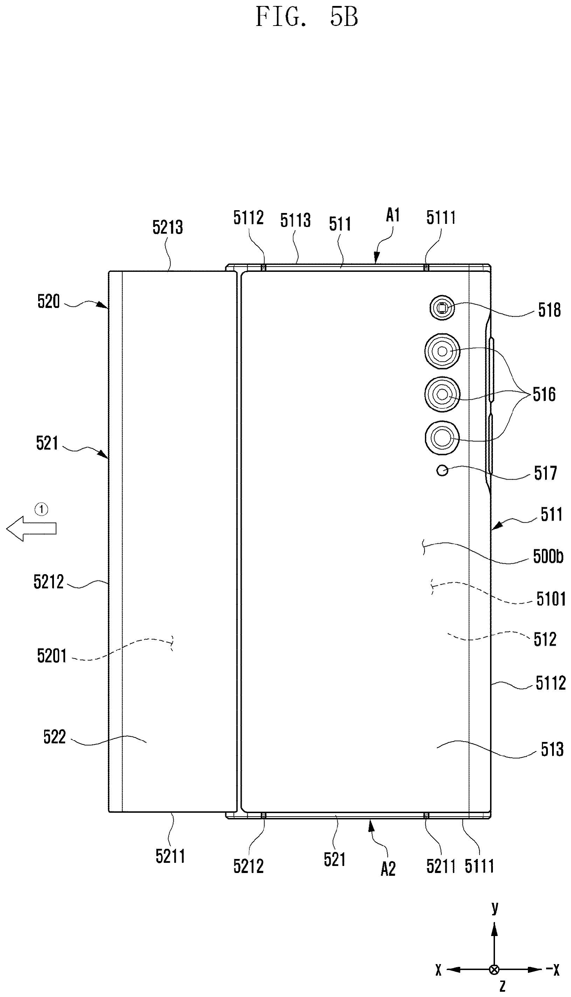

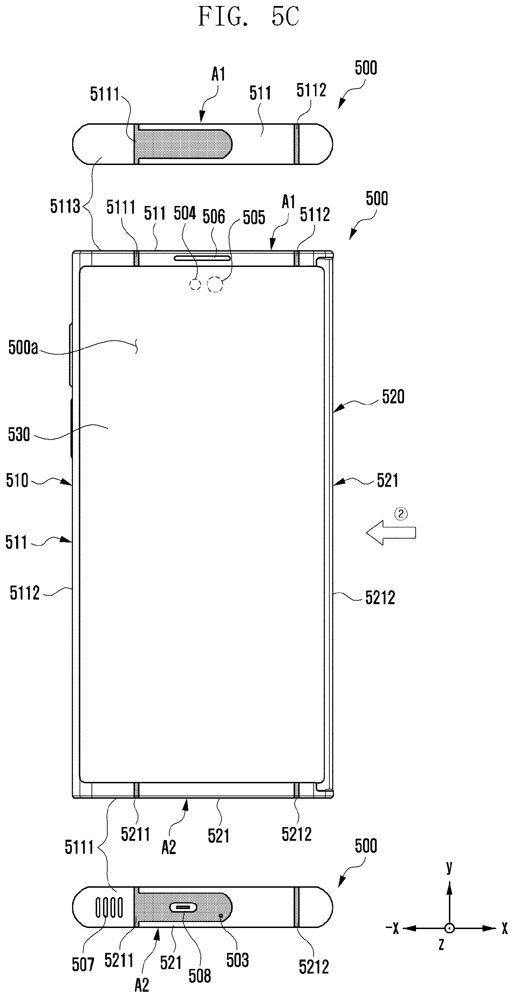

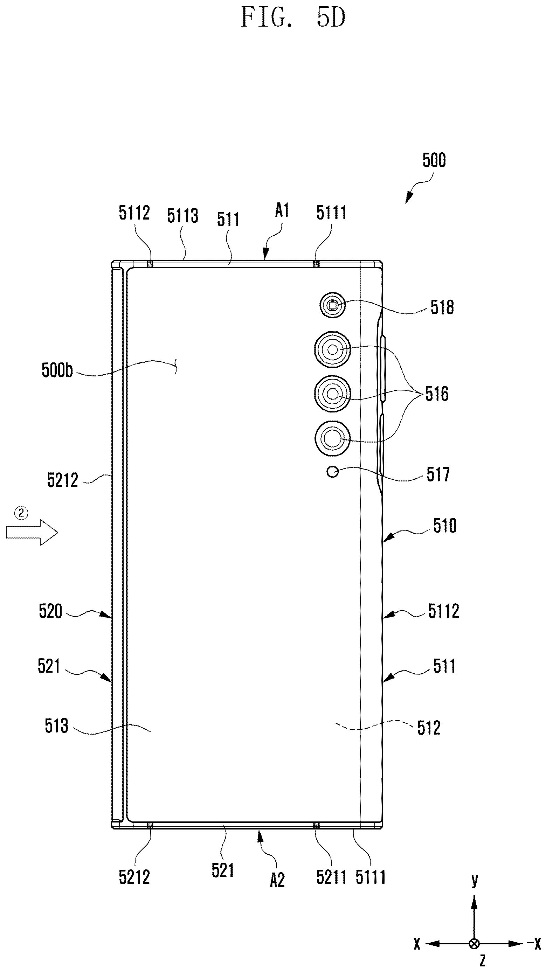

FIGS. 5A and 5B are views illustrating a front surface and a rear surface of an electronic device in a first state (e.g., a slide-out state) according to an embodiment of the disclosure. FIGS. 5C and 5D are views illustrating a front surface and a rear surface of an electronic device in a second state (e.g., a slide-in state) according to an embodiment of the disclosure.

The electronic device 500 in FIGS. 5A to 5D may be at least partially similar to the electronic device 101 in FIG. 1 or may further include other embodiments of the electronic device.

Referring to FIGS. 5A to 5D, the electronic device 500 according to an embodiment of the disclosure may include a first housing 510 (e.g., a first housing structure or a base housing), a second housing 520 (e.g., a second housing structure or a slide housing), and a rollable display 530 (e.g., a flexible display) (e.g., an expandable display, or a stretchable display).

According to an embodiment, the rollable display 530 may be disposed to be supported by at least a portion of the first housing 510 and the second housing 520.

According to an embodiment, the first housing 510 and the second housing 520 may be mutually coupled. For example, the second housing 520 may be coupled to the first housing 510 to be movable in a designated direction (e.g., in the x-axis direction) and within a designated distance.

According to an embodiment, the electronic device 500 may include a bendable member (or bendable support member) (e.g., a multi-joint hinge module or a multi-bar assembly) to define at least partially the same plane with at least a portion of the first housing 510 in the first state (e.g., the slide-out state). The bendable member (or bendable support member) (e.g., a multi-joint hinge module or a multi-bar assembly) may be at least partially received in a second space 5201 of the second housing 520 in the second state (e.g., the slide-in state).

According to an embodiment, at least a portion of the second housing 520 may be received in a first space 5101 of the first housing 510, thereby changing to the second state (e.g., the slide-in state).

According to an embodiment, in the first state (e.g., the slide-out state), at least a portion of the rollable display 530 may be disposed to be visible from the outside while being supported by the bendable member configured to at least partially configure the same plane with first housing 510.

According to an embodiment, in the second state (e.g., the slide-in state), at least a portion of the rollable display 530 may be received in an internal space 5201 of the second housing 520 while being supported by the bendable member so as to be disposed to be invisible from the outside.

According to an embodiment, in the first state (e.g., the slide-out state) of the electronic device 500, a screen size (e.g., a screen area) of the rollable display 530 visible to the outside may be maximized (e.g., substantially maximum).

According to an embodiment, in the second state (e.g., the slide-in state) of the electronic device 500, a screen size (e.g., a screen area) of the rollable display 530 visible to the outside may be minimized (e.g., substantially minimum).

According to an embodiment, in a third state (e.g., an intermediate state) of the electronic device 500, a screen size (e.g., a screen area) of the rollable display 530 visible to the outside may be smaller than that of the first state (e.g., the slide-out state) and larger than that of the second state (e.g., the slide-in state). For example, in the third state (e.g., the intermediate state) of the electronic device 500, a screen size (e.g., a screen area) of the rollable display 530 visible to the outside may be smaller than the maximum size (e.g., the maximum screen area) and larger than the minimum size (e.g., the minimum screen area).

According to an embodiment, the electronic device 500 may include a front surface 500a (e.g., a first surface or a surface on which a screen is displayed), a rear surface 500b (e.g., a second surface) facing opposite to the front surface 500a, and a lateral surface (not shown) surrounding a space between the front surface 500a and the rear surface 500b.

According to an embodiment, the electronic device 500 may include the first housing 510 including a first lateral member 511 and the second housing 520 including a second lateral member 521.

According to an embodiment, the first lateral member 511 may include a first lateral surface 5111 having a first length along a first direction (e.g., the x-axis direction), a second lateral surface 5112 extending from the first lateral surface to have a second length longer than the first length along a direction (e.g., the y-axis direction) substantially perpendicular to the first lateral surface 5111, and a third lateral surface 5113 extending from the second lateral surface 5112 to be substantially perpendicular to the first lateral surface 5111 and having the first length.

According to an embodiment, the first lateral member 511 may be at least partially made of a conductive material (e.g., a metal). According to an embodiment, at least a portion of the first lateral member 511 may include a first support member 512 extending to at least a portion of the first space 5101 of the first housing 510.

According to an embodiment, the second lateral member 521 may include a fourth lateral surface 5211 at least partially corresponding to the first lateral surface 5111 and having a third length, a fifth lateral surface 5212 extending from the fourth lateral surface 5211 in a direction substantially parallel to the second lateral surface 5112 and having a fourth length greater than the third length, and a sixth lateral surface 5213 extending from the fifth lateral surface 5212 to correspond to the third lateral surface 5113 and having the third length.

According to an embodiment, the second lateral member 521 may be at least partially made of a conductive material (e.g., a metal). According to an embodiment, at least a portion of the second lateral member 521 may include a second support member 522 extending to at least a portion of the second space 5201 of the second housing 520.

According to an embodiment, the first lateral surface 5111 and the fourth lateral surface 5211, and the third lateral surface 5113 and the sixth lateral surface 5213 may be slidably coupled to each other. According to an embodiment, in the second state (e.g., the slide-in state), the fourth lateral surface 5211 may be disposed to be substantially invisible from the outside by overlapping the first lateral surface 5211.

According to an embodiment, in the second state (e.g., the slide-in state), the sixth lateral surface 5213 may be disposed to be substantially invisible from the outside by overlapping the third lateral surface 5213. According to an embodiment, in the second state (e.g., the slide-in state), at least a portion of the fourth lateral surface 5211 and the sixth lateral surface 5213 may be arranged to be at least partially visible from the outside.

According to an embodiment, in the second state (e.g., the slide-in state), the second support member 522 may be disposed to be substantially invisible from the outside by overlapping the first support member 512. For example, in the second state (e.g., the slide-in state), a portion of the second support member 522 may be disposed to be invisible from the outside by overlapping the first support member 512. A remaining portion of the second support member 522 may be disposed to be visible from the outside.

According to an embodiment, the electronic device may include a rear cover 513 disposed on at least a portion of the first housing 510 at the rear surface 500b. According to an embodiment, the rear cover 513 may be disposed through at least a portion of the first support member 512.

According to an embodiment, the rear cover 513 may be integrally formed with the first lateral member 511.

According to an embodiment, the rear cover 513 may be made of a polymer, coated or colored glass, ceramic, or a metal (e.g., aluminum, stainless steel (STS), or magnesium), or a combination of at least two of the aforementioned materials. According to an embodiment, the rear cover 513 may be extended to at least a portion of the first lateral member 511.

According to an embodiment, at least a portion of the first support member 512 may be replaced by the rear cover 513. According to an embodiment, the electronic device 500 may include another rear cover (e.g., a second rear cover) which is disposed on at least a portion of the second support member 522 in the second housing 520 or replaces at least a portion of the second support member 522.

According to an embodiment, the rollable display 530 may include a first part 530a (e.g., a flat part) and a second part 530b (e.g., a bendable part). For example, the first part 530a (e.g., a flat part) may be disposed to be always visible from the outside. For example, the second part 530b (e.g., a bendable part) may extend from the first part 530a and be at least partially received in the second space 5201 of the second housing 520 such that at least a portion thereof is not visible from the outside in the second state (e.g., the slide-in state).

According to an embodiment, the first part 530a may be disposed to be supported by the first housing 510.

According to an embodiment, the second part 530b may be disposed to be supported at least partially by the bendable member.

According to an embodiment, the rollable display 530 may be slid out (e.g., screen extension) by moving the second housing 520 along a designated first direction (direction ①). The display 530 may be extended from the first part 530a while receiving support from the bendable member in a state where the second housing 520 is slid out along the designated first direction (direction ①). The rollable display 530 may configure substantially the same plane as the first part 530a and may be disposed so as to be visible from the outside.

According to an embodiment, the rollable display 530 may be slid in (e.g., screen reduction) by moving the second housing 520 along a designated second direction (direction ②). In a state in which the second housing 520 is slid-in along the second direction (direction ②), the second part 530b of the rollable display 530 may be received in the second space 5201 of the second housing 520 and disposed to be invisible from the outside. Accordingly, the electronic device 500 may induce a display area of the rollable display 530 to be variable according to the second housing 520 moving from the first housing 510 along a designated direction (e.g., the x-axis direction) in a sliding manner.

According to an embodiment, the first housing 510 and the second housing 520 may operate in a sliding manner to allow a whole width thereof to be variable with respect to each other.

According to an embodiment, in the first state (e.g., the slide-out state), the electronic device 500 may be configured to have a third width W3 greater than the first width W1 as at least a portion of the bendable member received in the internal space of the second housing 520 is moved to have an additional second width W2. For example, the rollable display 530 may have a display area substantially corresponding to the first width W1 in the second state (e.g., the slide-in state). The rollable display 530 may have an extended display area substantially corresponding to the third width W3 in the first state (e.g., the slide-out state).

According to an embodiment, in the second state (e.g., the slide-in state), the electronic device 500 may be configured to have a first width W1 from the second lateral surface 5112 to the fifth lateral surface 5212

According to an embodiment, a slide-in/slide-out operation of the electronic device 500 may be automatically preformed. For example, in case of detecting a triggering operation for converting from the second state (e.g., the slide-in state) into the first state (e.g., the slide-out state) when a driving module is not operated, the electronic device 500 may operate the driving module disposed inside the electronic device 500. For example, in case of detecting a triggering operation for converting from the first state (e.g., the slide-out state) into the second state (e.g., the slide-in state) when a driving module is not operated, the electronic device 500 may operate the driving module disposed inside the electronic device 500.

According to an embodiment, the triggering operation of the slide-out/slide-in of the rollable display may include an operation of detecting a movement distance by which the second housing is moved in a second direction (e.g., direction ②) in which the second housing is to be slid in by a push-pull section. For example, the electronic device 500 may operate or stop the driving module through a driving motor control module operatively connected to a processor (e.g., the processor 120 in FIG. 1) and controlling a driving motor of the driving module.

According to an embodiment, the electronic device 500 may include at least one of an audio input device (e.g., a microphone 503), an audio output device (e.g., a call receiver 506 or a speaker 507), a sensor module 504 or 517, a camera module (e.g., a first camera module 505 or a second camera module 516), a connector port 508, a key input device (not shown), or an indicator (not shown) each of which is disposed in the first space 5101 of the first housing 510. In an embodiment, the electronic device 500 may be configured to omit at least one of the above-described components or additionally include other components. In an embodiment, at least one of the aforementioned components may be disposed in the second space 5201 of the second housing 520.

According to an embodiment, the audio input device may include the microphone 503. In an embodiment, the audio input device (e.g., the microphone 503) may include multiple microphones arranged so as to detect a direction of a sound. The sound output device may include, for example, the call receiver 506 and the speaker 507. According to an embodiment, the speaker 507 may face the outside through at least one speaker hole provided in the first housing 510 in the first state (e.g., the slide-out state).

According to an embodiment, the connector port 508 (e.g., a universal serial bus (USB) type C terminal) may face the outside through at least one connector hole port disposed in the first housing 510 in the first state (e.g., the slide-out state).

According to an embodiment, the call receiver 506 may include a speaker (e.g., a piezo speaker) operating without a separate speaker hole.

According to an embodiment, the sensor module 504 or 517 may generate an electrical signal or a data value corresponding to an internal operation state or external environment state of the electronic device 500. For example, the sensor module 504 or 517 may include a first sensor module 504 (e.g., a proximity sensor or an illuminance sensor) disposed on the front surface 500a of the electronic device 500 and/or a second sensor module 517 (e.g., a heart rate monitoring (HRM) sensor) disposed on the rear surface 500b.

According to an embodiment, the first sensor module 504 may be disposed under (e.g., downward in the z-axis direction) the rollable display 530 on the front surface 500a of the electronic device 500.

According to an embodiment, a digitizer (e.g., a digitizer 860 in FIG. 8) may be disposed under (e.g., downward in the z-axis direction) the rollable display 530.

According to an embodiment, the first sensor module 504 and/or the second sensor module 517 may include at least one of a gesture sensor, a gyro sensor, a grip sensor, a color sensor, an infrared (IR) sensor, an illuminance sensor, an ultrasonic sensor, a proximity sensor, a biometric sensor (e.g., an iris recognition sensor), a distance detection sensor (e.g., a time of flight (TOF) sensor, or a light detection and ranging (LiDAR) sensor), a barometric sensor, a magnetic sensor (e.g., a 6-axis sensor, or a geomagnetic sensor), an acceleration sensor, a temperature sensor, a humidity sensor, or a fingerprint recognition sensor.

According to an embodiment, the camera module may include a first camera module 505 disposed at the front surface 500a of the electronic device 500 and a second camera module 516 disposed on the rear surface 500b. According to an embodiment, the electronic device 500 may include a flash 518 located adjacent to the second camera module 516. According to an embodiment, the camera modules 505 or 516 may include one or more of lenses, an image sensor, a memory, and/or an image signal processor.

According to an embodiment, the first camera module 505 may be disposed under the rollable display 530 and configured to photograph a subject through a portion of an activation area of the rollable display 530. According to an embodiment, the flash 518 may include, for example, a light-emitting diode or a xenon lamp.

According to an embodiment, the first camera module 505 among the camera modules and a certain sensor module 504 among the sensor modules 504 and 517 may be disposed to detect an external environment through the rollable display 530. For example, the first camera module 505 or the certain sensor module 504 may be disposed in the first space 5201 of the first housing 510 to be in contact with the external environment through a transmission area or a perforated opening formed on the rollable display 530.

According to an embodiment, an area facing the first camera module 505 of the rollable display 530 may correspond to a portion of an area configured to display contents, and may be formed to be a transmission area having predetermined transmittance.

According to an embodiment, the transmission area of the rollable display 530 may be configured to have transmittance in the range of about 5 % to about 20%. Such transmission area may include an area overlapping an effective area (e.g., a view-angle region) of the first camera module 505 through which light for imaging to an image sensor to generate an image passes. For example, the transmission area of the rollable display 530 may include an area having a lower pixel density and/or wire density than a peripheral area. For example, the transmission area may be substituted with the aforementioned opening. For example, a certain camera module 505 may include an under display camera (UDC).

According to an embodiment, a certain sensor module 504 may be disposed in the internal space of the electronic device 500 to perform functions thereof without being visually exposed through the rollable display 530.

According to various embodiments, the electronic device 500 may include at least one antenna A1 or A2 electrically connected to a wireless communication circuit (e.g., the wireless communication module 192 in FIG. 1) disposed in the first space 5101 of the first housing 510.

According to an embodiment, at least one antenna A1 or A2 may include a first antenna A1 disposed in an upper area of the electronic device 500 and a second antenna A2 disposed in a lower area.

According to an embodiment, the electronic device 500 may further include at least one antenna disposed on the second lateral surface 5112 of the first housing 510 and/or the fifth lateral surface 5212 of the second housing 520.

According to an embodiment, the first antenna A1 may include a first conductive part 511 segmented through at least one non-conductive part 5111 or 5112 on the third lateral surface 5113 of the first lateral member 511.

According to an embodiment, the first conductive part 511 may be disposed to be segmented through a first non-conductive part 5111 and a second non-conductive part 5112 spaced a designated distance apart from each other and may be electrically connected to the wireless communication circuit (e.g., the wireless communication module 192 in FIG. 1).

According to an embodiment, the second antenna A2 may include a second conductive part 521 segmented through at least one non-conductive part 5211 or 5212 on the first lateral surface 5111 of the first lateral member 511.

According to an embodiment, the second conductive part 521 may be disposed to be segmented through a third non-conductive part 5211 and a fourth non-conductive part 5212 spaced a designated distance apart from each other and may be electrically connected to the wireless communication circuit (e.g., the wireless communication module 192 in FIG. 1).

According to an embodiment, the wireless communication circuit (e.g., the wireless communication module 192 in FIG. 1) may be configured to transmit or receive a wireless signal in a designated frequency band (e.g., about 800 MHz to 6000 MHz) (e.g., a legacy band) through the first conductive part 511 and/or the second conductive part 521.

According to an embodiment, the electronic device 500 may further include at least one antenna module (e.g., a 5G antenna module or antenna structure) disposed in the internal space (e.g., the first space 5101 or the second space 5201). The at least one antenna module (e.g., a 5G antenna module or antenna structure) may be disposed to transmit and receive a wireless signal in a frequency band ranging from about 3 GHz to 100 GHz through another wireless communication circuit (e.g., the wireless communication module 192 in FIG. 1).

The electronic device 500 according to an embodiment of the disclosure may include a driving module disposed in the internal space (e.g., the second space 5201) for the slide-in/slide-out operation.

According to an embodiment, the electronic device 500 may detect a triggering operation in which the second housing 520 is pressed in a second direction (e.g., direction ②) to be slid in by a push-pull section when the driving module is not driven and in the first state (e.g., the slide-out state). When the triggering operation is detected, the second housing 500 may be automatically slid in through the driving module (a push and pull-in operation) (e.g., a slide-in operation).

According to an embodiment, the electronic device 500 may use a push-pull operation as the triggering operation for driving the driving module. For example, the electronic device 500 may detect a triggering operation in which the second housing 500 is pressed in the second direction (e.g., direction ②) to be slid in by a push-pull section when the driving module is not driven and in the second state (e.g., the slide-in state). When the triggering operation is detected, the second housing 520 may be automatically slid out through the driving module (a push and pull-in operation) (e.g., a slide-out operation).

The electronic device 500 in FIG. 5A may include a touch circuit (e.g., the touch circuit 850 in FIG. 8) including a touch sensor (e.g., the touch sensor 851 in FIG. 8) and a touch sensor IC (e.g., the touch sensor IC 853 in FIG. 8).

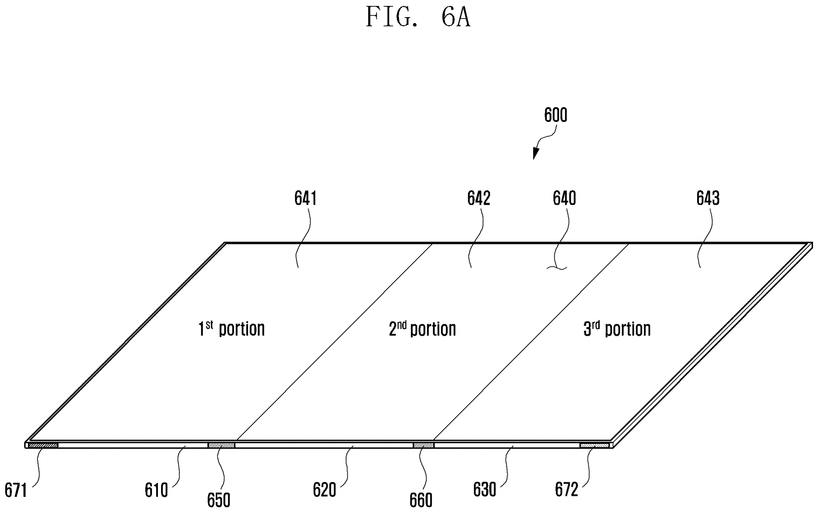

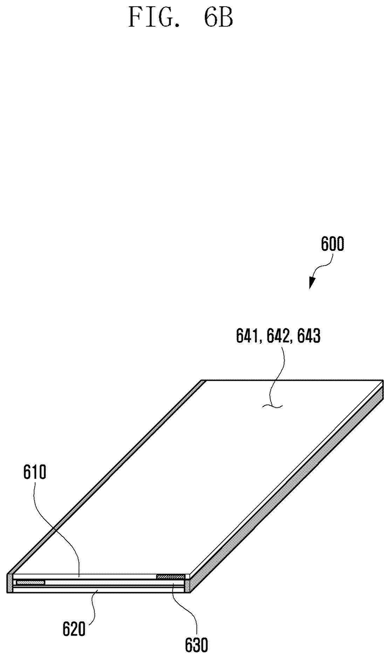

FIG. 6A is a view illustrating an unfolded state of a multi-foldable electronic device according to an embodiment of the disclosure. FIG. 6B is a view illustrating a folded state of a multi-foldable electronic device according to an embodiment of the disclosure.

The multi-foldable electronic device 600 in FIGS. 6A to 6B may be at least partially similar to the electronic device 101 in FIG. 1 or may further include other embodiments of the electronic device.

Referring to FIGS. 6A and 6B, the multi-foldable electronic device 600 according to an embodiment of the disclosure may include a housing structure including a first housing 610, a second housing 620, and a third housing 630. The multi-foldable electronic device 600 may include a foldable display 640 (e.g., a flexible display) disposed in an internal space provided in the housing structure, a first speaker 671 disposed inside the first housing 610, and a second speaker 672 disposed inside the third housing 630. The multi-foldable electronic device 600 may include a first hinge part 650 connecting the first housing 610 and the second housing 620, and a second hinge part 660 connecting the second housing 620 and the third housing 630.

In an embodiment, the multi-foldable electronic device 600 may be folded such that a first portion 641 and a second portion 642 come into contact (e.g., come into proximity). In an embodiment, the multi-foldable electronic device 600 may be folded such that the second portion 642 and a third portion 643 come into contact (e.g., come into proximity).

In an embodiment, the multi-foldable electronic device 600 may be folded such that the second portion 642 and the third portion 643 come into contact (e.g., come into proximity) and then folded such that the first portion 641 and the third portion 643 come into contact (e.g., come into proximity).

In an embodiment, the multi-foldable electronic device 600 may be folded such that the first portion 641 and the third portion 643 come into contact (e.g., come into proximity) in a state in which the multi-foldable electronic device is folded such that the second portion 642 and the third portion 643 come into contact (e.g., come into proximity).

The multi-foldable electronic device 600 in FIG. 6A may include a touch circuit (e.g., the touch circuit 850 in FIG. 8) including a touch sensor (e.g., the touch sensor 851 in FIG. 8) and a touch sensor IC (e.g., the touch sensor IC 853 in FIG. 8).

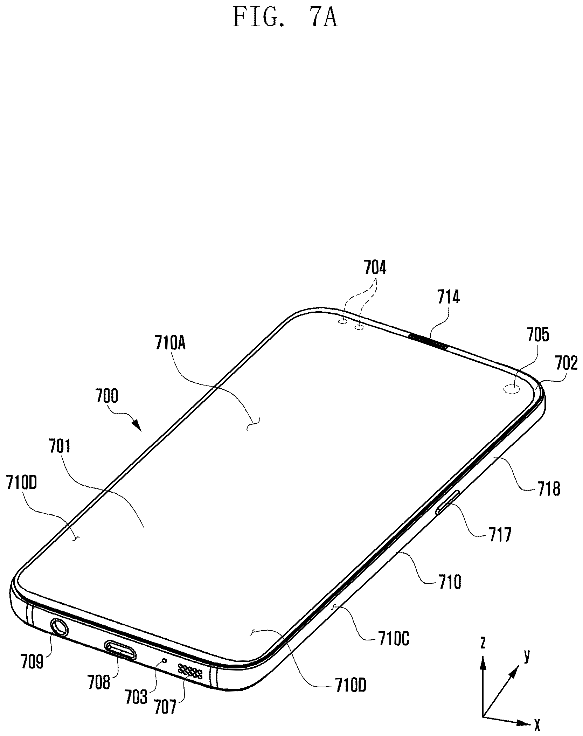

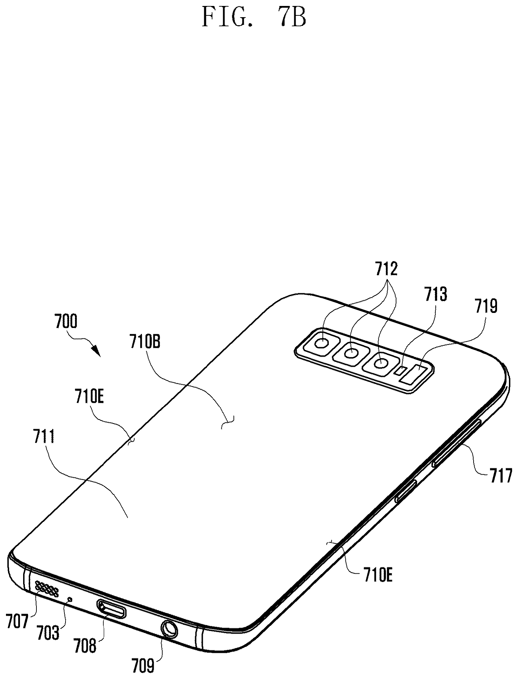

FIG. 7A is a perspective view illustrating a first surface (e.g., a front surface) of an electronic device according to an embodiment of the disclosure. FIG. 7B is a perspective view illustrating a second surface (e.g., a rear surface) of an electronic device according to an embodiment of the disclosure.

The electronic device 700 in FIGS. 7A to 7B may be at least partially similar to the electronic device 101 in FIG. 1 or may further include other embodiments of the electronic device.

Referring to FIGS. 7A and 7B, the electronic device 700 (e.g., the electronic device 101 in FIG. 1) according to an embodiment of the disclosure may include a first surface (or front surface) 710A, a second surface (or rear surface) 710B, and a housing 710. According to an embodiment, the electronic device 700 may include a display 701 (e.g., the display 810 in FIG. 8).

According to an embodiment, the display 701 may be supported by the housing 710. For example, the display 710 may include a liquid crystal display (LCD) display, an organic light emitting diode (OLED) display, or a micro-LED display.

According to an embodiment, the housing 710 may include a lateral surface 710C configured to surround a space between the first surface 710A and the second surface 710B. According to an embodiment, the housing 710 may refer to a structure for configuring a portion of the first surface 710A, the second surface 710B, and the lateral surface 710C.

According to an embodiment, at least a portion of the first surface 710A may include a substantially transparent front plate 702 (e.g., a glass plate including various coating layers, or a polymer plate).

According to an embodiment, the second surface 710B may be made of the substantially opaque rear plate 711. The rear plate 711 may include, for example, coated or colored glass, ceramic, polymers, metals (e.g., aluminum, stainless steel (STS), or magnesium), or a combination of at least two thereof. However, without limitation thereto, the rear plate 711 may be made of transparent glass.

According to an embodiment, the lateral surface 710C may be coupled to the front plate 702 and the rear plate 711 and defined by a lateral bezel structure 718 (or "lateral member") including a metal and/or polymer. According to an embodiment, the rear plate 711 and the lateral bezel structure 718 may be integrally configured and include an identical material (e.g., a metal material such as aluminum).

According to an embodiment, the front plate 702 may include two first areas 710D seamlessly extending from the first surface 710A to be bent toward the rear plate 711. The two first areas 710D may be disposed at both ends of a long edge of the front plate 702.

According to an embodiment, the rear plate 711 may include two second areas 710E seamlessly extending from the second surface 710B to be bent toward the front plate 702.

According to an embodiment, the front plate 702 (or the rear plate 711) may include only one of the first areas 710D (or the second areas 710E). According to an embodiment, a portion of the first areas 710D or the second areas 710E may be not included.

In some embodiments, when viewed from a lateral side of the electronic device 700, the lateral bezel structure 718 may have a first thickness (or width) at a lateral surface in which the first areas 710D and the second areas 710E are not included. In some embodiments, when viewed from a lateral side of the electronic device 700, the lateral bezel structure 718 may have a second thickness (or width) thinner than the first thickness at a lateral surface in which the first areas 710D and the second areas 710E are included.

According to an embodiment, the electronic device 700 may include at least one of a display 701, an audio input device 703 (e.g., the input module 150 in FIG. 1 or a microphone), an audio output device 707 or 714 (e.g., the audio output module 155 in FIG. 1 or a speaker) (e.g., an audio module), sensor modules 704 and 719 (e.g., the sensor module 176 in FIG. 1), camera modules 705 and 712 (e.g., the camera module 180 in FIG. 1), a flash 713, a key input device 717, an indicator (not shown), and connectors 708 and 709. According to an embodiment, the electronic device 700 may omit at least one (e.g., the key input device 717) of components or may additionally include another component.

According to an embodiment, the display 701 may be visually exposed through an upper portion of the front plate 702.

According to an embodiment, at least a portion of the display 701 may be seen through the front plate 702 configuring the first surface 710A and the first area 710D of the lateral surface 710C.

For example, a display module (e.g., the display module 160 in FIG. 1, or the display 810 in FIG. 8) may include a touch circuit (e.g., the touch circuit 850 in FIG. 8) including a touch sensor (e.g., the touch sensor 851 in FIG. 8) and a touch sensor IC (e.g., the touch sensor IC 853 in FIG. 8). The display module (e.g., the display module 160 in FIG. 1, or the display 810 in FIG. 8) may include a pressure sensor capable of measuring the intensity (pressure) of a touch. For example, the display 701 may be coupled to or disposed adjacent to the touch circuit (e.g., the touch circuit 850 in FIG. 8) and/or the pressure sensor. For example, the display 701 may be coupled to or disposed adjacent to a digitizer (e.g., the digitizer 860 in FIG. 8) configured to detect a magnetic field-type electronic pen (e.g., a stylus pen).

According to an embodiment, at least a portion of the sensor module 704 or 719 and/or at least a portion of the key input device 717 may be disposed on the first area 710D and/or the second area 710E.

According to an embodiment, a rear surface of a screen display area of the display 701 may include at least one of a first sensor module 704, camera modules 705 and 712 (e.g., image sensors), an audio output device 714 (e.g., an audio module), and a fingerprint sensor.

According to an embodiment, at least a portion of the sensor module 704 or 719 and/or at least a portion of the key input device 717 may be disposed on the first areas 710D and/or the second areas 710E.

According to an embodiment, the audio input device 703 may include a microphone. According to an embodiment, the input device 703 may include multiple microphones arranged so as to detect a direction of a sound.

According to an embodiment, the audio output device 707 or 714 may include an audio output device 707 operating as an external speaker and an audio output device 714 operating as a call receiver.

In an embodiment, the audio input device 703 (e.g., a microphone), the audio output device 707 or 714, and the connectors 708 and 709 may be arranged in an internal space of the electronic device 700. The audio input device 703 (e.g., a microphone), the audio output device 707 or 714, and the connectors 708 and 709 may be exposed to the external environment through at least one hole formed through the housing 710. In an embodiment, the hole formed on the housing 710 may be used in common for the audio input device 703 (e.g., the microphone) and the audio output device 707 or 714. In an embodiment, the audio output device 707 or 714 may include a speaker (e.g., a piezo speaker) operating without a hole formed on the housing 710.

In an embodiment, the sensor modules 704 and 719 (e.g., the sensor module 176 in FIG. 1) may generate an electrical signal or data value corresponding to an internal operation state or an external environment state of the electronic device 700. The sensor modules 704 and 719 may include a first sensor module 704 (e.g., a proximity sensor) disposed on the first surface 710A of the housing 710 and/or a second sensor module 719 (e.g., a heart rate monitor (HRM) sensor) and/or a third sensor module (not shown) (e.g., a fingerprint sensor) disposed on the second surface 710B of the housing 710. For example, the fingerprint sensor may be disposed on the first surface 710A (e.g., the display 701) and/or on the second surface 710B of the housing 710.

The electronic device 700 may further include at least one of a gesture sensor, a gyro sensor, an air pressure sensor, a magnetic sensor, an acceleration sensor, a grip sensor, a color sensor, an infrared (IR) sensor, a biometric sensor, a temperature sensor, a humidity sensor, or an illuminance sensor which is not shown in the drawings.

According to an embodiment, the camera modules 705 and 712 may include the first camera module 705 disposed on the first surface 710A of the electronic device 700, and the second camera module 712 disposed on the second surface 710B. The flash 713 may be disposed around the camera modules 705 and 712. The camera modules 705 and 712 may include one or more of lenses, an image sensor, and/or an image signal processor. The flash 713 may include, for example, a light-emitting diode or a xenon lamp.

According to an embodiment, the first camera module 705 may correspond to an under-display camera (UDC) and may be disposed on a lower portion of a display panel of the display 701. According to an embodiment, two or more lenses (wide-angle and telephoto lens) and image sensors may be arranged on one surface of the electronic device 700. According to an embodiment, multiple first camera modules 705 may be arranged on the first surface (e.g., a surface on which a screen is displayed) of the electronic device 700 in an under-display camera (UDC) scheme.

According to an embodiment, the key input device 717 may be disposed on the lateral surface 710C of the housing 710. According to an embodiment, the electronic device 700 may not include a portion or entirety of the key input device 717 described above, and the excluded key input device 717 may be implemented as various forms such as a soft key on the display 701. According to an embodiment, the key input device 717 may be implemented by using a pressure sensor included in the display 701.

According to an embodiment, the connectors 708 and 709 may include a first connector hole 708 capable of receiving a connector (e.g., a USB connector) for transmitting or receiving power and/or data to or from an external electronic device, and/or a second connector hole 709 (or an earphone jack) capable of receiving a connector for transmitting or receiving an audio signal to or from an external electronic device. The first connector hole 708 may include a port of a universal serial bus (USB) type A, USB type B, or USB type C. In case that the first connector hole 708 supports the USB type C, the electronic device 700 (e.g., the electronic device 800 in FIG. 8) may support USB power delivery (PD) charging.

According to an embodiment, a first camera module 705 of the camera modules 705 and 712 and/or a first sensor module 704 of the sensor modules 704 and 719 may be disposed to be visually exposed through the display 701.

According to an embodiment, in case that the first camera module 705 is disposed in an under-display camera (UDC) scheme, the first camera module 705 may not be visually exposed to the outside.

According to an embodiment, the first camera module 705 may be disposed to overlap a display area and may display a screen in the display area corresponding to the first camera module 705. The first sensor module 704 may be disposed in the inner space of the electronic device 700 to perform functions thereof without being visually exposed through the front plate 702.

FIG. 8 is a block view illustrating a configuration of an electronic device according to an embodiment.

The electronic device 800 in FIG. 8 may be at least partially similar to the electronic device 101 in FIG. 1 or may further include other embodiments of the electronic device.

Referring to FIG. 8, the electronic device 800 according to an embodiment of the disclosure may include a processor 120 (e.g., the processor 120 in FIG. 1), a memory 130 (e.g., the memory 130 in FIG. 1), a sensor module 176, and a display module 160 (e.g., the display module 160 in FIG. 1).

In an embodiment, the memory 130 (e.g., the memory 130 in FIG. 1, or the memory 130 in FIG. 4) may include one or more of a high bandwidth memory (HBM), a dynamic random access memory (DRAM), a static random access memory (SRAM), a phase-change random access memory (PRAM), a magnetic random access memory (MRAM), a resistive random access memory (RRAM), a flash memory, and/or an electrically erasable programmable read-only memory (EEPROM).

According to an embodiment, a display module 160 (e.g., the display module 160 in FIG. 1) may include a display 810, a display driver IC (DDIC) 830 (e.g., a display drive unit) configured to drive the display 810, a touch circuit 850, a digitizer 860, and a digitizer drive unit 870. For example, all or a portion of the sensor module 176 may be included in the display module 160.

According to an embodiment, the DDIC 830 may include an interface module 831, a memory 833 (e.g., a buffer memory), an image processing module 835, or a mapping module 837.

According to an embodiment, the DDIC 830 may receive image data or image information including an image control signal corresponding to a command for controlling the image data from another component of the electronic device through the interface module 831.

According to an embodiment, the image information may be received from a processor (e.g., the processor 120 in FIG. 1) (e.g., the main processor 121 in FIG. 1) (e.g., an application processor) or an auxiliary processor (e.g., the auxiliary processor 123 in FIG. 1) (e.g., a graphic processing device) operating independently from a function of the main processor 121.

According to an embodiment, the DDIC 830 may perform communication with the touch circuit 850 or the sensor module 880 (e.g., the sensor module 176 in FIG. 1) through the interface module 831. In addition, the DDIC 830 may store at least a portion of the received image information in the memory 833. By way of example, the DDIC 830 may store at least a portion of the received image information in the memory 833 in a unit of frames.

According to an embodiment, the image processing module 835 may perform a preprocessing or postprocessing (e.g., resolution, brightness, or size adjustment) on at least a portion of the image data based on an attribute of the image data or an attribute of the display 810.

According to an embodiment, the mapping module 837 may generate a voltage value or current value corresponding to the image data having been preprocessed or post-processed through the image processing module 835. According to an embodiment, the generation of the voltage value or current value may be performed at least partially based on attributes (e.g., an arrangement (RGB stripe or pentile structure) of pixels or a size of each sub-pixel) of pixels of the display 810.

According to an embodiment, at least a portion of pixels of the display 810 may be driven based on, for example, at least a portion of the voltage value and current value and thus visual information (e.g., a text, an image, and/or an icon) corresponding to the image data may be displayed through the display 810.

According to an embodiment, the touch circuit 850 may include a touch sensor 851 and a touch sensor IC 853 for controlling the touch sensor 851.

According to an embodiment, the touch sensor IC 853 may control the touch sensor 851 to detect a touch input or a hovering input in a predetermined position of the display 810. For example, the touch sensor IC 853 may measure a change in a signal (e.g., a voltage, a light amount, resistance, or a voltage amount) for a predetermined position of the display 810 to detect a touch input or a hovering input. The touch sensor IC 853 may provide information on the detected touch input or hovering input (e.g., a position, an area, a pressure, or a time) to the processor 120.

According to an embodiment, at least a portion (e.g., the touch sensor IC 853) of the touch circuit 850 may be included as a portion of the DDIC 830 or the display 810.

According to an embodiment, at least a portion (e.g., the touch sensor IC 853) of the touch circuit 850 may be included as a portion of other components (e.g., the auxiliary processor 123) disposed outside the display module 160.

According to an embodiment, the sensor module 880 may include at least one of a gesture sensor, a gyro sensor, a grip sensor, a color sensor, an infrared (IR) sensor, an illuminance sensor, an ultrasonic sensor, a proximity sensor, a biometric sensor (e.g., an iris recognition sensor), a distance detection sensor (e.g., a time of flight (TOF) sensor, or a light detection and ranging (LiDAR) sensor), a barometric sensor, a magnetic sensor (e.g., a 6-axis sensor, or a geomagnetic sensor), an acceleration sensor, a temperature sensor, a humidity sensor, and/or a fingerprint recognition sensor. The electronic device 800 may include a control circuit to control the sensor module 880.

According to an embodiment, the touch sensor 851 or the sensor module 880 may be disposed between pixels of a pixel layer of the display 810 or disposed on or under the pixel layer.

According to an embodiment, the display module 160 may include a digitizer 860 configured to detect an input (e.g., a touch input or hovering input) of an electronic pen (e.g., a stylus pen). For example, the digitizer 860 may convert analog coordinates (e.g., a position) of the electronic pen (e.g., a stylus pen) into digital coordinate data. The digitizer 860 may transmit the digital coordinate data to the processor 120 and/or the DDIC 830.

According to an embodiment, the processor 120 may acquire the digital coordinate data input from the digitizer 860. The processor 120 may detect an input (e.g., a touch input or hovering input) through an electronic pen (e.g., a stylus pen) based on the digital coordinate data. For example, the digitizer 860 may include multiple x-axis channels and multiple y-axis channels. The processor 120 may sense a position of the electronic pen (e.g., a stylus pen) by using sensing signals (e.g., EMR signals) received from the x-axis channels and the y-axis channels arranged in the digitizer 860. For example, the digitizer 860 may have the multiple x-axis channels and the multiple y-axis channels sequentially arranged therein, and the processor 120 may sense the position of the electronic pen (e.g., a stylus pen) by using sensing signals (e.g., EMR signals) received from the consecutive three channels (e.g., three adjacent channels).

According to an embodiment, the digitizer 860 may not be visible from the outside due to the display 810, electronic components, and mechanisms.

For example, the digitizer 860 may be disposed integrally with the flat display 810 or may be disposed adjacent to the flat display 810. For example, in case that the digitizer 860 is applied to the flat display 810, the digitizer 860 may include one electro magnetic resonance (EMR) sheet (or EMR film). Multiple x-axis channels and multiple y-axis channels for detecting the position of the electronic pen (e.g., a stylus pen) may be disposed on one EMR sheet.

For example, the digitizer 860 may be disposed integrally with a flexible display or a foldable display or may be disposed adjacent to the flexible display or the foldable display. For example, the digitizer 860 may be disposed at a lower portion (e.g., below) of the display 810 in the z-axis direction (e.g., the z-axis direction in FIG. 2A).

For example, in case that the digitizer 860 is applied to the flexible display or the foldable display, the digitizer 860 may include multiple electro magnetic resonance (EMR) sheets (or EMR films). Multiple x-axis channels and multiple y-axis channels for detecting the position of the electronic pen (e.g., a stylus pen) may be disposed on multiple EMR sheets.

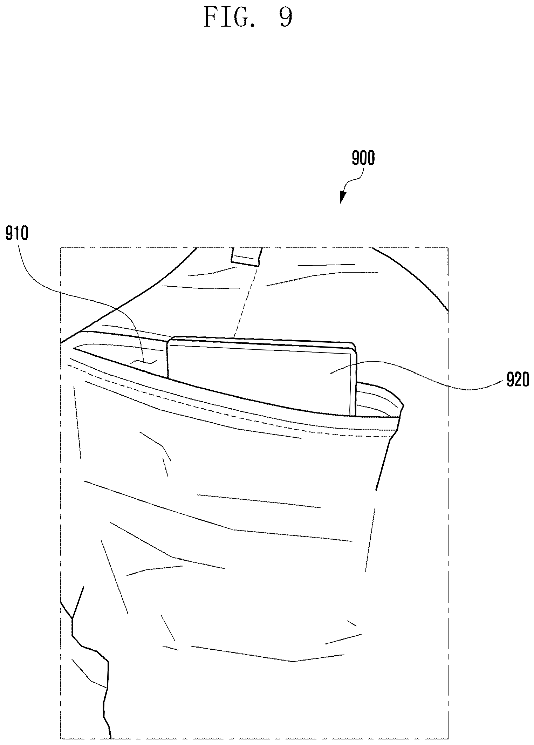

FIG. 9 is a view 900 illustrating an electronic device (e.g., a foldable electronic device) located in a user's pocket.

Referring to FIG. 9, the external display (e.g., the sub-display 331 in FIG. 3D) of the foldable electronic device 920 may have a smaller screen size and a smaller total area of the touch sensor compared to a bar-type display (e.g., the display 701 in FIGS. 7A and 7B). In case that the foldable electronic device 920 is located in a user's pocket 910 (the inside of a pocket) in the folded state, a mistouch may occur when the user's body (e.g., a thigh or buttocks) and the external display (e.g., the sub-display 331 in FIG. 3D) of the foldable electronic device 920 come close to each other.

In case that the size of the external display (e.g., the sub-display 331 in FIG. 3D) is small, the area in contact with the touch sensor also becomes small, so that the data distribution (e.g., NodeCountPN30) of the touch area may be configured to 20% so as to determine the touch. For example, in case that a data distribution reference value for malfunction of the external display 331 and an internal display (e.g., the flexible display 330 in FIG. 3A) is configured to the same (20%), the number of nodes of the external display 331 is smaller than that of the internal display (e.g., the flexible display 330), so that a touch recognition rate of the external display 331 may be reduced. In this case, the recognition rate of the foldable electronic device 920 being located in the pocket 910 (inside the pocket) may be reduced, and malfunction of a finger touch may occur. Here, "NodeCountPN30" indicates that a range of count positive and negative values of each touch node is configured to 30.

When a mistouch occurs due to proximity between the user's body (e.g., a thigh or buttocks) and the external display of the foldable electronic device 920 (e.g., sub-display 331 in FIG. 3D), touch characteristics different from those of a finger touch appear.

According to an embodiment of the disclosure, it may be determined whether the foldable electronic device 920 is located in a user's hand or in the pocket 910 (inside the pocket) (or in a bag) by utilizing characteristics of touch data acquired from the touch circuit (e.g., the touch circuit 850 in FIG. 8) of the foldable electronic device 920. An unintended mistouch (e.g., a touch error) by the user may be blocked by adjusting (e.g., restricting) a touch re-input and controlling a touch processing operation when the foldable electronic device 900 is located in the pocket 910 (or a bag).

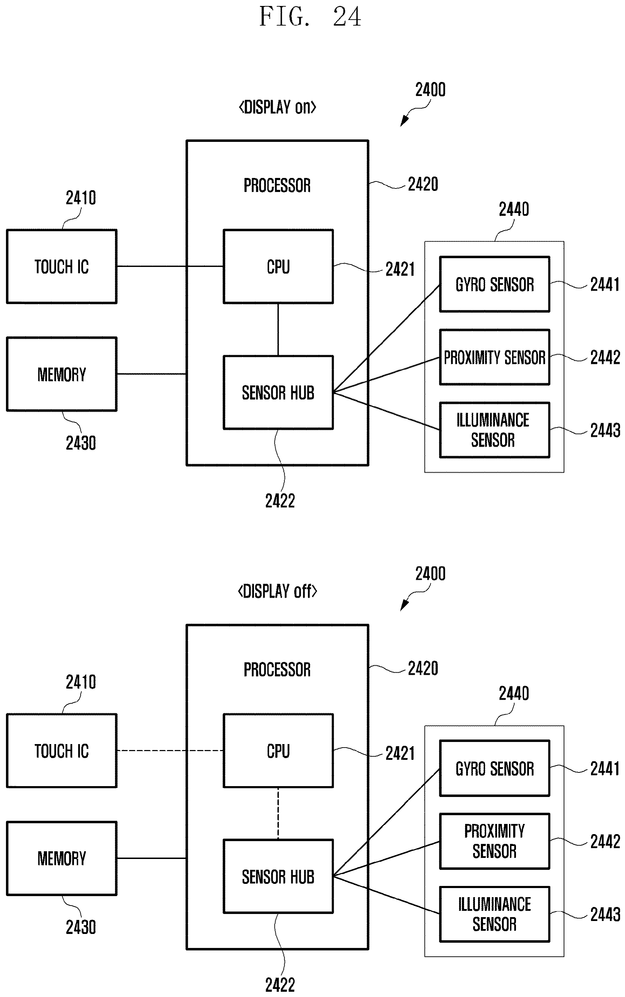

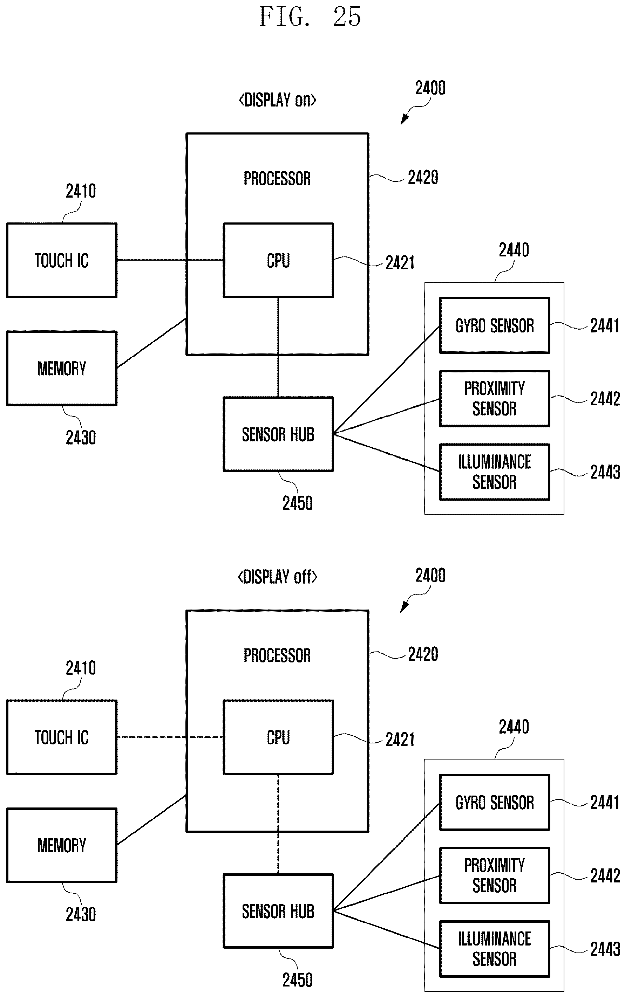

For example, the electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, an electronic device 2400 in FIG. 24, or an electronic device 2400 in FIG. 25) according to an embodiment of the disclosure may configure a pocket recognition area condition to be sensitive, and determine a finger touch when a touch sensitivity and an area condition are satisfied. Here, characteristics of an area where the external display (e.g., the sub-display 331 in FIG. 3D) and an object (e.g., a finger, a thigh, a buttocks, or a conductive object) are in proximity (e.g., abutting) may be utilized. A normal finger touch and an abnormal body (e.g., a thigh or buttocks) touch (or a conductive object touch) may be distinguished based on a maximum touch sensitivity, a touch shape, and a size of a touch area.

For example, the electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, the electronic device 2400 in FIG. 24, or the electronic device 2400 in FIG. 25) according to an embodiment of the disclosure may determine that a touch is a normal finger touch intended by the user when an amount of change in the touched area is small. Here, a normal finger touch and an abnormal body (e.g., a thigh or buttocks) touch (or a conductive object touch) may be distinguished based on an amount of change in the touch area.

For example, the electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, an electronic device 2400 in FIG. 24, or an electronic device 2400 in FIG. 25) according to an embodiment of the disclosure may restrict a touch processing operation for a certain time period (e.g., 100 ms, 300 ms, 500 ms, 1000 ms, or 3000 ms) immediately after the electronic device is taken out of the pocket 910 (from the pocket). Here, immediately after the electronic device is taken out of the pocket 910 (or a bag), noise of the mistouch generated in the pocket (910) (or a bag) remains, so the touch processing operation is restricted for a certain time period, and the touch processing operation may be performed normally after the certain time period has elapsed.

For example, the electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, an electronic device 2400 in FIG. 24, or an electronic device 2400 in FIG. 25) according to an embodiment of the disclosure may enhance a touch gesture recognition (a distance, a time, and a size of a touch area) condition after being taken out of the pocket (910) (or a bag). In this case, after the electronic device is taken out of the pocket 910 (or a bag), the touch operation may be prevented by enhancing the touch gesture recognition (a distance, a time, and a size of a touch area) condition using a sensor module (e.g., a proximity sensor, a illuminance sensor, an acceleration sensor, a motion sensor, or a 6-axis sensor).

For example, provided may be a foldable electronic device and an operating method thereof, which may block an unintended mistouch (e.g., a touch error) by the user by adjusting a touch re-input and controlling (e.g., restricting) a touch processing operation when the electronic device is located in a pocket 910 (or a bag).

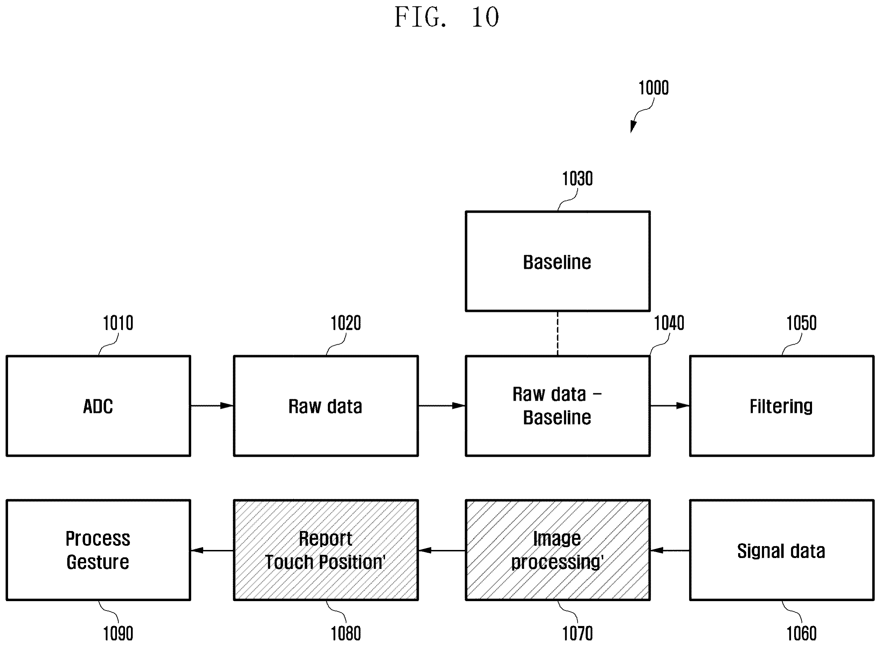

FIG. 10 is a view illustrating an operation of processing touch coordinates in an electronic device.

Referring to FIG. 10, in operation 1010, a touch sensor IC 1000 (e.g., the touch sensor IC 853 in FIG. 8) may perform analog-to-digital conversion to convert analog touch sensing values acquired from a touch sensor (e.g., the touch sensor 853 in FIG. 8) into digital touch sensing values.

In operation 1020, the touch sensor IC 1000 may generate touch raw data as a digital touch sensing value.

In operation 1030, the touch sensor IC 1000 may determine a baseline 1030.

In operation 1040, the touch sensor IC 1000 may configure a baseline of raw data.

In operation 1050, the touch sensor IC 1000 may filter the raw data for which the baseline is configured.

In operation 1060, the touch sensor IC 1000 may generate touch signal data for touch processing based on the raw data.

In operation 1070, the touch sensor IC 1000 may perform image processing based on the touch signal data. For example, an image processing processor of the touch sensor IC 1000 may select an object area based on a center point of a touch. The touch sensor IC 1000 may calculate characteristics for sensitivity and size of the touch area. The touch sensor IC 1000 for the corresponding object area may determine a touch ID.

In operation 1080, the touch sensor IC 1000 may generate a touch position report for a location where a touch was made. For example, a touch position report unit of the touch sensor IC 1000 may determine a coordinate position for each touch ID. The touch sensor IC 1000 may provide determined touch coordinates to a processor (e.g., the processor 120 in FIG. 8). Here, in the case of controlling (e.g., restricting) a touch processing operation, the touch sensor IC 1000 may not provide the determined touch coordinates to the processor (e.g., the processor 120 in FIG. 8) or may hold same for a certain time period.

In operation 1090, the touch sensor IC 1000 may perform a touch gesture operation based on the touch position report.

For example, operations 1010 to 1090 may all be performed in the touch sensor IC 1000.

For example, operations 1010 to 1090 may all be performed in the processor 120.

For example, the touch sensor IC 1000 and the processor 120 may perform operations 1010 to 1090 in combination.

For example, information about touch coordinates and a touch type may be transmitted from the touch sensor IC 1000 to the processor 120, and the processor 120 may perform the remaining operations.

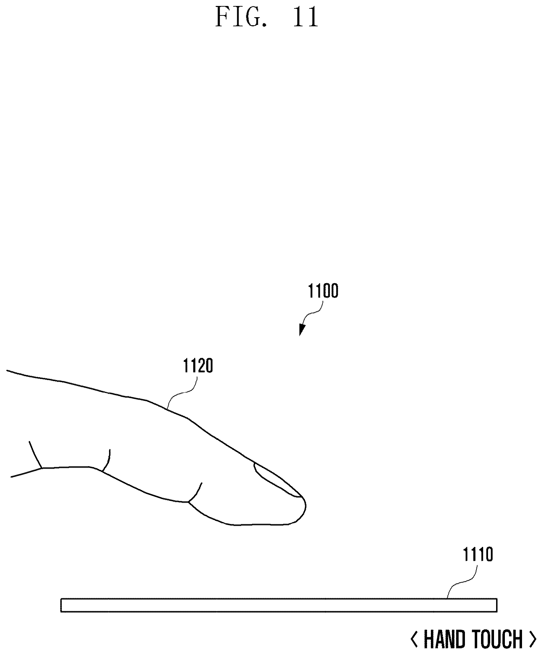

FIGS. 11 to 12C are views 1200 illustrating characteristics of touch data generated from a finger touch.

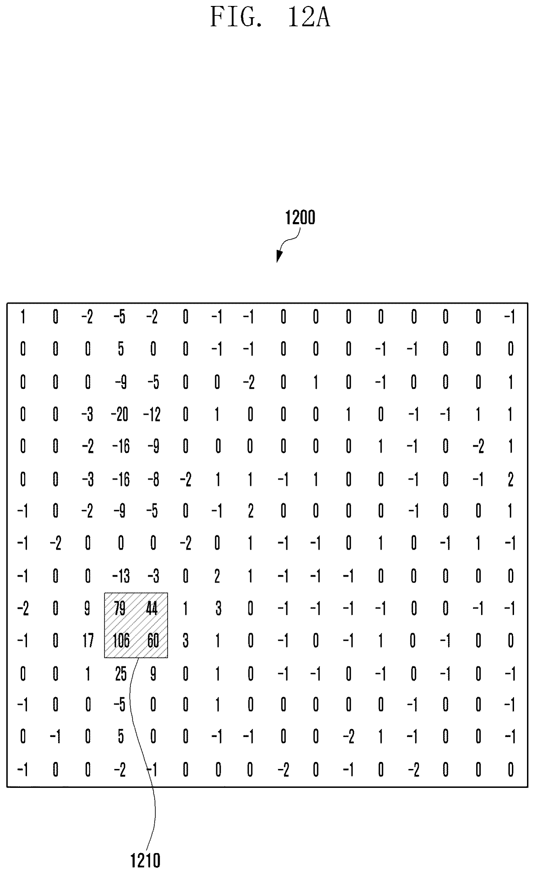

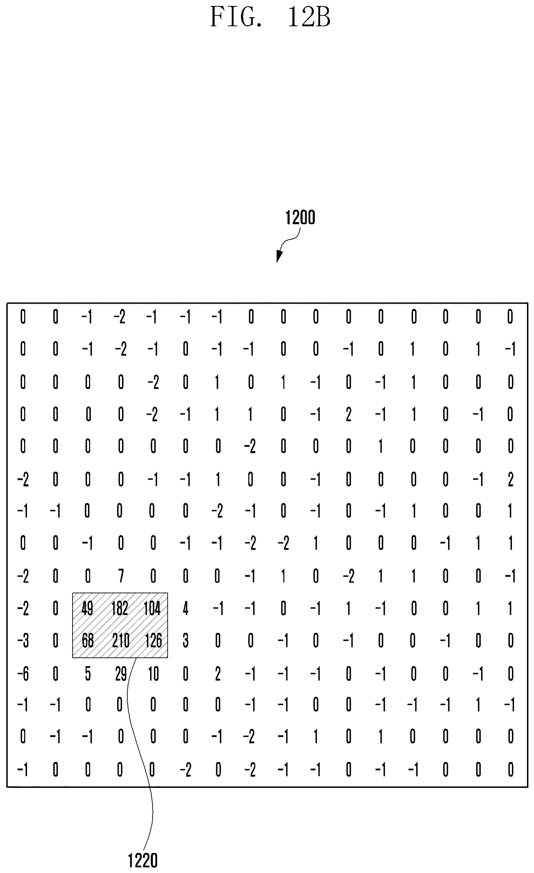

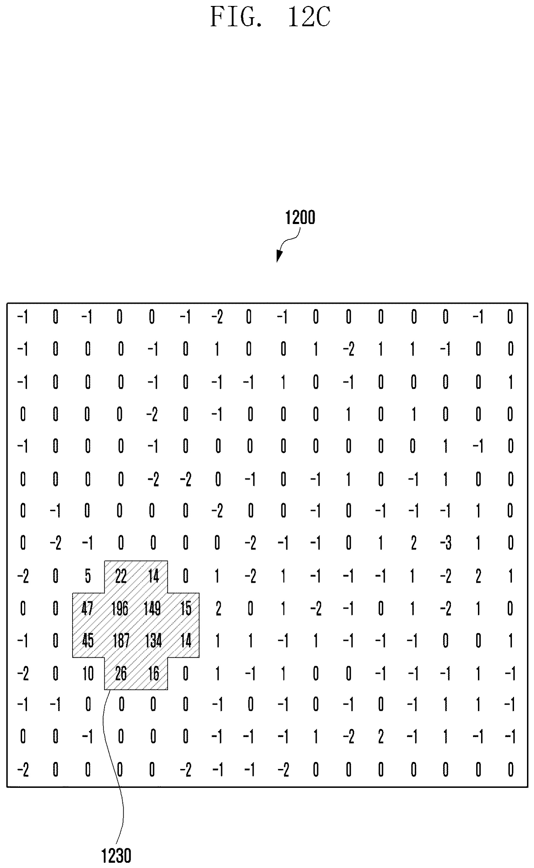

Referring to FIGS. 11 to 12C, a touch may be made with a finger 1120 on a display 1110 (e.g., a touch screen) of an electronic device (1100).

For example, when the touch is made by the finger 1120, touch values for the location where the finger 1120 touches the entire area of the touch sensor (e.g., the touch sensor 851 in FIG. 8) may be generated (1210).

For example, depending on the intensity of the touch of the finger 1120, the size of the area of the location where the finger 1120 touches the entire area of the touch sensor (e.g., the touch sensor 851 in FIG. 8) and the touch values increase (1220 and 1230).

In the case of the touch of the finger 1120, the center point may be maintained without change even if the touch values and the size of the area of the location where the touch was made change.

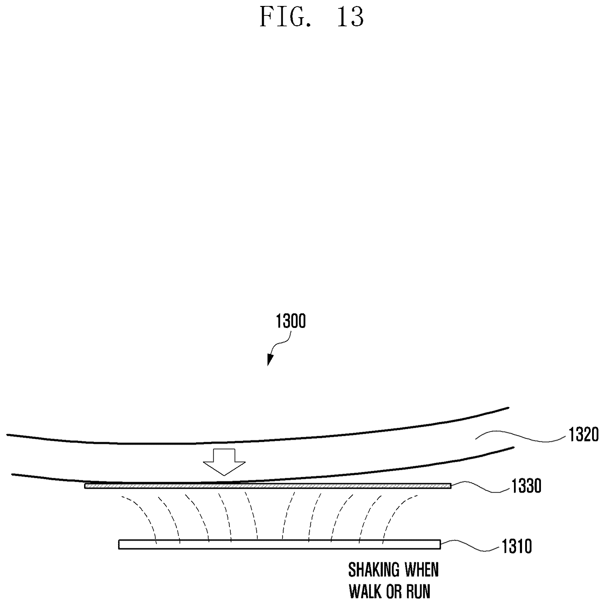

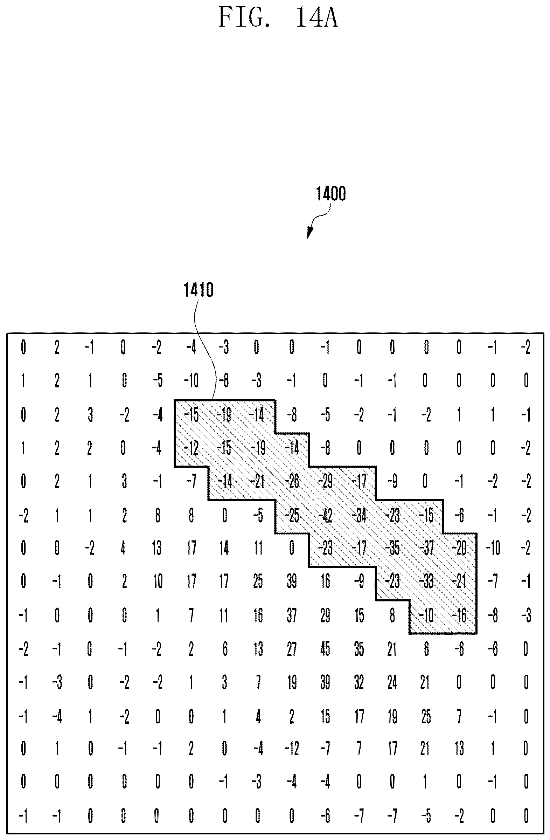

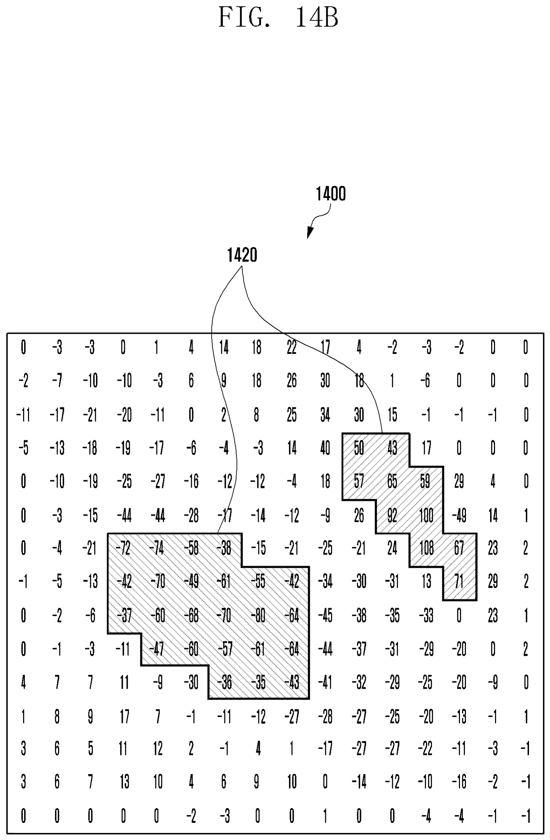

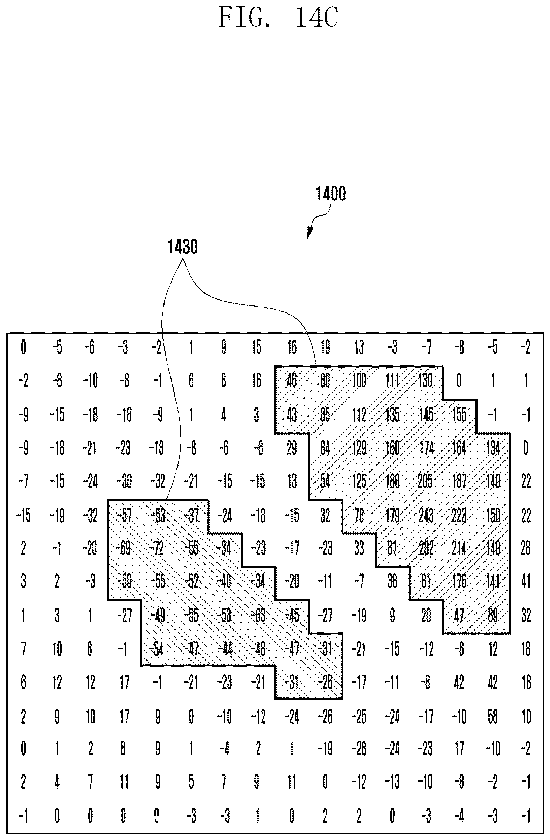

FIG. 13 is a view 1300 illustrating characteristics of touch data generated from a mistouch of a user's body (e.g., a thigh or buttocks) when an electronic device (e.g., a foldable electronic device) is located in a user's pocket (inside the pocket). FIGS. 14A to 14C are views 1400 illustrating characteristics of touch data generated from a mistouch of a user's body (e.g., a thigh or buttocks) when an electronic device (e.g., a foldable electronic device) is located in a user's pocket (inside the pocket).

Referring to FIGS. 13 to 14C, in case that the electronic device is located in a pocket (the inside of a pocket) (or inside a bag), a touch may be made between the display 1310 (e.g., a touch screen) of the electronic device and a conductive object on the user's body (e.g., a thigh or buttocks) or inside the bag.

For example, a touch may be generated by electrostatic means even if a fabric 1330 is located between the display 1310 (e.g., a touch screen) and the user's body (e.g., a thigh or buttocks) or a conductive object.

For example, when a touch occurs between the display 1310 (e.g., a touch screen) and the user's body (e.g., a thigh or buttocks), large-area touch values may be generated 1410.

For example, depending on the user's body movement, large-area touch values may be generated 1420 at multiple locations. Depending on the user's body movement, large-area touch values may be generated 1420 at multiple locations, and the size of the touch area and the touch values may change.

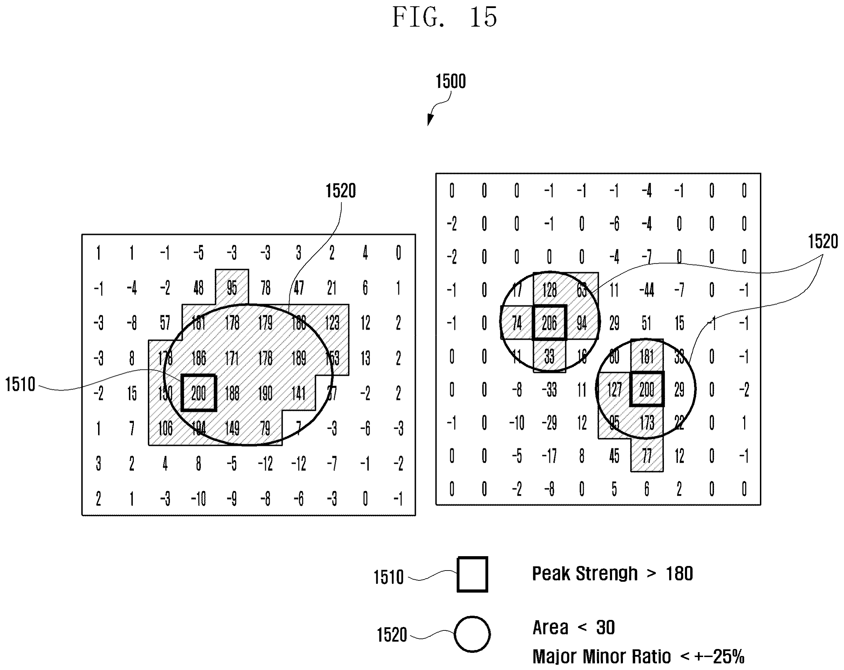

FIG. 15 is a view 1500 illustrating acquiring and utilizing a peak strength (e.g., a maximum strength), a touch area, a major value, and a minor value based on touch data.

Referring to FIG. 15, the electronic device (e.g., a foldable electronic device) according to an embodiment of the disclosure may determine whether a finger touch is a normal finger touch or a mistouch (e.g., an abnormal touch) in a pocket (the inside of a pocket) by reflecting touch characteristics (e.g., touch strength and touch shape) of the finger touch.

For example, the processor (e.g., the processor 120 in FIG. 8) may determine whether a peak strength 1510 (e.g., 200) of touch data of a touch area 1520 received at a touched location exceeds a preconfigured reference value (e.g., 180). In case that the peak strength 1510 (e.g., 200) of touch data of the touch area 1520 exceeds the preconfigured reference value (e.g., 180), the processor 120 may determine that it is a finger touch and perform a touch processing operation according to the finger touch.

For example, the processor 120 may acquire a major value and a minor value of the touch data of the touch area 1520 received at the touched location. The processor 120 may determine whether the size of the touch area 1520 is less than a preconfigured size (e.g., 30). In case that the size of the touch area 1520 is less than the preconfigured size (e.g., 30), the processor 120 may determine that it is a small-area finger touch and perform a touch processing operation according to the finger touch.

For example, the processor 120 may determine whether a ratio of the major value and the minor value acquired at the touch area 1520 is less than a preconfigured ratio (e.g., ±25%). If the ratio of the major value and the minor value acquired at the touch area 1520 is less than a preconfigured ratio (e.g., ±25%), the processor 120 may determine that it is a finger touch and perform a touch processing operation according to the finger touch.

According to an embodiment, the electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, an electronic device 2400 in FIG. 24, or an electronic device 2400 in FIG. 25) according to an embodiment of the disclosure may adjust a pocket recognition area and size conditions to be sensitive, but quickly switch to finger touch determination when a condition estimated as a finger touch is satisfied. Through this, a non-input for a normal finger touch intended by the user is prevented from occurring.

According to an embodiment, the electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, an electronic device 2400 in FIG. 24, or an electronic device 2400 in FIG. 25) including a large-screen display may determine whether a touch is a finger touch or a mistouch in a pocket (the inside of a pocket) by configuring a data distribution (e.g., NodeCountPN30) of a touch area to 20% (e.g., 1062 touch nodes). On the other hand, the foldable electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, an electronic device 2400 in FIG. 24, or an electronic device 2400 in FIG. 25) including a small-screen display may determine whether a touch is a finger touch or a mistouch in a pocket (the inside of a pocket) by configuring a data distribution (e.g., NodeCountPN30) of a touch area to 30% (e.g., 72 touch nodes).

In an operation of recognizing that the electronic device is located in a pocket (the inside of a pocket), the electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, an electronic device 2400 in FIG. 24, or an electronic device 2400 in FIG. 25) may cause the processor 120 to determine whether a touch is a finger touch or a mistouch in the pocket (inside the pocket) by configuring a data distribution (e.g., NodeCountPN30) of a touch area to 30% (e.g., 72 touch nodes). Here, "NodeCountPN30" indicates that a range of count positive and negative values of each touch node is configured to 30. The touch sensitivity inside a pocket is not large, the size of the finger is small, and the touch area has a predefined shape (e.g., a circle, an oval, or a shape with a certain curvature), so considering this, the data distribution (e.g., NodeCountPN30) of the touch area may be configured to 30% (e.g., 72 touch nodes).

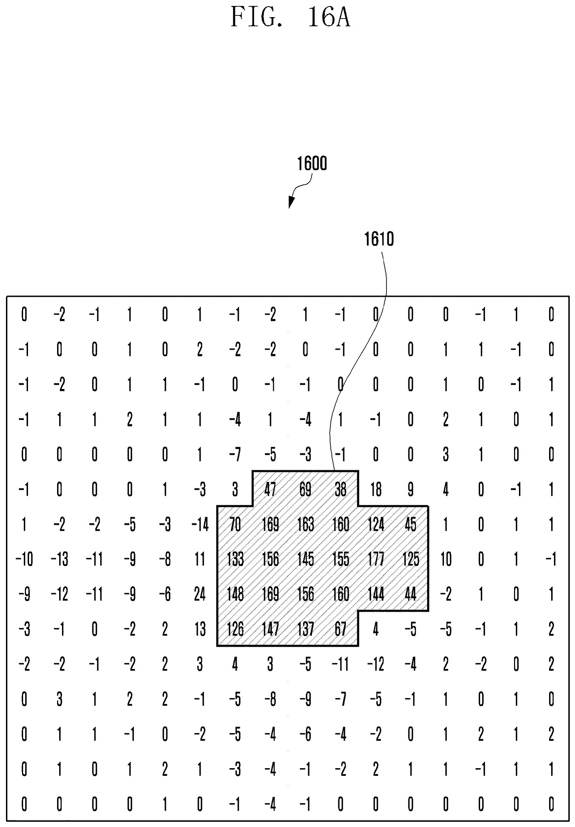

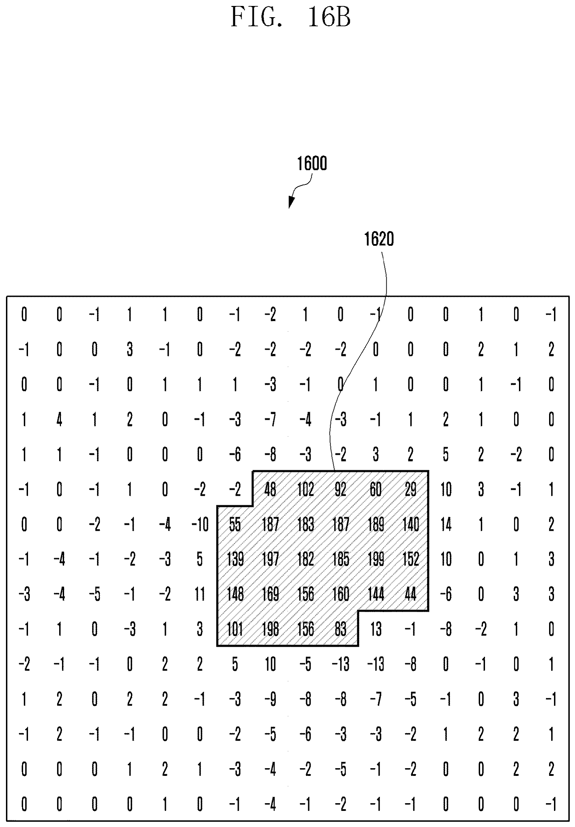

FIGS. 16A and 16B are views 1600 illustrating examples of touch data according to a touch of the thumb.

Referring to FIGS. 16A and 16B, in the case of a touch of the thumb, the size of the touch area 1610 or 1620 may appear relatively large compared to that of other fingers. The processor (e.g., the processor 120 in FIG. 8) may perform an operation of determining whether it is a finger touch or a mistouch in a pocket (the inside of a pocket) by reflecting the size characteristics of the touch area 1610 or 1620 of the thumb so that the touch of the thumb is normally processed.

For example, after touching the display (e.g., display 810 in FIG. 8) with the thumb, the size of the touch area 1610 or 1620 and the touch intensity may change slightly due to the movement of the thumb, but the center point of the touch may be maintained constant. The processor 120 may perform an operation of determining whether it is a finger touch or a mistouch in a pocket (the inside of a pocket) by reflecting the characteristics of the size of the touch area 1610 or 1620 and the touch intensity according to the thumb touch.

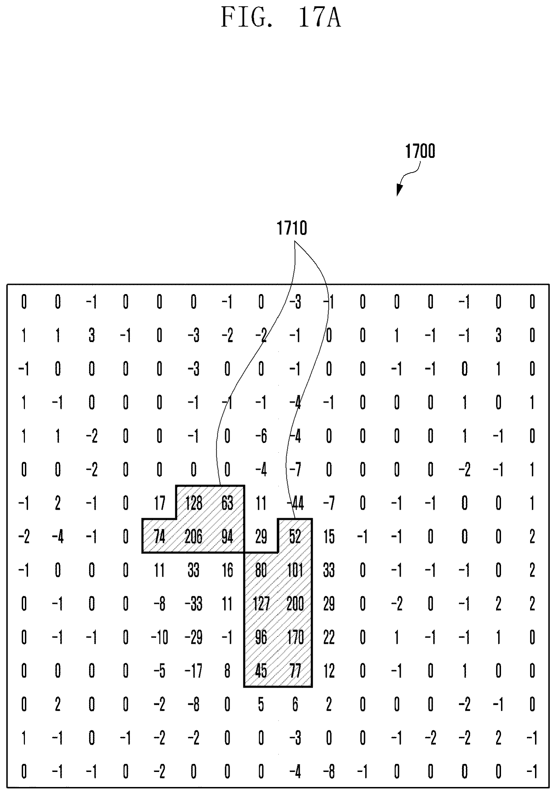

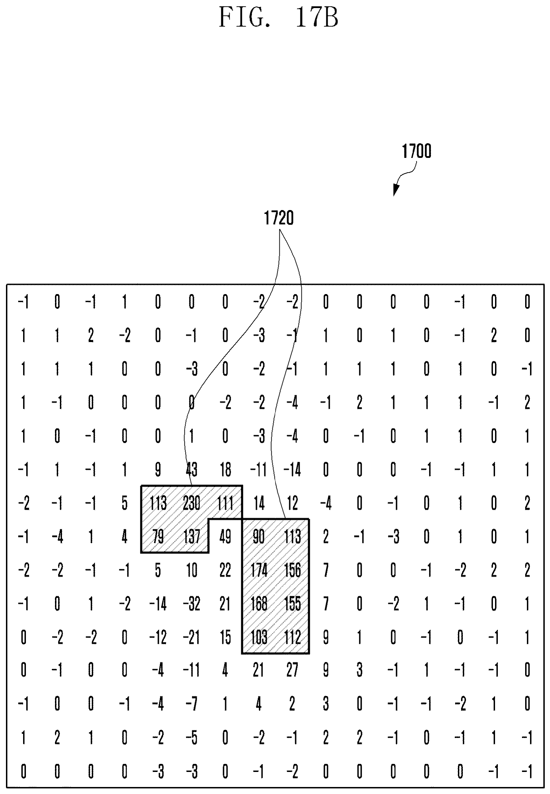

FIGS. 17A and 17B are views 1700 illustrating examples of touch data according to a touch of two fingers.

Referring to FIGS. 17A and 17B, the processor (e.g., the processor 120 in FIG. 8) may perform an operation of determining whether it is a finger touch or a mistouch in a pocket (the inside of a pocket) by reflecting the characteristics of a case where the display (e.g., the display 810 in FIG. 8) is touched with two fingers.

For example, the processor 120 may perform an operation of determining whether it is a two-finger touch or a mistouch in a pocket (the inside of a pocket) by reflecting size characteristics, distribution characteristics, and distance characteristics of a touch location of a two-finger touch area 1710 or 1720 so that the two-finger touch is normally processed.

For example, after touching the display 810 with two fingers, the size of the touch area 1710 or 1720 and the touch intensity may change slightly due to the movement of the two fingers, but the center point of the touch may be maintained constant. The processor 120 may perform an operation of determining whether it is a finger touch or a mistouch in a pocket (the inside of a pocket) by reflecting size characteristics, distribution characteristics, and distance characteristics of the touch location of the touch area 1710 or 1720 according to the two-finger touch.

According to an embodiment, the processor 120 may apply (e.g., perform) an operation of determining whether it is a finger touch (e.g., including the thumb touch and the two-finger touch) or a mistouch in a pocket (the inside of a pocket) when the display (e.g., the display 810 in FIG. 8) is turned on (e.g., display a screen).

According to an embodiment, the processor 120 may apply (e.g., perform) an operation of determining whether it is a finger touch (e.g., including the thumb touch and the two-finger touch) or a mistouch in a pocket (the inside of a pocket), when recognizing proximity using the sensor module (e.g., the sensor module 880 in FIG. 8), recognizing a user's step, recognizing a folding/unfolding state of the electronic device, and a display (e.g., the display 810 in FIG. 8) is in a lock screen state using.

For example, when a specific application is being executed (e.g., a game application is being executed) on the electronic device, the processor 120 may not perform an operation of determining whether it is a finger touch (e.g., including the thumb touch and the two-finger touch) or a mistouch in a pocket (the inside of a pocket).

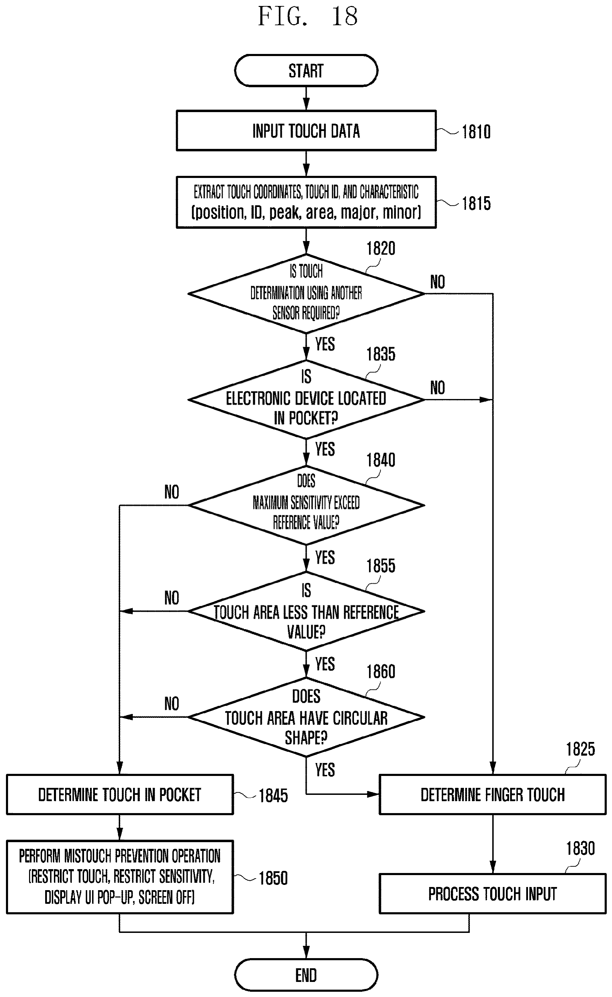

FIG. 18 is a flowchart illustrating an operating method of an electronic device according to an embodiment of the disclosure.

Referring to FIG. 18, in operation 1810, the touch sensor IC (e.g., the touch sensor IC 853 in FIG. 8) of the touch circuit (e.g., the touch circuit 850 in FIG. 8) may receive touch data from the touch sensor (e.g., the touch sensor 851 in FIG. 8).

In operation 1815, the touch sensor IC 853 may acquire (extract) touch coordinates, a touch ID, and touch characteristics based on the touch data.

In operation 1820, the processor (e.g., the processor 120 in FIG. 8) may determine whether touch determination (e.g., whether it is a finger touch or a touch in a pocket) is required using a sensor (e.g., the sensor module 880 in FIG. 8) (e.g., a proximity sensor, a illuminance sensor, a motion sensor, an acceleration sensor, or a 6-axis sensor) other than the touch sensor 851.

As a result of the determination in operation 1820, if touch determination using a sensor (e.g., the sensor module 880 in FIG. 8) (e.g., a proximity sensor, a illuminance sensor, a motion sensor, an acceleration sensor, or a 6-axis sensor) other than the touch sensor 851 is not required (e.g., No), the processor (e.g., the processor 120 in FIG. 8) may perform operation 1825.

For example, operation 1820 may be performed first, and then operation 1810 may be performed. In case that operation 1820 is performed first, operation 1810 may not be performed.

For example, in case that the electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, an electronic device 2400 in FIG. 24, or an electronic device 2400 in FIG. 25) is determined to be located in a pocket (the inside of a pocket) by using the illuminance sensor or the proximity sensor, an operation of determining touch data may not be performed.

In operation 1825, the processor 120 may determine that an input touch is a finger touch based on the touch coordinates, touch ID, and touch characteristics.

In operation 1830, the processor 120 may perform touch processing according to the finger touch input.

As a result of the determination in operation 1820, if touch determination using a sensor (e.g., the sensor module 880 in FIG. 8) (e.g., a proximity sensor, a illuminance sensor, a motion sensor, an acceleration sensor, or a 6-axis sensor) other than the touch sensor 851 is required (e.g., Yes), the processor (e.g., the processor 120 in FIG. 8) may perform operation 1835.

In operation 1835, the processor 120 may determine that the electronic device is located in a pocket (e.g., the inside of a pocket or inside a bag).

As a result of the determination in operation 1835, in case that the electronic device is determined not to be located in a pocket (the inside of a pocket or inside a bag) (e.g., No), the processor 120 may perform operation 1825.

As a result of the determination in operation 1835, in case that the electronic device is determined to be located in a pocket (the inside of a pocket or inside a bag) (e.g., Yes), the processor 120 may perform operation 1840.

In operation 1840, the processor 120 may determine whether a peak strength (e.g., a maximum strength) of the touch data exceeds a preconfigured reference value.

As a result of the determination in operation 1840, in case that the peak strength (e.g., the maximum strength) of the touch data does not exceed the preconfigured reference value (e.g., No), the processor 120 may perform operation 1845.

As a result of the determination in operation 1840, in case that the peak strength (e.g., the maximum strength) of the touch data does not exceed the preconfigured reference value (e.g., No), the processor 120 may perform operation 1845.

In operation 1845, the processor 120 may determine that the input touch is a touch (e.g., a mistouch or a touch error) in a pocket (the inside of a pocket).

In operation 1850, the processor 120 may perform a mistouch prevention operation to prevent a mistouch (e.g., prevent a mistouch processing operation from being performed) when the electronic device is located in a pocket (the inside of a pocket) (or inside a bag). For example, when performing the mistouch prevention operation, the processor 120 may perform touch determination restriction, touch sensitivity restriction, and/or a notification (e.g., display) through a user interface (UI) that restricts touch determination. For example, when performing the mistouch prevention operation, the processor 120 may turn off an operation of the display (e.g., not display a screen).

As a result of the determination in operation 1840, in case that the peak strength (e.g., the maximum strength) of the touch data does not exceed the preconfigured reference value (e.g., No), the processor 120 may perform operation 1845.

As a result of the determination in operation 1840, in case that the peak strength (e.g., the maximum strength) of the touch data exceeds the preconfigured reference value (e.g., Yes), the processor 120 may perform operation 1855.

In operation 1855, the processor 120 may determine whether the touch area (e.g., the size of the touch area) is less than a reference value.

As a result of the determination in operation 1855, in case that the touch area (e.g., the size of the touch area) is not less than the reference value (e.g., not a small-area touch but a large-area touch) (e.g., No), the processor 120 may perform operation 1845.

For example, a case where the touch area (e.g., the size of the touch area) is less than the reference value may be defined as a small-area touch.

For example, a case where the touch area (e.g., the size of the touch area) is not less than the reference value may be defined as a large-area touch.

As a result of the determination in operation 1855, in case that the touch area (e.g., the size of the touch area) is less than the reference value (e.g., a small-area touch) (e.g., Yes), the processor 120 may perform operation 1860.

In operation 1860, the processor 120 may determine whether a shape of the touch area is a predefined shape (e.g., a circular shape, an oval shape, or a shape having a certain curvature).

As a result of the determination in operation 1860, in case that the shape of the touch area is a predefined shape (e.g., a circular shape, an oval shape, or a shape having a certain curvature) (e.g., Yes), the processor 120 may perform operation 1825.

As a result of the determination in operation 1860, in case that the shape of the touch area is not a predefined shape (e.g., a circular shape, an oval shape, or a shape having a certain curvature) (e.g., No), the processor 120 may perform operation 1845.

In operation 1845, the processor 120 may determine that the input touch is a touch (e.g., a mistouch or a touch error) in a pocket (the inside of a pocket).

In operation 1850, the processor 120 may perform a mistouch prevention operation to prevent a mistouch (e.g., prevent a mistouch processing operation from being performed) when the electronic device is located in a pocket (the inside of a pocket) (or inside a bag).

According to an embodiment, the processor (e.g., the processor 120 in FIG. 8) may be operatively connected to the memory (e.g., the memory 130 in FIG. 8). For example, the memory 130 may include instructions for executing the processor 120, the display driver IC (e.g., the display driver IC 830 in FIG. 8), and the touch sensor IC (e.g., the touch sensor IC 853 in FIG. 8). For example, the memory 130 may include a computing program. The computing program may include instructions for executing the processor 120, the display driver IC (e.g., the display driver IC 830 in FIG. 8), and the touch sensor IC (e.g., the touch sensor IC 853 in FIG. 8).

According to an embodiment, the operations illustrated in FIG. 18 may be performed by the electronic device loading instructions stored in the memory 130. For example, the operations illustrated in FIG. 18 may be performed by the processor 120 loading instructions stored in the memory 130. For example, the operations illustrated in FIG. 18 may be performed by the touch sensor IC 853 loading instructions stored in the memory 130. For example, the operations illustrated in FIG. 18 may be performed sequentially, or at least some of the operations may be performed in parallel.

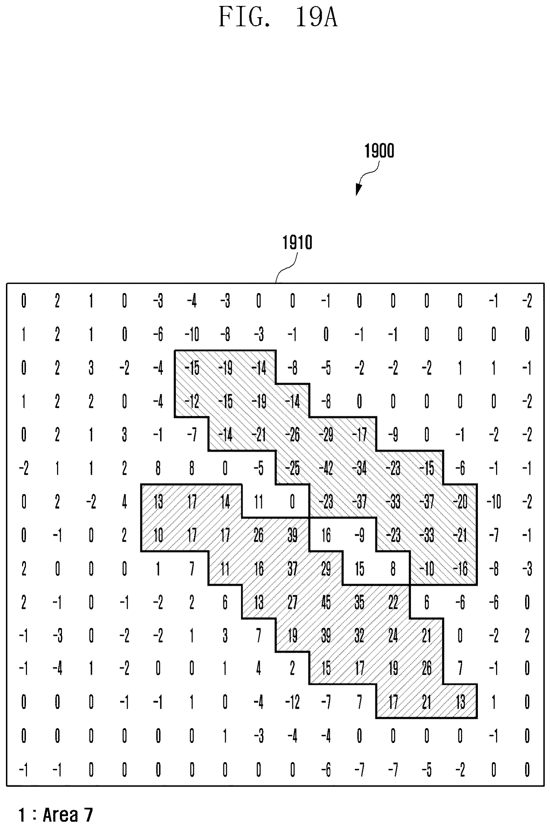

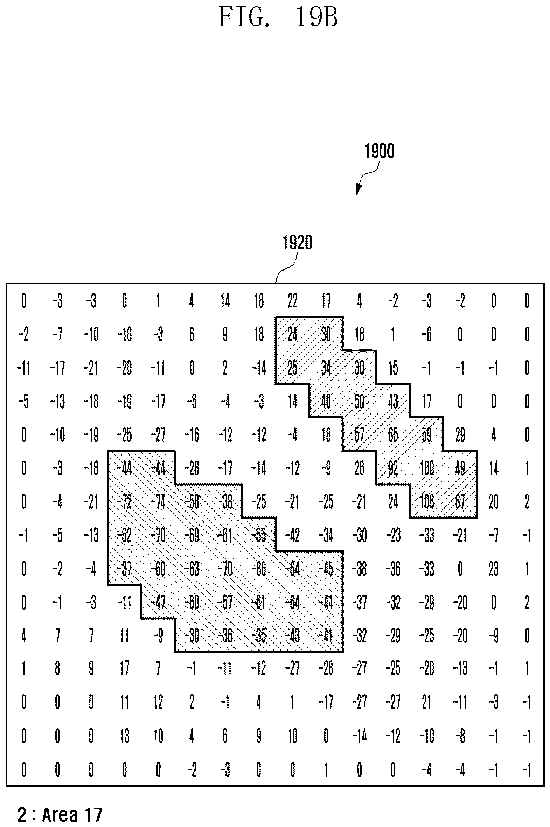

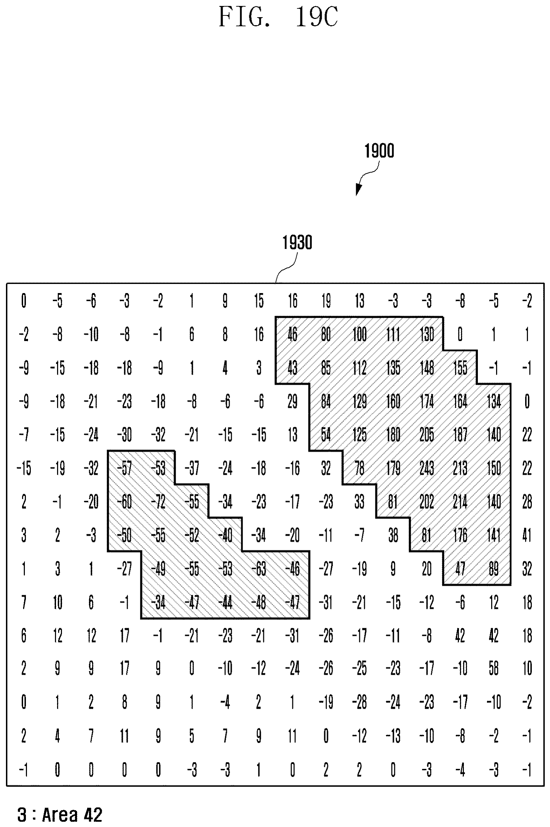

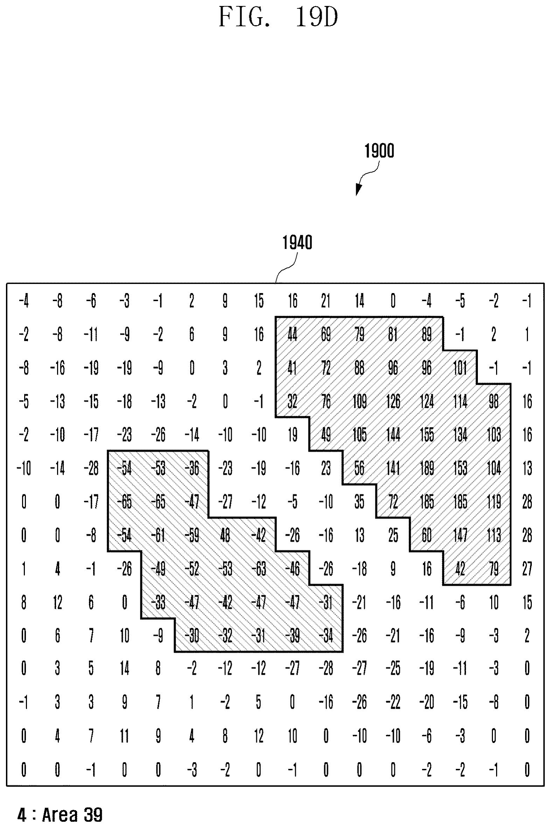

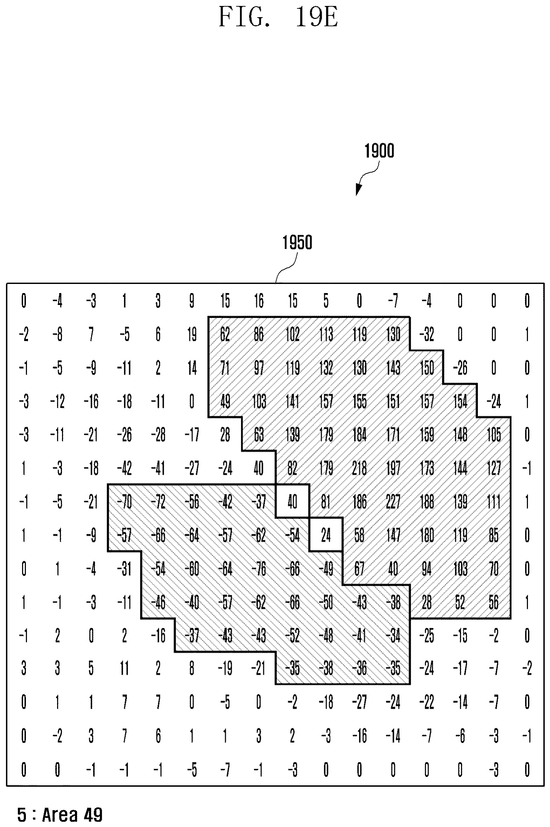

FIGS. 19A to 19F are views 1900 illustrating determining of touch characteristics according to an amount of change in a touch area over multiple frames.

Referring to FIG. 19A to 19E, the electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, the electronic device 2400 in FIG. 24, or the electronic device 2400 in FIG. 25) according to an embodiment of the disclosure may determine whether an input touch is a finger touch or a mistouch in a pocket (or in a bag). The electronic device may perform touch processing according to a finger touch input or perform a mistouch prevention operation, depending on the determination result of whether the input touch is a finger touch or a mistouch in a pocket (or in a bag).

According to an embodiment, the processor (e.g., processor 120 in FIG. 8) may acquire a change amount in the size of a touch area over multiple frames (e.g., 5 touch frames). Here, a frame is a touch frame for acquiring touch data, and one frame (e.g., 1 touch frame) may be configured to 8 ms.

According to an embodiment, when the electronic device is located in a pocket (the inside of a pocket), a large-area touch area may be sensed due to the touch of the display (e.g., display 810 in FIG. 8) and a body part (e.g., a thigh or buttocks) of the user. In addition, the change amount in the size of the touch area may vary greatly between adjacent frames (e.g., adjacent touch frames).

For example, if the size of the touch area of a first frame 1910 is "7" and the size of the touch area of a second frame 1920 is "17", the change amount in the size of the touch area between the first frame 1910 and the second frame 1920 may be "10". For example, if the size of the touch area of the second frame 1920 is "17" and the size of the touch area of a third frame 1930 is "42", the change amount in the size of the touch area between the second frame 1920 and the third frame 1930 may be "25". For example, if the size of the touch area of the third frame 1930 is "42" and the size of the touch area of a fourth frame 1940 is "39", the change amount in the size of the touch area between the third frame 1930 and the fourth frame 1940 may be "-3". For example, if the size of the touch area of the fourth frame 1940 is "39" and the size of the touch area of a fifth frame 1950 is "49", the change amount in the size of the touch area between the fourth frame 1940 and the fifth frame 1950 may be "10".

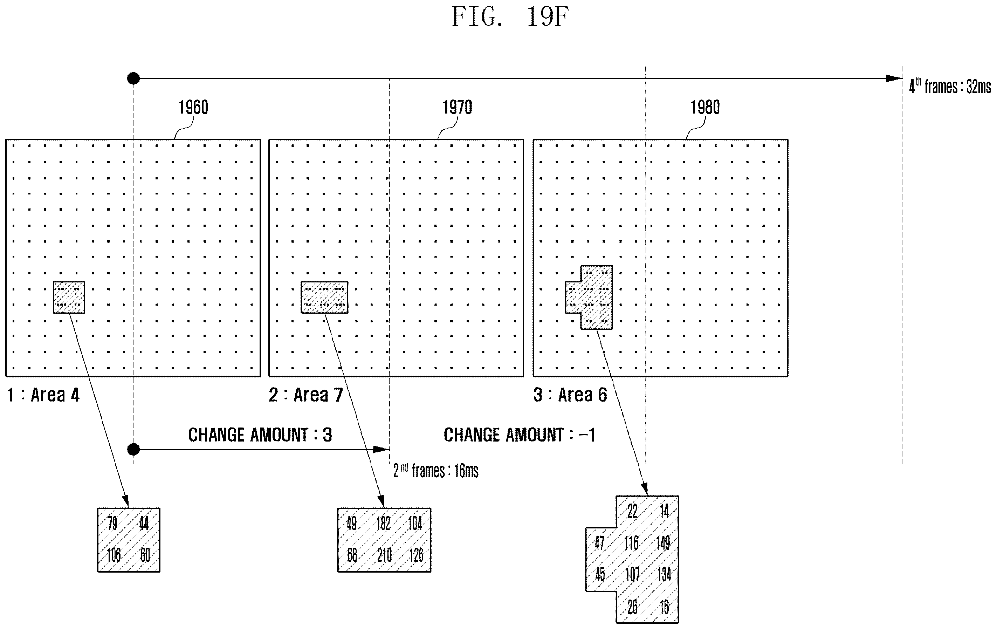

Referring to FIG. 19F, when the user touches the display (e.g., the display 810 in FIG. 8) with a finger, a small area of the touch area may be sensed. In addition, the change amount in the size of the touch area may vary slightly between adjacent frames (e.g., adjacent touch frames).

For example, if the size of the touch area of a first frame 1960 is "4" and the size of the touch area of a second frame 1970 is "7", the change amount in the size of the touch area between the first frame 1960 and the second frame 1970 may be "3".

For example, if the size of the touch area of the second frame 1970 is "7" and the size of the touch area of a third frame 1980 is "6", the change amount in the size of the touch area between the second frame 1970 and the third frame 1980 may be "1".

According to an embodiment, in order to distinguish between a finger touch and a mistouch in a pocket (or in a bag), the processor 120 may calculate a difference value of a touch area size (Area(Idi)) (e.g., a change amount in the touch area size) between a current frame (frame N) and a previous frame (frame N-1) using Equation 1. The processor 120 may determine whether the difference value of the touch area size (Area(Idi)) (e.g., the change amount in the touch area size) between frames is less than or equal to a preconfigured reference value (e.g., a stable approaching threshold).

[Equation 1]
$$\text{Area (ID i)}_{frame\ N} - \text{Area (ID i)}_{frame\ N-1} \leq \text{Stable Approaching Threshold}$$

For example, in case that the difference value of the touch area size (Area(Idi)) (e.g., the change amount in the touch area size) between frames is less than or equal to the preconfigured reference value (e.g., the stable approaching threshold), the processor 120 may determine that the touch is a finger touch.

For example, in case that the difference value of the touch area size (Area(Idi)) (e.g., the change amount in the touch area size) between frames is not less than or equal to the preconfigured reference value (e.g., the stable approaching threshold), the processor 120 may determine that the touch is a mistouch in a pocket (or in a bag).

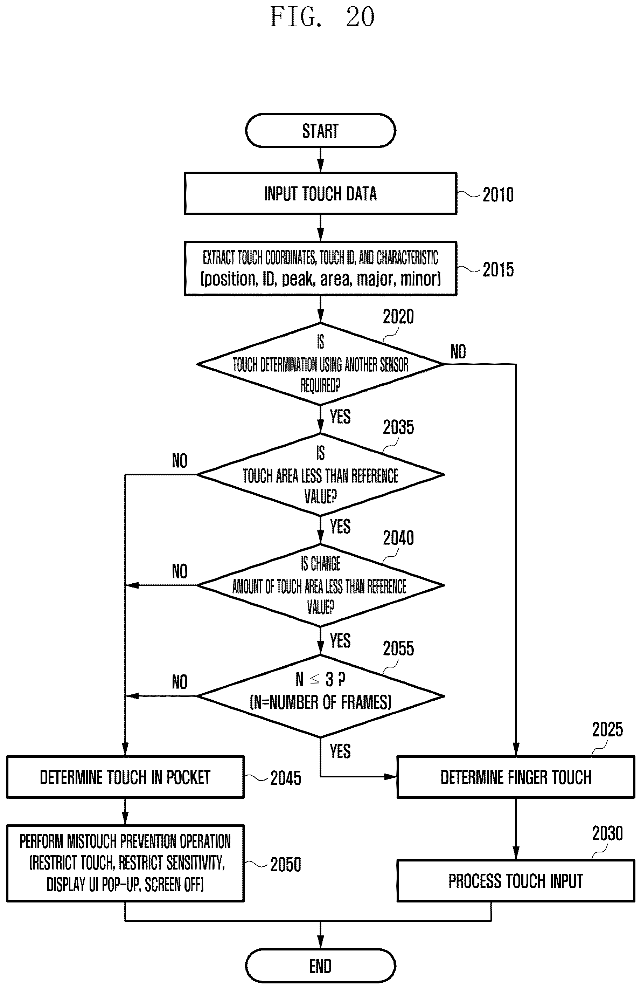

FIG. 20 is a flowchart illustrating an operating method of an electronic device according to an embodiment of the disclosure.

Referring to FIG. 20, in operation 2010, the touch sensor IC (e.g., the touch sensor IC 853 in FIG. 8) of the touch circuit (e.g., the touch circuit 850 in FIG. 8) may receive touch data from the touch sensor (e.g., the touch sensor 851 in FIG. 8).

In operation 2015, the touch sensor IC 853 may acquire (extract) touch coordinates, a touch ID, and touch characteristics based on the touch data.

In operation 2020, the processor (e.g., the processor 120 in FIG. 8) may determine whether touch determination (e.g., whether it is a finger touch or a touch in a pocket) is required using a sensor (e.g., the sensor module 880 in FIG. 8) (e.g., a proximity sensor, a illuminance sensor, a motion sensor, an acceleration sensor, or a 6-axis sensor) other than the touch sensor 851.

As a result of the determination in operation 2020, if touch determination using a sensor (e.g., the sensor module 880 in FIG. 8) (e.g., a proximity sensor, a illuminance sensor, a motion sensor, an acceleration sensor, or a 6-axis sensor) other than the touch sensor 851 is not required (e.g., No), the processor 120 may perform operation 2025.

In operation 2025, the processor 120 may determine that an input touch is a finger touch based on the touch coordinates, touch ID, and touch characteristics.

In operation 2030, the processor 120 may perform touch processing according to the finger touch input.

As a result of the determination in operation 2020, if touch determination using a sensor (e.g., the sensor module 880 in FIG. 8) (e.g., a proximity sensor, a illuminance sensor, a motion sensor, an acceleration sensor, or a 6-axis sensor) other than the touch sensor 851 is required (e.g., Yes), the processor 120 may perform operation 2035.

In operation 2035, the processor 120 may determine whether the size of the touch area is less than a reference value.

As a result of the determination in operation 2035, in case that the size of the touch area is less than the reference value (e.g., Yes), the processor 120 may perform operation 2040.

As a result of the determination in operation 2035, in case that the size of the touch area is not less than the reference value (e.g., No), the processor 120 may perform operation 2045.

In operation 2040, the processor 120 may determine whether the difference value of the touch area size (Area(Idi)) (e.g., the change amount in the touch area size) between frames is less than or equal to a preconfigured reference value (e.g., a stable approaching threshold).

As a result of the determination in operation 2040, in case that the difference value of the touch area size (Area(Idi)) (e.g., the change amount in the touch area size) between frames is not less than or equal to the preconfigured reference value (e.g., a stable approaching threshold) (e.g., No), the processor 120 may perform operation 2045.

As a result of the determination in operation 2040, in case that the difference value of the touch area size (Area(Idi)) (e.g., the change amount in the touch area size) between frames is less than or equal to the preconfigured reference value (e.g., a stable approaching threshold) (e.g., Yes), the processor 120 may perform operation 2055.

In operation 2055, the processor 120 may determine whether the number N of frames in which the difference value of the touch area size (Area(Idi)) (e.g., the change amount in the touch area size) between frames is less than or equal to the preconfigured reference value (e.g., a stable approaching threshold) is less than or equal to a reference number (e.g., 3) (N ≤ 3).

As a result of the determination in operation 2055, in case that the number (N) of frames in which the difference value of the touch area size (Area(Idi)) (e.g., the change amount in the touch area size) between frames is less than or equal to the preconfigured reference value (e.g., a stable approaching threshold) is less than or equal to the reference number (e.g., 3) (e.g., Yes), the processor 120 may perform operation 2025.

In operation 2025, the processor 120 may determine that the input touch is a finger touch. For example, the case of a finger touch may have a characteristic that the difference value of the touch area size (Area(Idi)) (e.g., the change amount in the touch area size) between frames is small (e.g., smaller than the reference value). The processor 120 may determine whether the input touch is a finger touch or a touch in a pocket based on the difference value of the touch area size (Area(Idi)) (e.g., the change amount in the touch area size) between frames.

In operation 2030, the processor 120 may perform touch processing according to the finger touch input.

As a result of the determination in operation 2055, in case that the number (N) of frames in which the difference value of the touch area size (Area(Idi)) (e.g., the change amount in the touch area size) between frames is less than or equal to the preconfigured reference value (e.g., a stable approaching threshold) is not less than or equal to the reference number (e.g., 3) (e.g., No), the processor 120 may perform operation 2045.

In operation 2045, the processor 120 may determine that the input touch is a touch (e.g., a mistouch or a touch error) in a pocket (the inside of a pocket). For example, the case of a touch in a pocket may have a characteristic that the difference value of the touch area size (Area(Idi)) between frames is large (e.g., larger than the reference value). The processor 120 may determine whether the input touch is a finger touch or a touch in a pocket based on the difference value of the touch area size (Area(Idi)) (e.g., the change amount in the touch area size) between frames.

In operation 2050, the processor 120 may perform a mistouch prevention operation to prevent a mistouch (e.g., prevent a mistouch processing operation from being performed) when the electronic device is located in a pocket (the inside of a pocket) (or inside a bag).

According to an embodiment, the processor (e.g., the processor 120 in FIG. 8) may be operatively connected to the memory (e.g., the memory 130 in FIG. 8). For example, the memory 130 may include instructions for executing the processor 120, the display driver IC (e.g., the display driver IC 830 in FIG. 8), and the touch sensor IC (e.g., the touch sensor IC 853 in FIG. 8). For example, the memory 130 may include a computing program. The computing program may include instructions for executing the processor 120, the display driver IC (e.g., the display driver IC 830 in FIG. 8), and the touch sensor IC (e.g., the touch sensor IC 853 in FIG. 8).

According to an embodiment, the operations illustrated in FIG. 20 may be performed by the electronic device loading instructions stored in the memory 130. For example, the operations illustrated in FIG. 20 may be performed by the processor 120 loading instructions stored in the memory 130. For example, the operations illustrated in FIG. 20 may be performed by the touch sensor IC 853 loading instructions stored in the memory 130. For example, the operations illustrated in FIG. 20 may be performed sequentially, or at least some of the operations may be performed in parallel.

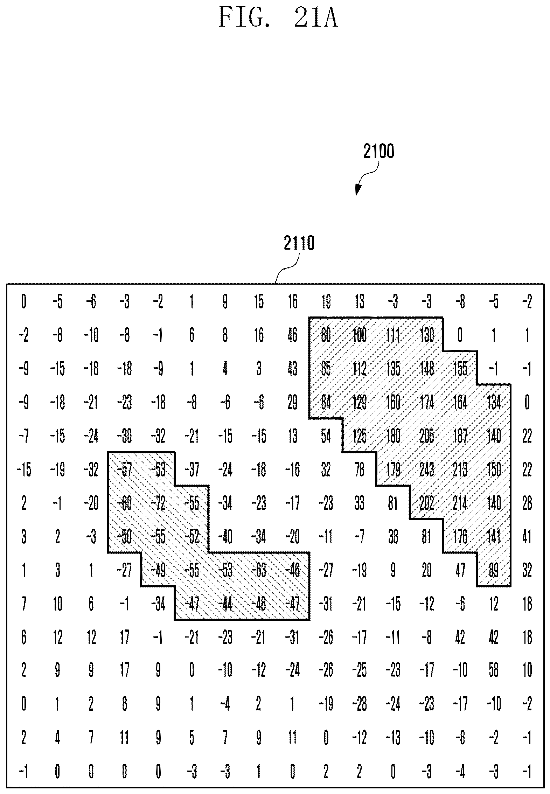

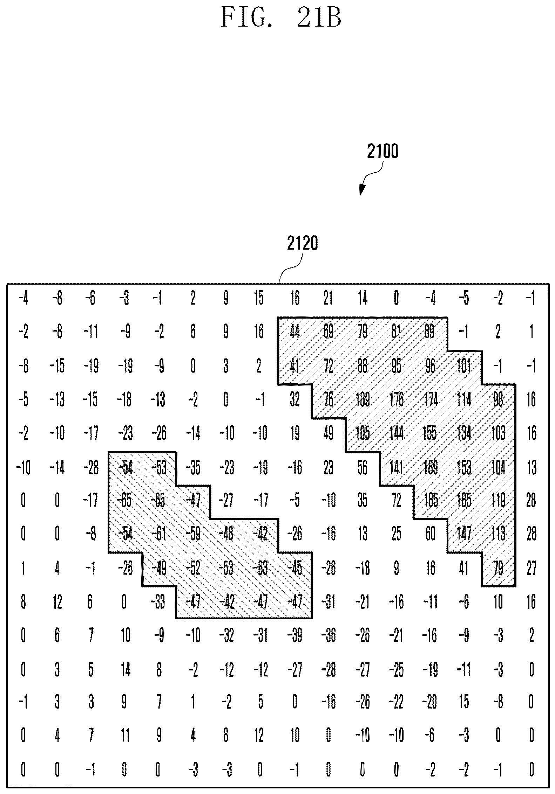

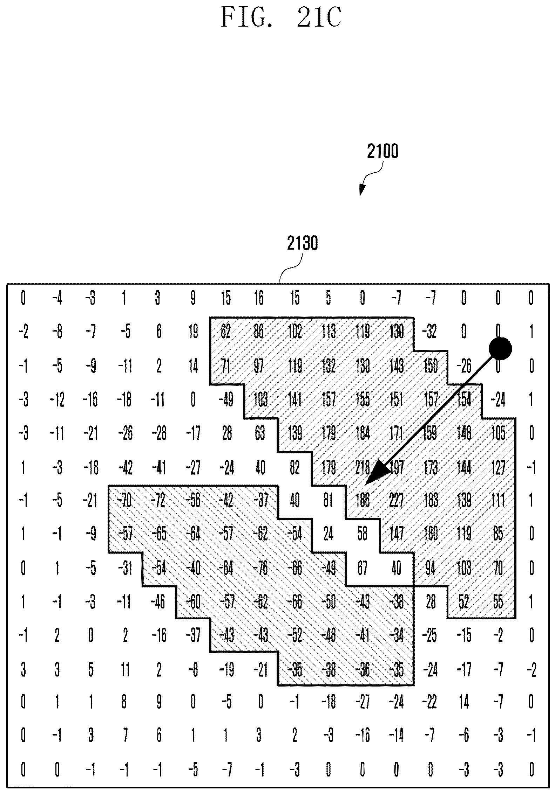

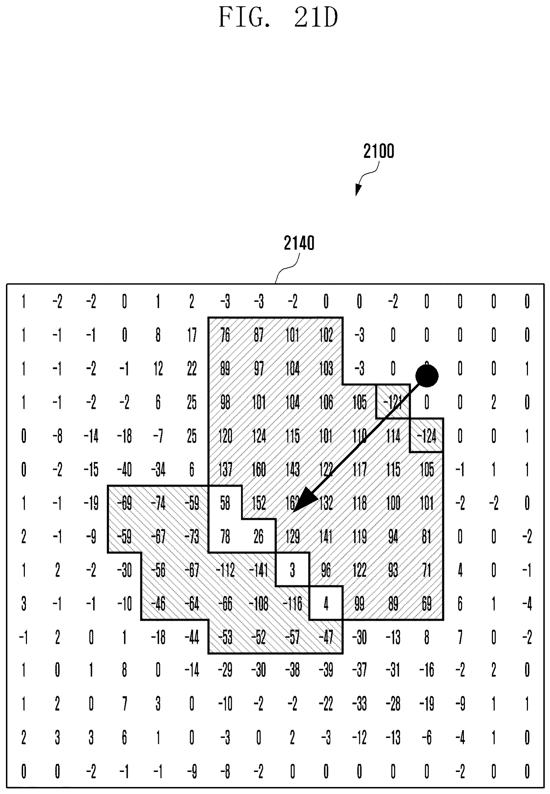

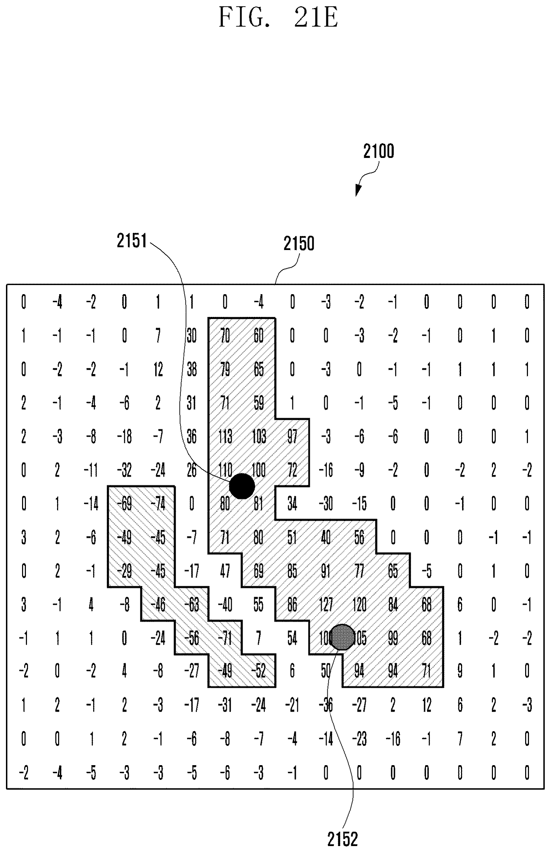

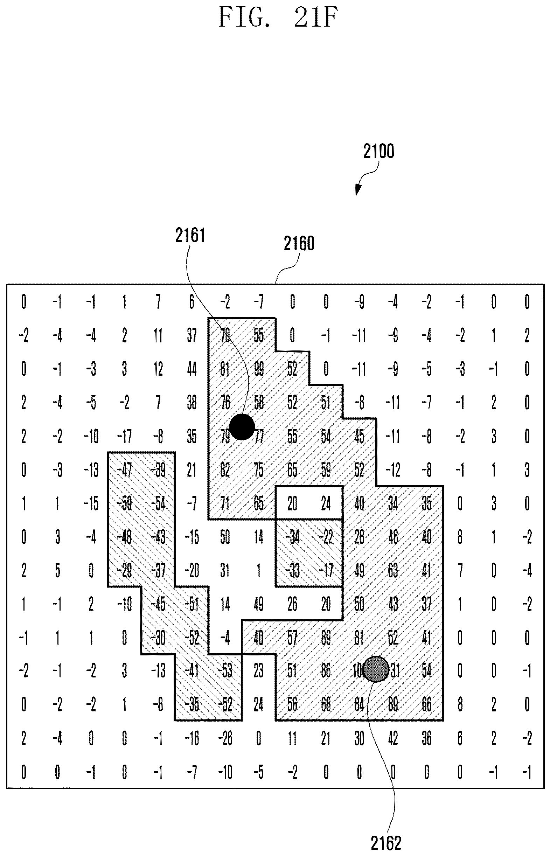

FIGS. 21A to 21F are views 2100 illustrating characteristics of touch data generated from a mistouch of a user's body (e.g., a thigh or buttocks) when an electronic device (e.g., a foldable electronic device) is located in a user's pocket (inside the pocket).

Referring to FIG. 21A to 21F, the electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, the electronic device 2400 in FIG. 24, or the electronic device 2400 in FIG. 25) according to an embodiment of the disclosure may determine whether the electronic device is taken out (e.g., released) from a pocket (or a bag). Immediately after the electronic device is taken out (e.g., released) from a pocket (or a bag), the touch processing operation may be restricted for a certain time period (e.g., 100 ms, 300 ms, 500 ms, 1000 ms, or 3000 ms). When the user moves while the electronic device is located in a pocket (the inside of a pocket), small-area touch re-input may occur (or touch noise may remain) due to the user's movement. Since small-area touches may occur (or touch noise may remain) for a certain time period immediately after the electronic device is taken out (e.g., released) from a pocket (or a bag), the mistouch prevention operation may be performed to prevent a mistouch due to the touch re-input (e.g., to prevent the mistouch processing operation from being performed).

For example, the electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, an electronic device 2400 in FIG. 24, or an electronic device 2400 in FIG. 25) may restrict touch input (e.g., restrict the touch processing operation) for a certain time period (e.g., 100 ms, 300 ms, 500 ms, 1000 ms, or 3000 ms) after being taken out of a pocket (the inside of a pocket). The electronic device may process the touch input (e.g., perform the touch processing operation) after a certain time period (e.g., 100 ms, 300 ms, 500 ms, 1000 ms, or 3000 ms) has elapsed.

For example, an operation of restricting touch input (e.g., restrict the touch processing operation) may be performed regardless of whether the operation of the display (e.g., the display 810 in FIG. 8) is turned on (e.g., a screen is displayed) or off (e.g., a screen is not displayed).

For example, when the operation of the display 810 is turned on (e.g., a screen is displayed), it is possible to use a sensor (e.g., the sensor module 880 in FIG. 8) (e.g., a proximity sensor, an illuminance sensor, a motion sensor, an acceleration sensor, or a 6-axis sensor) other than the touch sensor (e.g., the touch sensor 851 in FIG. 8) to determine whether the electronic device has been taken out of a pocket (the inside of a pocket).

For example, when the operation of the display 810 is turned off (e.g., a screen is not displayed), it is possible to determine whether the electronic device has been taken out of a pocket (the inside of a pocket) by using the touch sensor (e.g., the touch sensor 851 in FIG. 8) without using another sensor (e.g., the sensor module 880 in FIG. 8) (e.g., a proximity sensor, an illuminance sensor, a motion sensor, an acceleration sensor, or a 6-axis sensor).

According to an embodiment, when the electronic device is taken out (e.g., released) from a pocket (or bag), a small area touch re-input may occur (or touch noise remains) for a certain time period (e.g., 100 ms, 300 ms, 500 ms, 1000 ms, or 3000 ms).

For example, when the electronic device is taken out (e.g., released) from a pocket (or bag), touch data of a first frame 2110, touch data of a second frame 2120, touch data of a third frame 2130, touch data of a fourth frame 2140, touch data of a fifth frame 2150, and touch data of a sixth frame 2160 may change over time. New touch inputs 2151, 2152, 2161, and 2162 may be generated when the electronic device is taken out (e.g., released) from a pocket (or bag).

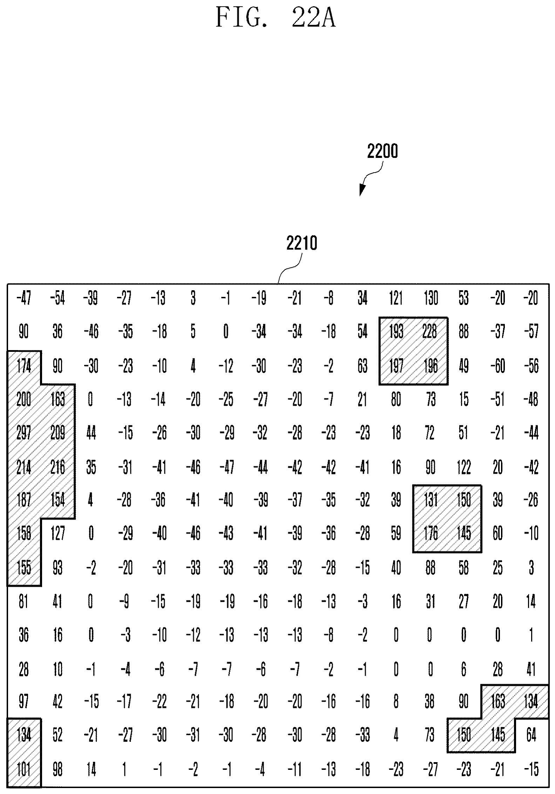

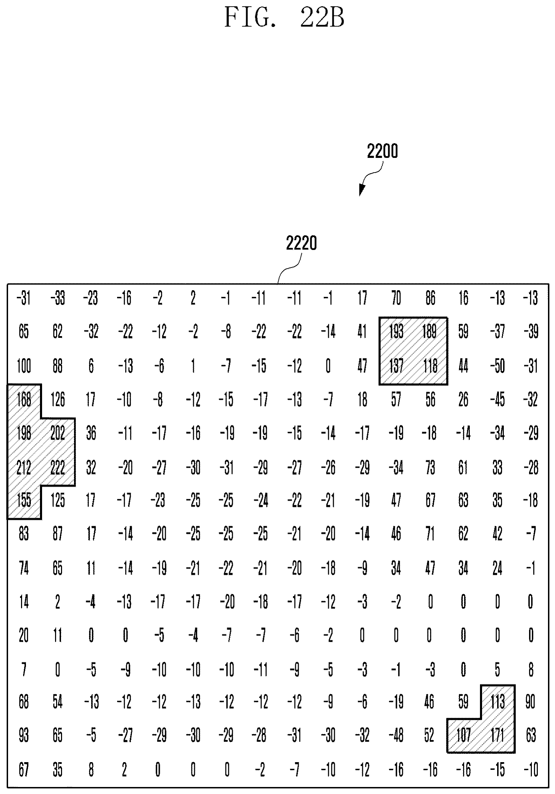

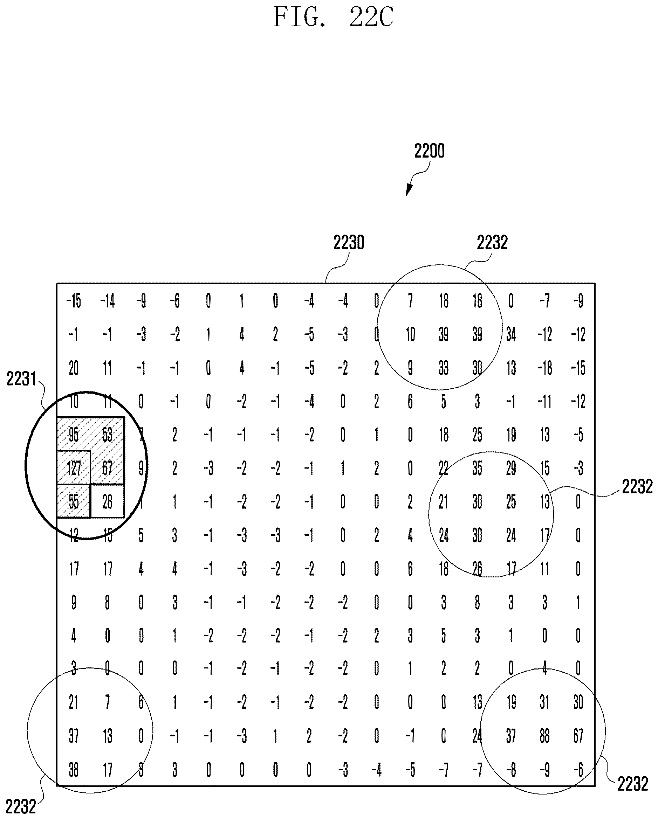

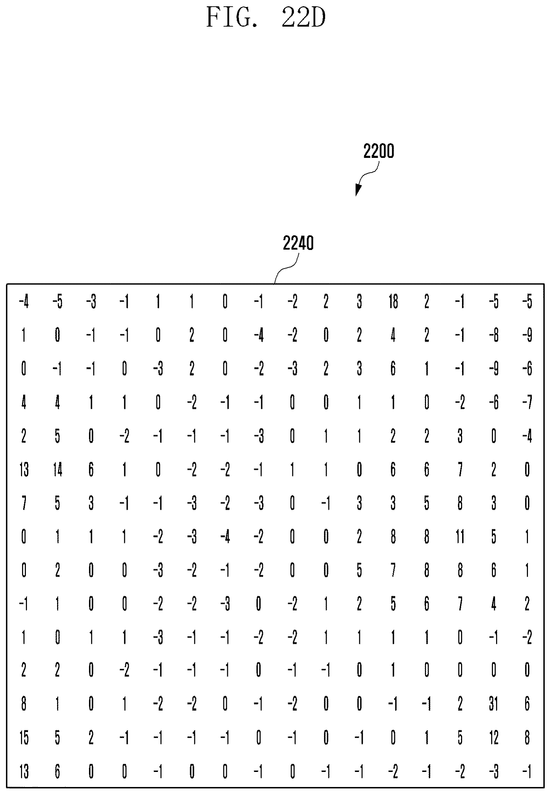

FIGS. 22A to 22D are views 2200 illustrating characteristics of touch data according to a palm touch.

Referring to FIGS. 22A to 22D, after the electronic device is taken out (e.g., released) from a pocket (or bag), when the display 810 is touched with the palm,

the touch data of the first frame 2210, the touch data of the second frame 2220, the touch data of the third frame 2230, and the touch data of the fourth frame 2240 may change over time. As the palm is lifted from the display 810, new touch inputs may be generated based on multiple small touches or residual touches.

For example, after a touch area having a large area is generated on the display 810 by the palm, even if the palm is lifted from the display 810, the touch input may remain for a certain time period as the size of the touch area 2231 is reduced.

For example, after a touch area having a large area is generated on the display 810 by the palm, even if the palm is lifted from the display 810, the touch area 2232 having a large area may remain for a certain time period, or small-scale new touch inputs may be generated.

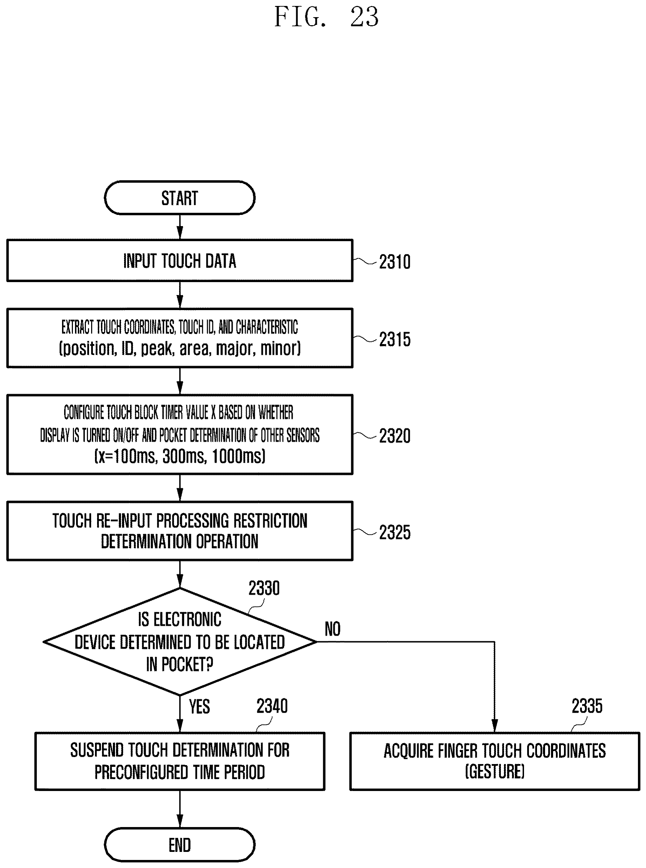

FIG. 23 is a flowchart illustrating an operating method of an electronic device according to an embodiment of the disclosure.

Referring to FIG. 23, in operation 2310, the touch sensor IC (e.g., the touch sensor IC 853 in FIG. 8) of the touch circuit (e.g., the touch circuit 850 in FIG. 8) may receive touch data from the touch sensor (e.g., the touch sensor 851 in FIG. 8).

In operation 2315, the touch sensor IC 853 may acquire (extract) touch coordinates, a touch ID, and touch characteristics based on the touch data.

In operation 2320, for example, the processor (e.g., the processor 120 in FIG. 8) may determine whether the operation of the display (e.g., the display 810 in FIG. 8) is turned on (e.g., a screen is displayed) or off (e.g., a screen is not displayed).

For example, the processor (e.g., the processor 120 in FIG. 8) may acquire location information (e.g., whether the electronic device is located in a pocket or in a user's hand) of the electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, or the electronic device 2400 in FIGS. 24 and 25) by using a sensor (e.g., the sensor module 880 in FIG. 8) (e.g., a proximity sensor, an illuminance sensor, a motion sensor, an acceleration sensor, or a 6-axis sensor) other than the touch sensor 851.

For example, the processor (e.g., the processor 120 in FIG. 8) may configure a touch block timer value x based on whether the operation of the display (e.g., the display 810 in FIG. 8) is turned on (e.g., a screen is displayed) or off (e.g., a screen is not displayed).

For example, the processor (e.g., the processor 120 in FIG. 8) may configure a touch block timer value x based on touch determination (e.g., whether it is a touch in a pocket when the electronic device is located in the pocket or a finger touch when the electronic device is located on the user's hand) using a sensor (e.g., the sensor module 880 in FIG. 8) (e.g., a proximity sensor, an illuminance sensor, a motion sensor, an acceleration sensor, or a 6-axis sensor) other than the touch sensor 851.

For example, the touch block timer value x may be a time value configured to suspend touch determination for a certain time period.

For example, the processor 120 may configure the touch block timer value x to 100 ms, 300 ms, or 1000 ms. Without being limited thereto, the processor 120 may configure the touch block timer value x within 3000 ms.

In operation 2325, the processor 120 may perform a determination operation (e.g., initiate an operation) to limit touch re-input processing.

In operation 2330, the processor 120 may determine that the electronic device is located in a pocket (the inside of a pocket). For example, the operation described with reference to FIGS. 11 to 20 may be applied to the operation of determining whether the electronic device is located in a pocket (inside the pocket). For example, the touch determination (e.g., whether it is a touch in a pocket when the electronic device is located in the pocket or a finger touch when the electronic device is located on the user's hand) using a sensor (e.g., the sensor module 880 in FIG. 8) (e.g., a proximity sensor, an illuminance sensor, a motion sensor, an acceleration sensor, or a 6-axis sensor) other than the touch sensor 851 acquired in operation 2320 may be applied to the operation of determining whether the electronic device is located in a pocket (inside the pocket). As a result of the determination in operation 2330, in case that the electronic device is not located in a pocket (the inside of a pocket) (e.g., No), the processor 120 may perform operation 2335.

In operation 2335, the processor 120 may perform touch processing according to the finger touch input. For example, the processor 120 may acquire finger touch coordinates (e.g., a gesture) and perform touch processing according to a finger touch input.

As a result of the determination in operation 2330, in case that the electronic device is located in a pocket (the inside of a pocket) (e.g., Yes), the processor 120 may perform operation 2345.

In operation 2345, in case that the electronic device is located in a pocket (the inside of a pocket), the processor 120 may suspend touch determination (e.g., restrict touch input, or restrict touch processing).

For example, in case that the electronic device is located in a pocket (the inside of a pocket), the processor 120 may perform an operation of suspending touch determination (e.g., restricting touch input, or restricting touch processing) for a preconfigured time period (e.g., 100 ms, 300 ms, or 1000 ms). The processor 120 may maintain a state of suspending touch determination (e.g., restricting touch input, or restricting touch processing) until the preconfigured time period (e.g., 100 ms, 300 ms, or 1000 ms) has elapsed.

For example, the processor 120 may reduce the touch block timer value x by "-1" (e.g., reduce by 1 ms). The operation of reducing the touch block timer value x may be performed until a configured value (e.g., 100 ms, 300 ms, or 1000 ms) of the touch block timer value x becomes "0".

For example, when the touch block timer value x becomes "0", since a preconfigured time (e.g., 100 ms, 300 ms, or 1000 ms) has elapsed, the processor 120 may perform touch processing according to the finger touch input. For example, the processor 120 may acquire finger touch coordinates (e.g., a gesture) and perform touch processing according to a finger touch input.

For example, operations according to FIG. 23 may be performed regardless of whether the display 810 is turned on (e.g., a screen is displayed) or off (e.g., a screen is not displayed).

According to an embodiment, the processor 120 may not perform the operation of restricting the input touch processing operation when the display 810 is turned on (e.g., a screen is displayed).

According to an embodiment, the processor 120 may not perform the operation of restricting the input touch processing operation when a specific application is being executed (e.g., a game application is being executed).

According to an embodiment, the processor 120 may not apply reinforcement of a condition of touch gesture input when a specific application is being executed (e.g., a game application is being executed).

According to an embodiment, the processor (e.g., the processor 120 in FIG. 8) may be operatively connected to the memory (e.g., the memory 130 in FIG. 8). For example, the memory 130 may include instructions for executing the processor 120, the display driver IC (e.g., the display driver IC 830 in FIG. 8), and the touch sensor IC (e.g., the touch sensor IC 853 in FIG. 8). For example, the memory 130 may include a computing program. The computing program may include instructions for executing the processor 120, the display driver IC (e.g., the display driver IC 830 in FIG. 8), and the touch sensor IC (e.g., the touch sensor IC 853 in FIG. 8).

According to an embodiment, the operations illustrated in FIG. 23 may be performed by the electronic device loading instructions stored in the memory 130. For example, the operations illustrated in FIG. 23 may be performed by the processor 120 loading instructions stored in the memory 130. For example, the operations illustrated in FIG. 23 may be performed by the touch sensor IC 853 loading instructions stored in the memory 130. For example, the operations illustrated in FIG. 23 may be performed sequentially, or at least some of the operations may be performed in parallel.

FIG. 24 is a view illustrating an electronic device according to an embodiment of the disclosure, showing a sensor hub integrated and operating within a processor. FIG. 25 is a view illustrating an electronic device according to an embodiment of the disclosure, in which a processor and a sensor hub are separated from each other and operate.

Referring to FIGS. 24 and 25, the electronic device 2400 (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, or the electronic device 800 in FIG. 8) according to an embodiment of the disclosure may include a display module (e.g., the display module 160 in FIG. 1 or the display module 160 in FIG. 8), a processor 2420 (e.g., the processor 120 in FIG. 1 or the processor 120 in FIG. 8), a memory 2430 (e.g., the memory 130 in FIG. 1 or the memory 130 in FIG. 8), a touch sensor (e.g., the touch sensor 851 in FIG. 8), a touch sensor IC 2410 (e.g., the touch sensor IC 853 in FIG. 8), a sensor module 2440 (e.g., the sensor module 176 in FIG. 1 or the sensor module 880 in FIG. 8). For example, the electronic device 2400 may be at least partially similar to the electronic device 101 in FIG. 1 or may further include other embodiments of the electronic device. For example, the electronic device 2400 may be at least partially similar to the electronic device 800 in FIG. 8 or may further include other embodiments of the electronic device.

For example, the sensor module 2440 may include a gyro sensor 2441, a proximity sensor 2442, and an illuminance sensor 2443. Without limitation thereto, the sensor module 2440 may include at least one of a gesture sensor, a grip sensor, an ultrasonic sensor, a distance detection sensor (e.g., a time of flight (TOF) sensor, a light detection and ranging (LiDAR) sensor), a barometric pressure sensor, a magnetic sensor (e.g., a 6-axis sensor or a geomagnetic sensor), an acceleration sensor, and/or a motion sensor.

For example, the processor 2420 may be operatively connected to the display module 160 and control the operation of the display module 160.

For example, the processor 2420 may be operatively connected to the touch sensor IC 2410 and control the operation of the touch sensor IC 2410.

For example, the processor 2420 may be operatively connected to the sensor module 2440 and control the operation of the sensor module 2440.

According to an embodiment, the processor 2420 may include a central processing unit (CPU) 2421 (e.g., the main processor 121 in FIG. 1) (e.g., a core processor), and a sensor hub 2422 (e.g., the auxiliary processor 123 in FIG. 1).

For example, the sensor hub 2422 may be integrated with and disposed in the processor 2420.

For example, the processor 2420 and the sensor hub 2422 may be arranged separately.

For example, the sensor hub 2422 and the touch sensor IC 2410 may be connected via the processor 2420.

For example, the sensor hub 2422 and the touch sensor IC 2410 may be directly connected without going through the processor 2420.

According to an embodiment, when the operation of the display (e.g., the display 810 in FIG. 8) is turned on (e.g., a screen is displayed), the processor 120 may acquire sensing information of sensors disposed in the sensor module 2440. When the operation of the display (e.g., the display 810 in FIG. 8) is turned on (e.g., a screen is displayed), the processor 120 may utilize sensing information of sensors disposed in the sensor module 2440. For example, when the operation of the display (e.g., the display 810 in FIG. 8) is turned off, the processor 120 may not acquire sensing information of sensors disposed in the sensor module 2440. When the operation of the display (e.g., the display 810 in FIG. 8) is turned off, the processor 120 may not utilize sensing information of sensors disposed in the sensor module 2440.

For example, when the operation of the display (e.g., the display 810 in FIG. 8) is turned off (e.g., a screen is not displayed), the sensing information of the sensors arranged in the sensor module 2440 may not be utilized, and thus the processor 120 may determine whether a touch is a finger touch or a touch in a pocket (the inside of a pocket) by using the touch data input from the touch IC 2410. For example, when the operation of the display (e.g., the display 810 in FIG. 8) is turned off (e.g., a screen is not displayed), the processor 120 may wake up so that the processor 120 may operate the sensor module 2440 to determine whether the touch is a finger touch or a touch in a pocket (the inside of a pocket) by using the sensing information of the sensors.

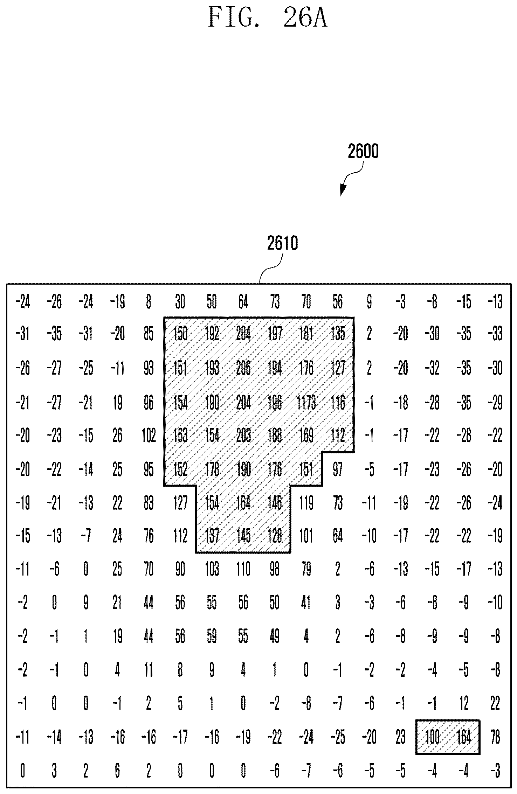

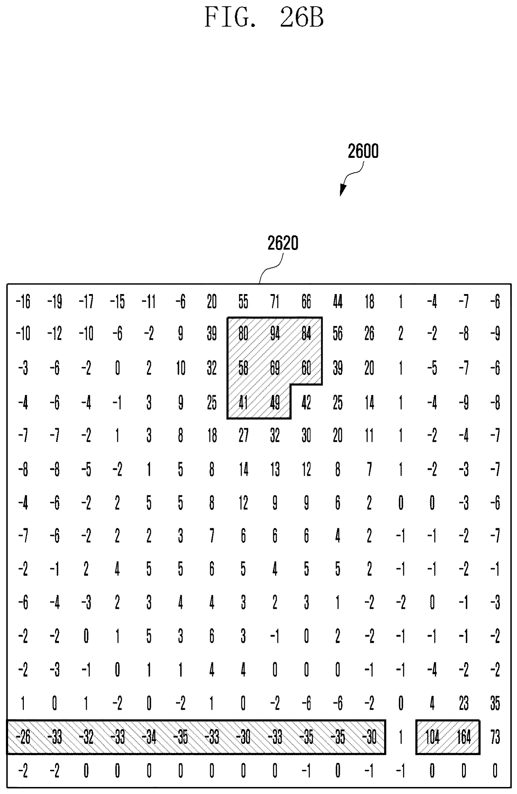

FIGS. 26A to 26B are views 2600 illustrating characteristics of large-area touch due to a mistouch of a user's body (e.g., a thigh or buttocks) and examples of small-area touch re-input occurring when an electronic device (e.g., a foldable electronic device) is located in a user's pocket (the inside of a pocket).

Referring to FIG. 26A, when the electronic device (e.g., a foldable electronic device) is located in a user's pocket (the inside of a pocket), a touch may be made by the user's body (e.g., a thigh or a buttocks). For example, a large-area touch input 2610 may be generated by a touch in a pocket (the inside of a pocket). In addition, a small-area touch re-input 2620 may occur when the electronic device (e.g., a foldable electronic device) is taken out of a user's pocket (the inside of a pocket).

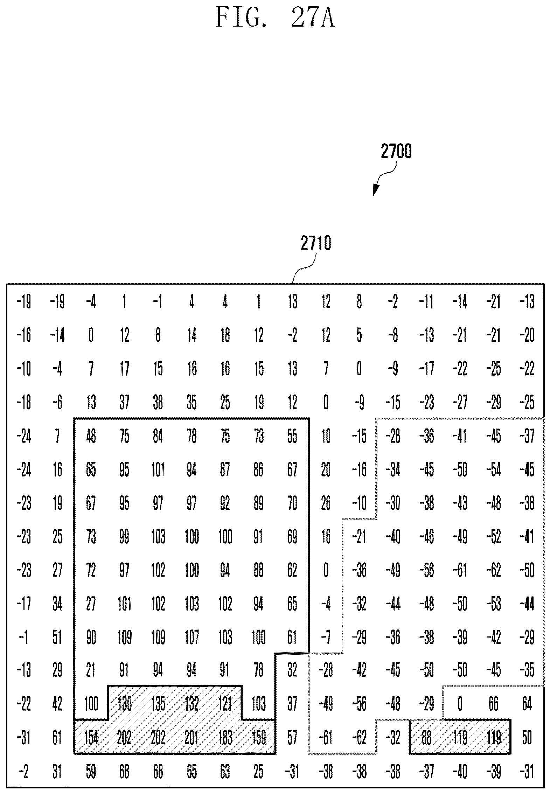

FIGS. 27A to 27B are views 2700 illustrating characteristics of large-area touch due to a mistouch of a user's body (e.g., a thigh or buttocks) and examples of swipe touch re-input occurring when an electronic device (e.g., a foldable electronic device) is located in a user's pocket (the inside of a pocket).

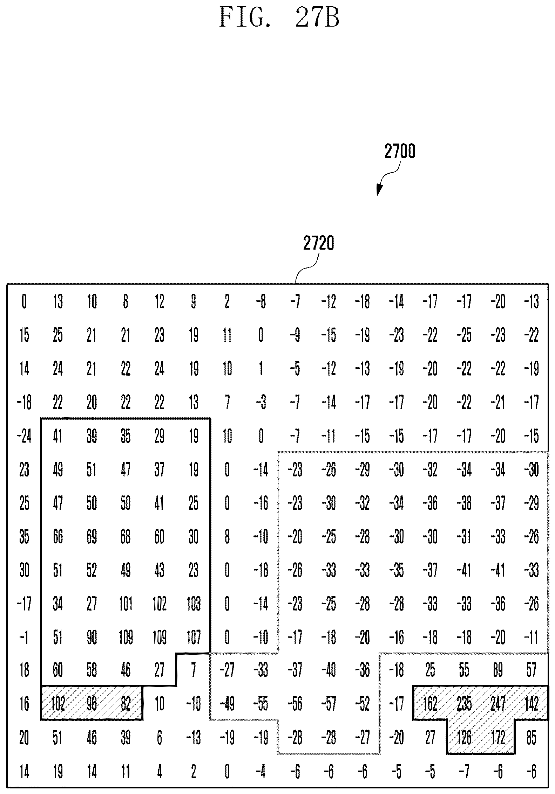

Referring to FIGS. 27A and 27B, when the electronic device (e.g., a foldable electronic device) is located in a user's pocket (the inside of a pocket), a touch may be made by the user's body (e.g., a thigh or a buttocks). For example, a touch input 2710 of a touch swipe may be generated by a touch in a pocket (the inside of a pocket). In addition, a re-input 2720 of a touch swipe may occur when the electronic device (e.g., a foldable electronic device) is taken out of a user's pocket (the inside of a pocket).

The electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, or the electronic device 2400 in FIGS. 24 and 25) according to an embodiment of the disclosure may restrict an input touch processing operation for a predetermined time period (e.g., 1000 ms, 2000 ms, or 3000 ms) after the electronic device is taken out of a pocket (the inside of a pocket).

According to an embodiment, after the electronic device is taken out of a pocket (the inside of a pocket), small-area touch inputs may be generated or previous residual touches may remain for a predetermined time period (e.g., 1000 ms, 2000 ms, or 3000 ms), and in this case, mistouches need to be prevented. To this end, after the electronic device is taken out of a pocket (the inside of a pocket), a condition for touch gesture input may be reinforced for a predetermined time period (e.g., 1000 ms, 2000 ms, 3000 ms), to prevent mistouches due to re-input of touches.

According to an embodiment, the processor 120 may perform the operation of restricting the input touch processing operation when the display 810 is turned off (e.g., a screen is not displayed).

According to an embodiment, the processor 120 may not perform the operation of restricting the input touch processing operation when the display 810 is turned on (e.g., a screen is displayed).

According to an embodiment, the processor 120 may not perform the operation of restricting the input touch processing operation when a specific application is being executed (e.g., a game application is being executed).

According to an embodiment, the processor 120 may not apply reinforcement of a condition of touch gesture input when a specific application is being executed (e.g., a game application is being executed).

According to an embodiment, the processor 120 may change a condition for double-tap (e.g., consecutive touches) input to wake up the electronic device after the electronic device is taken out of the pocket (out of the pocket).

For example, the processor 120 may adjust an interval (e.g., time) between double taps (e.g., consecutive touches) to wake up the electronic device from 600 ms to 400 ms (600 ms - > 400 ms).

For example, the processor 120 may adjust an effective time between double taps (e.g., consecutive touches) to wake up the electronic device from 600 ms to 400 ms (600 ms -> 400 ms).

For example, the processor 120 may adjust a major touch size of double taps (e.g., consecutive touches) to wake up the electronic device from 84 to 42 (double tap touch major size 84 -> 42).

According to an embodiment, the processor 120 may restrict the touch processing of a double-tap (e.g., consecutive touch) (e.g., restrict occurrence of a double-tap event) for a predetermined time period (e.g., 1000 ms, 2000 ms, or 3000 ms) after the electronic device is taken out of a pocket (the inside of a pocket).

According to an embodiment, the processor 120 may restrict to perform touch processing of a touch swipe (e.g., suspend to perform touch processing of a touch swipe) after the electronic device is taken out of a pocket (the inside of a pocket).

For example, the processor 120 may restrict to perform touch processing of a touch swipe (e.g., suspend to perform touch processing of a touch swipe) for a predetermined time period (e.g., 1000 ms, 2000 ms, or 3000 ms) after the electronic device is taken out of a pocket (the inside of a pocket).

For example, the processor 120 may reduce a start area of a touch swipe for a predetermined time period (e.g., 1000 ms, 2000 ms, or 3000 ms) after the electronic device is taken out of a pocket (the inside of a pocket). The processor 120 may reduce the start area of a touch swipe from 10 mm to 5 mm (10 mm -> 5 mm).

For example, the processor 120 may increase a length of a touch swipe for a predetermined time period (e.g., 1000 ms, 2000 ms, or 3000 ms) after the electronic device is taken out of a pocket (the inside of a pocket). The processor 120 may increase a length of a touch swipe from 25 mm to 35 mm (25 mm -> 35 mm).

In the electronic device (e.g., the electronic device 800 in FIG. 8 or the electronic device 2400 in FIGS. 24 and 25) according to an embodiment of the disclosure, the processor 120 may restrict processing of a double tap (e.g., consecutive touches) and/or a touch swipe (suspending touch processing) for a predetermined time period (e.g., 1000 ms, 2000 ms, or 3000 ms) after the electronic device is taken out of the pocket so that the processor 120 may prevent a mistouch after the electronic device is taken out of a pocket.

For example, in case that touch inputs by multiple fingers are recognized, such as multiple consecutive touches (e.g., multiple double taps) or multiple swipe inputs, the possibility of touch inputs due to malfunction may be greatly reduced. In this case, the operation that restricts a touch input time or reinforces a recognition condition may be reset, and the touch input may be recognized immediately without delay.

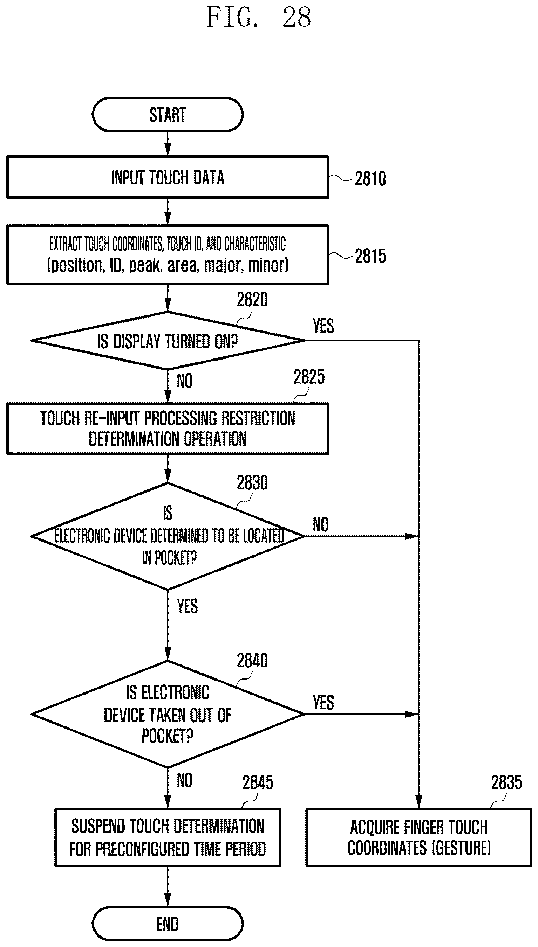

FIG. 28 is a flowchart illustrating an operating method of an electronic device according to an embodiment of the disclosure.

Referring to FIG. 28, in operation 2810, the touch sensor IC (e.g., the touch sensor IC 853 in FIG. 8) of the touch circuit (e.g., the touch circuit 850 in FIG. 8) may receive touch data from the touch sensor (e.g., the touch sensor 851 in FIG. 8).

In operation 2815, the touch sensor IC 853 may acquire (extract) touch coordinates, a touch ID, and touch characteristics based on the touch data.

In operation 2820, the processor (e.g., the processor 120 in FIG. 8) may determine a state where the operation of the display (e.g., the display 810 in FIG. 8) is turned on (e.g., a screen is displayed) or off (e.g., a screen is not displayed).

As a result of the determination in operation 2820, in case that the operation of the display 810 is turned on (e.g., a screen is displayed) (e.g., Yes), the processor 120 may perform operation 2835.

In operation 2835, the processor 120 may perform touch processing according to the finger touch input. For example, the processor 120 may acquire finger touch coordinates (e.g., a gesture) and perform touch processing according to a finger touch input.

As a result of the determination in operation 2820, in case that the operation of the display 810 is turned off (e.g., a screen is not displayed) (e.g., No), the processor may perform operation 2825.

In operation 2825, the processor 120 may perform a determination operation (e.g., initiate an operation) to limit touch re-input processing.

In operation 2830, the processor 120 may determine whether the electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, or the electronic device 2400 in FIGS. 24 and 25) is located in a pocket (the inside of a pocket). For example, the operation described with reference to FIGS. 11 to 20 may be applied to the operation of determining whether the electronic device is located in a pocket (inside the pocket). For example, the touch determination (e.g., whether it is a touch in a pocket when the electronic device is located in the pocket or a finger touch when the electronic device is located on the user's hand) using a sensor (e.g., the sensor module 880 in FIG. 8) (e.g., a proximity sensor, an illuminance sensor, a motion sensor, an acceleration sensor, or a 6-axis sensor) other than the touch sensor 851 may be applied to the operation of determining whether the electronic device is located in a pocket (inside the pocket).

As a result of the determination in operation 2830, in case that the electronic device is not located in a pocket (the inside of a pocket) (e.g., No), the processor 120 may perform operation 2835.

In operation 2835, the processor 120 may perform touch processing according to the finger touch input. For example, the processor 120 may acquire finger touch coordinates (e.g., a gesture) and perform touch processing according to a finger touch input.

As a result of the determination in operation 2830, in case that the electronic device is located in a pocket (the inside of a pocket) (e.g., Yes), the processor 120 may perform operation 2840.

In operation 2840, the processor 120 may determine that the electronic device is taken out of a pocket (the inside of a pocket). For example, the operation described with reference to FIGS. 11 to 20 may be applied to the operation of determining whether the electronic device is located in a pocket (inside the pocket). For example, the touch determination (e.g., whether it is a touch in a pocket when the electronic device is located in the pocket or a finger touch when the electronic device is located on the user's hand) using a sensor (e.g., the sensor module 880 in FIG. 8) (e.g., a proximity sensor, an illuminance sensor, a motion sensor, an acceleration sensor, or a 6-axis sensor) other than the touch sensor 851 may be applied to the operation of determining whether the electronic device is located in a pocket (inside the pocket).

As a result of the determination in operation 2840, in case that the electronic device is taken out of a pocket (the inside of a pocket) (e.g., Yes), the processor 120 may perform operation 2835.

In operation 2835, the processor 120 may perform touch processing according to the finger touch input. For example, the processor 120 may acquire finger touch coordinates (e.g., a gesture) and perform touch processing according to a finger touch input.

As a result of the determination in operation 2840, in case that the electronic device is not taken out of a pocket (the inside of a pocket) (e.g., No) (e.g., in case that the electronic device is located in a pocket), the processor 120 may perform operation 2845.

In operation 2845, in case that the electronic device is located in a pocket (the inside of a pocket), the processor 120 may perform an operation of suspending touch determination (e.g., restricting touch input, or restricting touch processing).

For example, in case that the electronic device is located in a pocket (the inside of a pocket), the processor 120 may configure the touch block timer value x to 100 ms, 300 ms, or 1000 ms. The processor 120 may perform an operation of suspending touch determination (e.g., restricting touch input or restricting touch processing) for a preconfigured time period (e.g., 100 ms, 300 ms, or 1000 ms). Without being limited thereto, the processor 120 may configure the touch block timer value x within 3000 ms. For example, the processor 120 may maintain a state of suspending touch determination (e.g., restricting touch input, or restricting touch processing) until the preconfigured time period (e.g., 100 ms, 300 ms, or 1000 ms) has elapsed.

For example, the processor 120 may reduce the touch block timer value x by "-1" (e.g., reduce by 1 ms). The operation of reducing the touch block timer value x may be performed until a configured value (e.g., 100 ms, 300 ms, or 1000 ms) of the touch block timer value x becomes "0".

For example, when the touch block timer value x becomes "0", since a preconfigured time (e.g., 100 ms, 300 ms, or 1000 ms) has elapsed, the processor 120 may perform touch processing according to the finger touch input. For example, the processor 120 may acquire finger touch coordinates (e.g., a gesture) and perform touch processing according to a finger touch input.

According to an embodiment, when the display 810 is turned on (e.g., a screen is displayed), an operation of suspending touch determination (e.g., restricting touch input, or restricting touch processing) may not be performed.

According to an embodiment, when the display 810 is turned off (e.g., a screen is not displayed), an operation of suspending touch determination (e.g., restricting touch input, or restricting touch processing) may be performed.

According to an embodiment, when the display 810 is turned off (e.g., a screen is not displayed), the processor 120 may adjust an interval (e.g., time) between double taps (e.g., consecutive touches) to wake up the electronic device from 600 ms to 400 ms (600 ms -> 400 ms).

According to an embodiment, when the display 810 is turned off (e.g., a screen is not displayed), the processor 120 may adjust an effective time between double taps (e.g., consecutive touches) to wake up the electronic device from 600 ms to 400 ms (600 ms -> 400 ms).

According to an embodiment, when the display 810 is turned off (e.g., a screen is not displayed), the processor 120 may adjust a major touch size of double taps (e.g., consecutive touches) to wake up the electronic device from 84 to 42 (double tap touch major size 84 -> 42).

According to an embodiment, the processor 120 may reduce a minimum recognition sensitivity.

According to an embodiment, the processor 120 may restrict the touch processing of a double-tap (e.g., consecutive touches) (e.g., restrict occurrence of a double-tap event) for a predetermined time period (e.g., 1000 ms, 2000 ms, or 3000 ms) in case that the display 810 is turned off (e.g., a screen is not displayed) after the electronic device is taken out of a pocket (the inside of a pocket).

According to an embodiment, the processor 120 may restrict to perform touch processing of a touch swipe (e.g., suspend to perform touch processing of a touch swipe) in case that the display 810 is turned off (e.g., a screen is not displayed) after the electronic device is taken out of a pocket (the inside of a pocket).

According to an embodiment, the processor 120 may restrict to perform touch processing of a touch swipe (e.g., suspend to perform touch processing of a touch swipe) for a predetermined time period (e.g., 1000 ms, 2000 ms, or 3000 ms) in case that the display 810 is turned off (e.g., a screen is not displayed) after the electronic device is taken out of a pocket (the inside of a pocket).

According to an embodiment, the processor 120 may reduce a start area of a touch swipe for a predetermined time period (e.g., 1000 ms, 2000 ms, or 3000 ms) in case that the display 810 is turned off (e.g., a screen is not displayed) after the electronic device is taken out of a pocket (the inside of a pocket). The processor 120 may reduce the start area of a touch swipe from 10 mm to 5 mm (10 mm -> 5 mm).

According to an embodiment, the processor 120 may increase a length of a touch swipe for a predetermined time period (e.g., 1000 ms, 2000 ms, or 3000 ms) in case that the display 810 is turned off (e.g., a screen is not displayed) after the electronic device is taken out of a pocket (the inside of a pocket). The processor 120 may increase a length of a touch swipe from 25 mm to 35 mm (25 mm -> 35 mm).

According to an embodiment, operations according to FIG. 28 may be performed regardless of whether the display 810 is turned on (e.g., a screen is displayed) or off (e.g., a screen is not displayed).

The electronic device (e.g., the electronic device 800 in FIG. 8 or the electronic device 2400 in FIGS. 24 and 25) according to an embodiment of the disclosure may restrict processing of a double tap (e.g., consecutive touches) and/or a touch swipe (suspending touch processing) for a predetermined time period (e.g., 1000 ms, 2000 ms, or 3000 ms) after the electronic device is taken out of the pocket to prevent a mistouch after the electronic device is taken out of a pocket.

According to an embodiment, the processor (e.g., the processor 120 in FIG. 8) may be operatively connected to the memory (e.g., the memory 130 in FIG. 8). For example, the memory 130 may include instructions for executing the processor 120, the display driver IC (e.g., the display driver IC 830 in FIG. 8), and the touch sensor IC (e.g., the touch sensor IC 853 in FIG. 8). For example, the memory 130 may include a computing program. The computing program may include instructions for executing the processor 120, the display driver IC (e.g., the display driver IC 830 in FIG. 8), and the touch sensor IC (e.g., the touch sensor IC 853 in FIG. 8).

According to an embodiment, the operations illustrated in FIG. 28 may be performed by the electronic device loading instructions stored in the memory 130. For example, the operations illustrated in FIG. 28 may be performed by the processor 120 loading instructions stored in the memory 130. For example, the operations illustrated in FIG. 28 may be performed by the touch sensor IC 853 loading instructions stored in the memory 130. For example, the operations illustrated in FIG. 28 may be performed sequentially, or at least some of the operations may be performed in parallel.

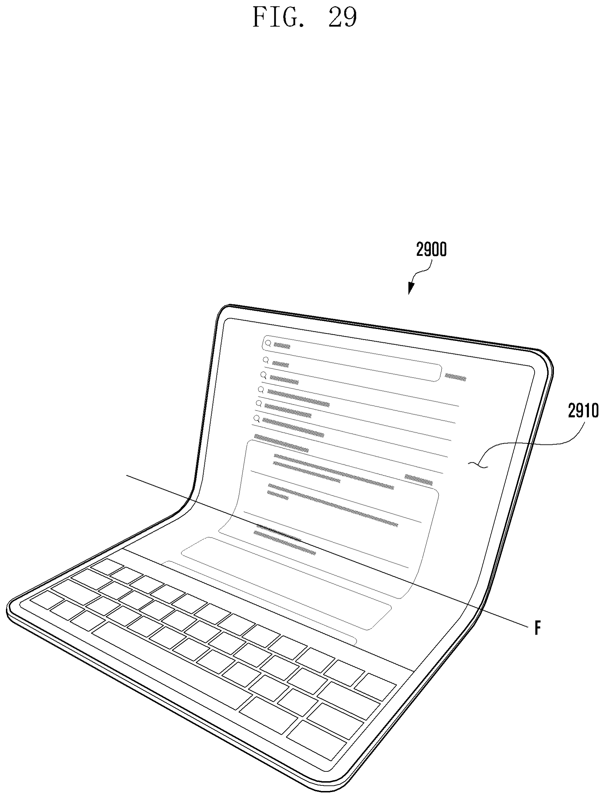

FIG. 29 is a view illustrating an example of an electronic device (e.g., a foldable notebook PC, or a foldable tablet PC) that may be used by folding or unfolding a display.

Referring to FIG. 29, the operations of the electronic device illustrated in FIG. 18, the operations of the electronic device illustrated in FIG. 20, the operations of the electronic device illustrated in FIG. 23, and the operations of the electronic device illustrated in FIG. 28 may be applied to prevent a mistouch of a foldable notebook PC or a foldable tablet PC in which a display 2910 may be folded or unfolded along a folding axis F of the electronic device 2900 to be used. In case that the electronic device 2900 is located in a pocket (the inside of a pocket) or a bag (the inside of a bag), the operations of the electronic device illustrated in FIG. 18, the operations of the electronic device illustrated in FIG. 20, the operations of the electronic device illustrated in FIG. 23, and the operations of the electronic device illustrated in FIG. 28 may be applied to prevent a mistouch.

According to an embodiment of the disclosure, an electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, the electronic device 2400 in FIG. 24, or the electronic device 2400 in FIG. 25) may include a foldable housing including a first housing part and a second housing part, an external display (e.g., the sub-display 331 in FIG. 3D or the display 810 in FIG. 8) received in the foldable housing in a first direction so as to be visible to the outside when the electronic device 101, 200, 300, 400, 500, 600, 700, 800, or 2400 is unfolded and folded, a flexible display (e.g., the flexible display 330 in FIG. 3A) received in the foldable housing in a second direction so as to be visible to the outside when the electronic device 101, 200, 300, 400, 500, 600, 700, 800, or 2400 is unfolded, a touch sensor (e.g., the touch sensor 851 in FIG. 8) disposed inside or outside the external display 331 or 810, a display driver (DDIC) (e.g., the display driver IC 830 in FIG. 8) configured to drive the external display 331 or 810 and the flexible display 330, a touch sensor driver (touch IC) (e.g., the touch sensor IC 853 in FIG. 8) configured to drive the touch sensor 851, and a processor (e.g., the processor 120 in FIG. 1 or the processor 120 in FIG. 8) configured to control operations of the display driver (DDIC) 830 and the touch sensor driver (touch IC) 853. The processor 120, when executed, may acquire touch data from the touch sensor driver (touch IC) 853 in a state where the external display 331 or 810 is turned off. The processor 120, when executed, may determine whether the electronic device 101, 200, 300, 400, 500, 600, 700, 800, or 2400 is located in a pocket based on the touch data. The processor 120, when executed, may perform a touch error prevention operation if the electronic device 101, 200, 300, 400, 500, 600, 700, 800, or 2400 has been determined to be located in a pocket, but may suspend touch determination based on touch data for a preconfigured time period.

According to an embodiment, the touch data may include touch coordinates where a touch is sensed, a touch ID for distinguishing each touch, and a touch characteristic. The touch characteristic may include information on a touch area, information on consecutive touches, information on a time interval of the consecutive touch, and information on a touch swipe. The processor 120 may determine, based on the touch coordinates, the touch ID, and the touch characteristic, whether the touch data is caused by a finger touch or a touch when the electronic device 101, 200, 300, 400, 500, 600, 700, 800, or 2400 is located in a pocket.

According to an embodiment, the processor 120 may determine whether the electronic device 101, 200, 300, 400, 500, 600, 700, 800, or 2400 has been taken out of the pocket after the preconfigured time has elapsed. The processor 120 may perform touch determination in case that the electronic device 101, 200, 300, 400, 500, 600, 700, 800, or 2400 has been taken out of a pocket.

According to an embodiment, the electronic device 101, 200, 300, 400, 500, 600, 700, 800, or 2400 may include multiple sensors configured to sense a distance to an object, brightness around the electronic device 101, 200, 300, 400, 500, 600, 700, 800, or 2400, movement of the electronic device 101, 200, 300, 400, 500, 600, 700, 800, or 2400, and a speed of the movement of the electronic device 101, 200, 300, 400, 500, 600, 700, 800, or 2400. The processor 120 may determine whether the electronic device 101, 200, 300, 400, 500, 600, 700, 800, or 2400 has been taken out of the pocket based on at least one piece of sensing data input from the multiple sensors.

According to an embodiment, in case that the electronic device 101, 200, 300, 400, 500, 600, 700, 800, or 2400 has been determined to be taken out of the pocket, the processor 120 may suspend touch determination for a preconfigured time period after the electronic device 101, 200, 300, 400, 500, 600, 700, 800, or 2400 has been taken out of a pocket.

According to an embodiment, the processor 120 may configure a touch block timer value to a predetermined time value in case that the electronic device 101, 200, 300, 400, 500, 600, 700, 800, or 2400 has been determined to be located in a pocket. The processor 120 may reduce the touch block timer value by a predetermined time unit until the touch block timer value becomes "0". When the touch block timer value becomes "0", the processor 120 may determine whether the electronic device 101, 200, 300, 400, 500, 600, 700, 800, or 2400 is located in a pocket.

According to an embodiment, the processor 120 may perform touch determination of a finger touch input in case that the electronic device 101, 200, 300, 400, 500, 600, 700, 800, or 2400 has been determined to be taken out of a pocket.

According to an embodiment, the processor 120 may suspend touch determination in case that the electronic device 101, 200, 300, 400, 500, 600, 700, 800, or 2400 has been determined to be located in a pocket.

According to an embodiment, the processor 120 may change a condition for a consecutive touch input after the electronic device 101, 200, 300, 400, 500, 600, 700, 800, or 2400 is taken out of a pocket. In this case, at least one of a minimum recognition strength, a time interval between consecutive touches, an effective time of consecutive touches, and a maximum touch size of consecutive touches may be adjusted.

According to an embodiment, the processor 120 may reduce the time interval between the consecutive touches, reduce the effective time of the consecutive touches, and reduce the maximum touch size of the consecutive touches.

According to an embodiment, the processor 120 may restrict touch processing of the consecutive touch for a predetermined time period.

According to an embodiment, the processor 120 may change a condition for a touch wipe input after the electronic device 101, 200, 300, 400, 500, 600, 700, 800, or 2400 is taken out of a pocket. Here, the processor 120 may adjust at least one of a start area of the touch swipe and a length of the touch swipe.

According to an embodiment, the processor 120 may reduce the start area of the touch swipe and reduce the length of the touch swipe.

According to an embodiment, the processor 120 may restrict touch processing of the touch swipe for a predetermined time period.

According to an embodiment, the processor 120 may perform touch determination based on the touch data without performing the touch error prevention operation when the external display 331 or 810 is turned on.

According to an embodiment, the processor 120 may perform touch determination based on the touch data without performing the touch error prevention operation when a preconfigured application is executed.

In an operating method of a foldable electronic device 101, 200, 300, 400, 500, 600, 700, 800, or 2400 according to an embodiment of the disclosure, the foldable electronic device 101, 200, 300, 400, 500, 600, 700, 800, or 2400 may include an external display 331 or 810 received in the foldable housing in a first direction so as to be visible to the outside when the electronic device 101, 200, 300, 400, 500, 600, 700, 800, or 2400 is unfolded and folded, a flexible display 330 received in the foldable housing in a second direction so as to be visible to the outside when the electronic device 101, 200, 300, 400, 500, 600, 700, 800, or 2400 is unfolded, a touch sensor 851 disposed inside or outside the external display 331 or 810, a display driver configured to drive the external display 331 or 810 and the flexible display 330, a touch sensor driver configured to drive the touch sensor 851, and a processor 120 configured to control operations of the display driver and the touch sensor driver. The operating method may include, when the processor 120 is executed, acquiring touch data from the touch sensor driver (touch IC) 853 in a state where the external display 331 or 810 is turned off. The operating method may include determining whether the electronic device 101, 200, 300, 400, 500, 600, 700, 800, or 2400 is located in a pocket based on the touch data. The operating method may include performing a touch error prevention operation if the electronic device 101, 200, 300, 400, 500, 600, 700, 800, or 2400 has been determined to be located in a pocket, and suspending touch determination based on touch data for a preconfigured time period.

According to an embodiment, the touch data may include touch coordinates where a touch is sensed, a touch ID for distinguishing each touch, and a touch characteristic. The touch characteristic may include information on a touch area, information on consecutive touches, information on a time interval of the consecutive touch, and information on a touch swipe. The processor 120 may determine, based on the touch coordinates, the touch ID, and the touch characteristic, whether the touch data is caused by a finger touch or a touch when the electronic device 101, 200, 300, 400, 500, 600, 700, 800, or 2400 is located in a pocket.

According to an embodiment, the operating method may include determining whether the electronic device 101, 200, 300, 400, 500, 600, 700, 800, or 2400 has been taken out of the pocket after the preconfigured time has elapsed. The operating method may include performing touch determination in case that the electronic device 101, 200, 300, 400, 500, 600, 700, 800, or 2400 has been taken out of a pocket.

According to an embodiment, the operating method may include determining whether the electronic device 101, 200, 300, 400, 500, 600, 700, 800, or 2400 has been taken out of the pocket based on at least one piece of sensing data input from the multiple sensors.

According to an embodiment of the disclosure, an electronic device (e.g., the electronic device 101 in FIG. 1, the electronic device 200 in FIG. 2A, the electronic device 300 in FIG. 3A, the electronic device 400 in FIG. 4A, the electronic device 500 in FIG. 5A, the electronic device 600 in FIG. 6A, the electronic device 700 in FIG. 7A, the electronic device 800 in FIG. 8, the electronic device 2400 in FIG. 24, or the electronic device 2400 in FIG. 25) may include a foldable housing including a first housing part and a second housing part, an external display (e.g., the sub-display 331 in FIG. 3D or the display 810 in FIG. 8) received in the foldable housing in a first direction so as to be visible to the outside when the electronic device 101, 200, 300, 400, 500, 600, 700, 800, or 2400 is unfolded and folded, a flexible display (e.g., the flexible display 330 in FIG. 3A) received in the foldable housing in a second direction so as to be visible to the outside when the electronic device 101, 200, 300, 400, 500, 600, 700, 800, or 2400 is unfolded, a touch sensor (e.g., the touch sensor 851 in FIG. 8) disposed inside or outside the external display 331 or 810, a display driver (DDIC) (e.g., the display driver IC 830 in FIG. 8) configured to drive the external display 331 or 810 and the flexible display 330, a touch sensor driver (touch IC) (e.g., the touch sensor IC 853 in FIG. 8) configured to drive the touch sensor 851, a processor (e.g., the processor 120 in FIG. 1 or the processor 120 in FIG. 8) configured to control operations of the display driver (DDIC) 830 and the touch sensor driver (touch IC) 853, and a memory 130 including instructions.

The electronic device 101, 200, 300, 400, 500, 600, 700, 800, or 2400, when the instructions are executed by the processor 120, may acquire touch data from the touch sensor driver (touch IC) 853 in a state where the external display 331 or 810 is turned off. The electronic device, when the instructions are executed by the processor 120, may determine whether the electronic device 101, 200, 300, 400, 500, 600, 700, 800, or 2400 is located in a pocket based on the touch data. The electronic device, when the instructions are executed by the processor 120, may perform a touch error prevention operation if the electronic device 101, 200, 300, 400, 500, 600, 700, 800, or 2400 has been determined to be located in a pocket, but may suspend touch determination based on touch data for a preconfigured time period.

According to an embodiment, the touch data may include touch coordinates where a touch is sensed, a touch ID for distinguishing each touch, and a touch characteristic. The touch characteristic may include information on a touch area, information on consecutive touches, information on a time interval of the consecutive touch, and information on a touch swipe. The electronic device 101, 200, 300, 400, 500, 600, 700, 800, or 2400, when the instructions are executed by the processor 120, may determine, based on the touch coordinates, the touch ID, and the touch characteristic, whether the touch data is caused by a finger touch or a touch when the electronic device 101, 200, 300, 400, 500, 600, 700, 800, or 2400 is located in a pocket.

According to an embodiment, the electronic device 101, 200, 300, 400, 500, 600, 700, 800, or 2400, when the instructions are executed by the processor 120, may determine whether the electronic device 101, 200, 300, 400, 500, 600, 700, 800, or 2400 has been taken out of the pocket after the preconfigured time has elapsed. The electronic device 101, 200, 300, 400, 500, 600, 700, 800, or 2400 may perform touch determination in case that the electronic device 101, 200, 300, 400, 500, 600, 700, 800, or 2400 has been taken out of a pocket.

According to an embodiment, the electronic device 101, 200, 300, 400, 500, 600, 700, 800, or 2400 may include multiple sensors configured to sense a distance to an object, brightness around the electronic device 101, 200, 300, 400, 500, 600, 700, 800, or 2400, movement of the electronic device 101, 200, 300, 400, 500, 600, 700, 800, or 2400, and a speed of the movement of the electronic device 101, 200, 300, 400, 500, 600, 700, 800, or 2400. The electronic device 101, 200, 300, 400, 500, 600, 700, 800, or 2400 may determine whether the electronic device 101, 200, 300, 400, 500, 600, 700, 800, or 2400 has been taken out of the pocket based on at least one sensing data input from the multiple sensors.

According to an embodiment, when the instructions are executed by the processor 120, the electronic device 101, 200, 300, 400, 500, 600, 700, 800, or 2400, in case that the electronic device 101, 200, 300, 400, 500, 600, 700, 800, or 2400 has been determined to be taken out of the pocket, may suspend touch determination for a preconfigured time period after the electronic device 101, 200, 300, 400, 500, 600, 700, 800, or 2400 has been taken out of a pocket.

According to an embodiment, when the instructions are executed by the processor 120, the electronic device may configure a touch block timer value to a predetermined time value in case that the electronic device 101, 200, 300, 400, 500, 600, 700, 800, or 2400 has been determined to be located in a pocket. The electronic device 101, 200, 300, 400, 500, 600, 700, 800, or 2400 may reduce the touch block timer value by a predetermined time unit until the touch block timer value becomes "0". When the touch block timer value becomes "0", the electronic device 101, 200, 300, 400, 500, 600, 700, 800, or 2400 may determine whether the electronic device 101, 200, 300, 400, 500, 600, 700, 800, or 2400 is located in a pocket.

According to an embodiment, when the instructions are executed by the processor 120, the electronic device 101, 200, 300, 400, 500, 600, 700, 800, or 2400 may perform touch determination of a finger touch input in case that the electronic device 101, 200, 300, 400, 500, 600, 700, 800, or 2400 has been determined to be taken out of a pocket.

According to an embodiment, when the instructions are executed by the processor 120, the electronic device 101, 200, 300, 400, 500, 600, 700, 800, or 2400 may suspend touch determination in case that the electronic device 101, 200, 300, 400, 500, 600, 700, 800, or 2400 has been determined to be located in a pocket.

According to an embodiment, when the instructions are executed by the processor 120, the electronic device 101, 200, 300, 400, 500, 600, 700, 800, or 2400 may change a condition for a consecutive touch input after the electronic device 101, 200, 300, 400, 500, 600, 700, 800, or 2400 is taken out of a pocket. In this case, at least one of a minimum recognition strength, a time interval between consecutive touches, an effective time of consecutive touches, and a maximum touch size of consecutive touches may be adjusted.

According to an embodiment, when the instructions are executed by the processor 120, the electronic device 101, 200, 300, 400, 500, 600, 700, 800, or 2400 may reduce the time interval between the consecutive touches, reduce the effective time of the consecutive touches, and reduce the maximum touch size of the consecutive touches.

According to an embodiment, when the instructions are executed by the processor 120, the electronic device 101, 200, 300, 400, 500, 600, 700, 800, or 2400 may restrict touch processing of the consecutive touch for a predetermined time period.

According to an embodiment, when the instructions are executed by the processor 120, the electronic device 101, 200, 300, 400, 500, 600, 700, 800, or 2400 may change a condition for a touch wipe input after the electronic device 101, 200, 300, 400, 500, 600, 700, 800, or 2400 is taken out of a pocket. Here, the electronic device 101, 200, 300, 400, 500, 600, 700, 800, or 2400 may adjust at least one of a start area of the touch swipe and a length of the touch swipe.

According to an embodiment, when the instructions are executed by the processor 120, the electronic device 101, 200, 300, 400, 500, 600, 700, 800, or 2400 may reduce the start area of the touch swipe and reduce the length of the touch swipe.

According to an embodiment, when the instructions are executed by the processor 120, the electronic device 101, 200, 300, 400, 500, 600, 700, 800, or 2400 may restrict touch processing of the touch swipe for a predetermined time period.

According to an embodiment, the electronic device 101, 200, 300, 400, 500, 600, 700, 800, or 2400, when the instructions are executed by the processor 120, may perform touch determination based on the touch data without performing the touch error prevention operation when the external display 331 or 810 is turned on.

According to an embodiment, the electronic device 101, 200, 300, 400, 500, 600, 700, 800, or 2400, when the instructions are executed by the processor 120, may perform touch determination based on the touch data without performing the touch error prevention operation when a preconfigured application is executed.

It will be appreciated by a person skilled in the art that effects which may be achieved from the disclosure are not limited to the effects described above and other effects that are not described above will be clearly understood from the following detailed description.

**Claims**

1.  A foldable electronic device comprising:

    a foldable housing comprising a first housing part and a second housing part;
    an external display accommodated in the foldable housing in a first direction to be visible to the outside when the electronic device is unfolded and folded;
    a flexible display accommodated in the foldable housing in a second direction to be visible to the outside when the electronic device is unfolded;
    a touch sensor disposed inside or outside the external display;
    a display driver configured to drive the external display and the flexible display;
    a touch sensor driver configured to drive the touch sensor;
    a processor configured to control operations of the display driver and the touch sensor driver; and
    a memory comprising instructions,
    wherein the instructions, when executed by the processor, cause the electronic device to:

    acquire touch data from the touch sensor driver;
    determine whether the electronic device is located in a pocket, based on the touch data;
    perform a touch error prevention operation in case that the electronic device is determined to be located in a pocket; and
    suspend touch determination based on the touch data for a preconfigured time period.

2.  The electronic device of claim 1, wherein the touch data comprises touch coordinates where a touch is sensed, a touch ID for distinguishing each touch, and a touch characteristic,

    wherein the touch characteristic comprises information on a touch area, information on consecutive touches, information on a time interval between consecutive touches, and information on a touch swipe, and
    wherein the instructions, when executed by the processor, cause the electronic device to determine, based on the touch coordinates, the touch ID, and the touch characteristic, whether the touch data is made by a finger touch or is caused by a touch when the electronic device is located in a pocket.

3.  The electronic device of claim 1 or 2, wherein the instructions, when executed by the processor, cause the electronic device to:

    determine whether the electronic device is taken out of a pocket after elapse of the preconfigured time; and
    perform touch determination in case that the electronic device is taken out of the pocket.

4.  The electronic device of claim 3, wherein the electronic device comprises a plurality of sensors configured to sense a distance to an object, brightness around the electronic device, movement of the electronic device, and a speed of the movement of the electronic device, and
    wherein the instructions, when executed by the processor, cause the electronic device to determine whether the electronic device is taken out of the pocket, based on at least one piece of sensing data input from the a plurality of sensors.

5.  The electronic device of claim 4, wherein the instructions, when executed by the processor, cause the electronic device to, in case that the electronic device is determined to be taken out of the pocket, suspend touch determination for a preconfigured time period after the electronic device is taken out of the pocket.

6.  The electronic device of claim 4, wherein the instructions, when executed by the processor, cause the electronic device to:

    set a touch block timer value to a predetermined time value in case that the electronic device is determined to be located in the pocket;

reduce the touch block timer value by predetermined time units until the touch block timer value becomes "0"; and in case that the touch block timer value becomes "0", determine whether the electronic device is located in the pocket.

7. The electronic device of claim 5, wherein the instructions, when executed by the processor, cause the electronic device to perform touch determination of a finger touch input in case that the electronic device is determined to be taken out of the pocket.

8. The electronic device of claim 6, wherein the instructions, when executed by the processor, cause the electronic device to suspend touch determination in case that the electronic device is determined to be located in the pocket.

9. The electronic device of claim 7, wherein the instructions, when executed by the processor, cause the electronic device to:

   change a condition for a consecutive touch input after the electronic device is taken out of the pocket; and adjust at least one of a minimum recognition strength, a time interval between consecutive touches, an effective time of consecutive touches, and a maximum touch size of consecutive touches.

10. The electronic device of claim 9, wherein the instructions, when executed by the processor, cause the electronic device to reduce the time interval between the consecutive touches, reduce the effective time of the consecutive touches, and reduce the maximum touch size of the consecutive touches.

11. The electronic device of claim 10, wherein the instructions, when executed by the processor, cause the electronic device to restrict touch processing of the consecutive touches for a predetermined time period.

12. The electronic device of claim 7, wherein the instructions, when executed by the processor, cause the electronic device to:

   change a condition for a touch swipe input after the electronic device is taken out of the pocket; and adjust at least one of a start area of the touch swipe and a length of the touch swipe.

13. The electronic device of claim 12, wherein the instructions, when executed by the processor, cause the electronic device to reduce the start area of the touch swipe and reduce the length of the touch swipe.

14. The electronic device of claim 13, wherein the instructions, when executed by the processor, cause the electronic device to restrict touch processing of the touch swipe for a predetermined time period.

15. The electronic device of one of claims 1 to 14, wherein the instructions, when executed by the processor, cause the electronic device to, in case that the external display is turned on, perform touch determination based on the touch data without performing the touch error prevention operation.

# FIG. 1

EP 4 733 904 A1

# FIG. 2A

# FIG. 2B

# FIG. 2C

# FIG. 2D

# FIG. 3A

# FIG. 3B

# FIG. 3C

FIG. 3D

# FIG. 3E

# FIG. 4A

FIG. 4B

# FIG. 4C

407  403-1  418  420  419  400

4213  4211

4113  4111

411  4112

410

6a  410  404  405  406  4112  419  411

420

421

430

4213  4211

4272

6a  4271

A  427  4271  4212  400

y

z  x

400

420

4212  403  4212a

421

# FIG. 4D

# FIG. 5A

# FIG. 5B

# FIG. 5C

# FIG. 5D

EP 4 733 904 A1

# FIG. 6A

# FIG. 6B

# FIG. 7A

# FIG. 7B

# FIG. 8

800

**PROCESSOR (120)**

**MEMORY (130)**

**DISPLAY MODULE (160)**

**DISPLAY DRIVER IC (830)**

INTERFACE MODULE (831)

MEMORY (833)

IMAGE PROCESSING MODULE (835)

MAPPING MODULE (837)

**DIGITIZER DRIVE UNIT (870)**

**DISPLAY (810)**

DIGITIZER (860)

**TOUCH CIRCUIT (850)**

TOUCH SENSOR (851)

TOUCH SENSOR IC (853)

**SENSOR MODULE (880)**

# FIG. 9

FIG. 10

1000

| Box | Label |
|---|---|
| 1010 | ADC |
| 1020 | Raw data |
| 1030 | Baseline |
| 1040 | Raw data – Baseline |
| 1050 | Filtering |
| 1060 | Signal data |
| 1070 | Image processing' |
| 1080 | Report Touch Position' |
| 1090 | Process Gesture |

# FIG. 11

1100

1120

1110

< HAND TOUCH >

# FIG. 12A

1200

| 1 | 0 | -2 | -5 | -2 | 0 | -1 | -1 | 0 | 0 | 0 | 0 | 0 | 0 | 0 | -1 |
|---|---|---|---|---|---|---|---|---|---|---|---|---|---|---|---|
| 0 | 0 | 0 | 5 | 0 | 0 | -1 | -1 | 0 | 0 | 0 | -1 | -1 | 0 | 0 | 0 |
| 0 | 0 | 0 | -9 | -5 | 0 | 0 | -2 | 0 | 1 | 0 | -1 | 0 | 0 | 0 | 1 |
| 0 | 0 | -3 | -20 | -12 | 0 | 1 | 0 | 0 | 0 | 1 | 0 | -1 | -1 | 1 | 1 |
| 0 | 0 | -2 | -16 | -9 | 0 | 0 | 0 | 0 | 0 | 0 | 1 | -1 | 0 | -2 | 1 |
| 0 | 0 | -3 | -16 | -8 | -2 | 1 | 1 | -1 | 1 | 0 | 0 | -1 | 0 | -1 | 2 |
| -1 | 0 | -2 | -9 | -5 | 0 | -1 | 2 | 0 | 0 | 0 | 0 | -1 | 0 | 0 | 1 |
| -1 | -2 | 0 | 0 | 0 | -2 | 0 | 1 | -1 | -1 | 0 | 1 | 0 | -1 | 1 | -1 |
| -1 | 0 | 0 | -13 | -3 | 0 | 2 | 1 | -1 | -1 | -1 | 0 | 0 | 0 | 0 | 0 |
| -2 | 0 | 9 | 79 | 44 | 1 | 3 | 0 | -1 | -1 | -1 | -1 | 0 | 0 | -1 | -1 |
| -1 | 0 | 17 | 106 | 60 | 3 | 1 | 0 | -1 | 0 | -1 | 1 | 0 | -1 | 0 | 0 |
| 0 | 0 | 1 | 25 | 9 | 0 | 1 | 0 | -1 | -1 | 0 | -1 | 0 | -1 | 0 | -1 |
| -1 | 0 | 0 | -5 | 0 | 0 | 1 | 0 | 0 | 0 | 0 | 0 | -1 | 0 | 0 | -1 |
| 0 | -1 | 0 | 5 | 0 | 0 | -1 | -1 | 0 | 0 | -2 | 1 | -1 | 0 | 0 | -1 |
| -1 | 0 | 0 | -2 | -1 | 0 | 0 | 0 | -2 | 0 | -1 | 0 | -2 | 0 | 0 | 0 |

1210

## FIG. 12B

1200

| 0 | 0 | -1 | -2 | -1 | -1 | -1 | 0 | 0 | 0 | 0 | 0 | 0 | 0 | 0 | 0 |
|---|---|----|----|----|----|----|---|---|---|---|---|---|---|---|---|
| 0 | 0 | -1 | -2 | -1 | 0 | -1 | -1 | 0 | 0 | -1 | 0 | 1 | 0 | 1 | -1 |
| 0 | 0 | 0 | 0 | -2 | 0 | 1 | 0 | 1 | -1 | 0 | -1 | 1 | 0 | 0 | 0 |
| 0 | 0 | 0 | 0 | -2 | -1 | 1 | 1 | 0 | -1 | 2 | -1 | 1 | 0 | -1 | 0 |
| 0 | 0 | 0 | 0 | 0 | 0 | 0 | -2 | 0 | 0 | 0 | 1 | 0 | 0 | 0 | 0 |
| -2 | 0 | 0 | 0 | -1 | -1 | 1 | 0 | 0 | -1 | 0 | 0 | 0 | 0 | -1 | 2 |
| -1 | -1 | 0 | 0 | 0 | 0 | -2 | -1 | 0 | -1 | 0 | -1 | 1 | 0 | 0 | 1 |
| 0 | 0 | -1 | 0 | 0 | -1 | -1 | -2 | -2 | 1 | 0 | 0 | 0 | -1 | 1 | 1 |
| -2 | 0 | 0 | 7 | 0 | 0 | 0 | -1 | 1 | 0 | -2 | 1 | 1 | 0 | 0 | -1 |
| -2 | 0 | 49 | 182 | 104 | 4 | -1 | -1 | 0 | -1 | 1 | -1 | 0 | 0 | 1 | 1 |
| -3 | 0 | 68 | 210 | 126 | 3 | 0 | 0 | -1 | 0 | -1 | 0 | 0 | -1 | 0 | 0 |
| -6 | 0 | 5 | 29 | 10 | 0 | 2 | -1 | -1 | -1 | 0 | -1 | 0 | 0 | -1 | 0 |
| -1 | -1 | 0 | 0 | 0 | 0 | 0 | -1 | -1 | 0 | 0 | -1 | -1 | -1 | 1 | -1 |
| 0 | -1 | -1 | 0 | 0 | 0 | -1 | -2 | -1 | 1 | 0 | 1 | 0 | 0 | 0 | 0 |
| -1 | 0 | 0 | 0 | 0 | -2 | 0 | -2 | -1 | -1 | 0 | -1 | -1 | 0 | 0 | 0 |

1220

# FIG. 12C

1200

| -1 | 0 | -1 | 0 | 0 | -1 | -2 | 0 | -1 | 0 | 0 | 0 | 0 | 0 | -1 | 0 |
|----|----|----|----|----|----|----|----|----|----|----|----|----|----|----|----|
| -1 | 0 | 0 | 0 | -1 | 0 | 1 | 0 | 0 | 1 | -2 | 1 | 1 | -1 | 0 | 0 |
| -1 | 0 | 0 | 0 | -1 | 0 | -1 | -1 | 1 | 0 | -1 | 0 | 0 | 0 | 0 | 1 |
| 0 | 0 | 0 | 0 | -2 | 0 | -1 | 0 | 0 | 0 | 1 | 0 | 1 | 0 | 0 | 0 |
| -1 | 0 | 0 | 0 | -1 | 0 | 0 | 0 | 0 | 0 | 0 | 0 | 0 | 1 | -1 | 0 |
| 0 | 0 | 0 | 0 | -2 | -2 | 0 | -1 | 0 | -1 | 1 | 0 | -1 | 1 | 0 | 0 |
| 0 | -1 | 0 | 0 | 0 | 0 | -2 | 0 | 0 | -1 | 0 | -1 | -1 | -1 | 1 | 0 |
| 0 | -2 | -1 | 0 | 0 | 0 | 0 | -2 | -1 | -1 | 0 | 1 | 2 | -3 | 1 | 0 |
| -2 | 0 | 5 | 22 | 14 | 0 | 1 | -2 | 1 | -1 | -1 | -1 | 1 | -2 | 2 | 1 |
| 0 | 0 | 47 | 196 | 149 | 15 | 2 | 0 | 1 | -2 | -1 | 0 | 1 | -2 | 1 | 0 |
| -1 | 0 | 45 | 187 | 134 | 14 | 1 | 1 | -1 | 1 | -1 | -1 | -1 | 0 | 0 | 1 |
| -2 | 0 | 10 | 26 | 16 | 0 | 1 | -1 | 1 | 0 | 0 | -1 | -1 | -1 | 1 | -1 |
| -1 | -1 | 0 | 0 | 0 | 0 | -1 | 0 | -1 | 0 | -1 | 0 | -1 | 1 | 1 | -1 |
| 0 | 0 | -1 | 0 | 0 | 0 | -1 | -1 | -1 | 1 | -2 | 2 | -1 | 1 | -1 | -1 |
| -2 | 0 | 0 | 0 | 0 | -2 | -1 | -1 | -2 | 0 | 0 | 0 | 0 | 0 | 0 | 0 |

1230

FIG. 13

1300

1320

1330

1310

**SHAKING WHEN WALK OR RUN**

# FIG. 14A

1400

1410

| 0 | 2 | -1 | 0 | -2 | -4 | -3 | 0 | 0 | -1 | 0 | 0 | 0 | 0 | -1 | -2 |
| 1 | 2 | 1 | 0 | -5 | -10 | -8 | -3 | -1 | 0 | -1 | -1 | 0 | 0 | 0 | 0 |
| 0 | 2 | 3 | -2 | -4 | -15 | -19 | -14 | -8 | -5 | -2 | -1 | -2 | 1 | 1 | -1 |
| 1 | 2 | 2 | 0 | -4 | -12 | -15 | -19 | -14 | -8 | 0 | 0 | 0 | 0 | 0 | -2 |
| 0 | 2 | 1 | 3 | -1 | -7 | -14 | -21 | -26 | -29 | -17 | -9 | 0 | -1 | -2 | -2 |
| -2 | 1 | 1 | 2 | 8 | 8 | 0 | -5 | -25 | -42 | -34 | -23 | -15 | -6 | -1 | -2 |
| 0 | 0 | -2 | 4 | 13 | 17 | 14 | 11 | 0 | -23 | -17 | -35 | -37 | -20 | -10 | -2 |
| 0 | -1 | 0 | 2 | 10 | 17 | 17 | 25 | 39 | 16 | -9 | -23 | -33 | -21 | -7 | -1 |
| -1 | 0 | 0 | 0 | 1 | 7 | 11 | 16 | 37 | 29 | 15 | 8 | -10 | -16 | -8 | -3 |
| -2 | -1 | 0 | -1 | -2 | 2 | 6 | 13 | 27 | 45 | 35 | 21 | 6 | -6 | -6 | 0 |
| -1 | -3 | 0 | -2 | -2 | 1 | 3 | 7 | 19 | 39 | 32 | 24 | 21 | 0 | 0 | 0 |
| -1 | -4 | 1 | -2 | 0 | 0 | 1 | 4 | 2 | 15 | 17 | 19 | 25 | 7 | -1 | 0 |
| 0 | 1 | 0 | -1 | -1 | 2 | 0 | -4 | -12 | -7 | 7 | 17 | 21 | 13 | 1 | 0 |
| 0 | 0 | 0 | 0 | 0 | 0 | -1 | -3 | -4 | -4 | 0 | 0 | 1 | 0 | -1 | 0 |
| -1 | -1 | 0 | 0 | 0 | 0 | 0 | 0 | 0 | -6 | -7 | -7 | -5 | -2 | 0 | 0 |

# FIG. 14B

FIG. 14C

1400

1430

| 0 | -5 | -6 | -3 | -2 | 1 | 9 | 15 | 16 | 19 | 13 | -3 | -7 | -8 | -5 | -2 |
|---|----|----|----|----|---|---|----|----|----|----|----|----|----|----|----|
| -2 | -8 | -10 | -8 | -1 | 6 | 8 | 16 | 46 | 80 | 100 | 111 | 130 | 0 | 1 | 1 |
| -9 | -15 | -18 | -18 | -9 | 1 | 4 | 3 | 43 | 85 | 112 | 135 | 145 | 155 | -1 | -1 |
| -9 | -18 | -21 | -23 | -18 | -8 | -6 | -6 | 29 | 84 | 129 | 160 | 174 | 164 | 134 | 0 |
| -7 | -15 | -24 | -30 | -32 | -21 | -15 | -15 | 13 | 54 | 125 | 180 | 205 | 187 | 140 | 22 |
| -15 | -19 | -32 | -57 | -53 | -37 | -24 | -18 | -15 | 32 | 78 | 179 | 243 | 223 | 150 | 22 |
| 2 | -1 | -20 | -69 | -72 | -55 | -34 | -23 | -17 | -23 | 33 | 81 | 202 | 214 | 140 | 28 |
| 3 | 2 | -3 | -50 | -55 | -52 | -40 | -34 | -20 | -11 | -7 | 38 | 81 | 176 | 141 | 41 |
| 1 | 3 | 1 | -27 | -49 | -55 | -53 | -63 | -45 | -27 | -19 | 9 | 20 | 47 | 89 | 32 |
| 7 | 10 | 6 | -1 | -34 | -47 | -44 | -48 | -47 | -31 | -21 | -15 | -12 | -6 | 12 | 18 |
| 6 | 12 | 12 | 17 | -1 | -21 | -23 | -21 | -31 | -26 | -17 | -11 | -8 | 42 | 42 | 18 |
| 2 | 9 | 10 | 17 | 9 | 0 | -10 | -12 | -24 | -26 | -25 | -24 | -17 | -10 | 58 | 10 |
| 0 | 1 | 2 | 8 | 9 | 1 | -4 | 2 | 1 | -19 | -28 | -24 | -23 | 17 | -10 | -2 |
| 2 | 4 | 7 | 11 | 9 | 5 | 7 | 9 | 11 | 0 | -12 | -13 | -10 | -8 | -2 | -1 |
| -1 | 0 | 0 | 0 | 0 | -3 | -3 | 1 | 0 | 2 | 2 | 0 | -3 | -4 | -3 | -1 |

FIG. 15

FIG. 16A

1600

1610

| 0 | -2 | -1 | 1 | 0 | 1 | -1 | -2 | 1 | -1 | 0 | 0 | 0 | -1 | 1 | 0 |
| -1 | 0 | 0 | 1 | 0 | 2 | -2 | -2 | 0 | -1 | 0 | 0 | 1 | 1 | -1 | 0 |
| -1 | -2 | 0 | 1 | 1 | -1 | 0 | -1 | -1 | 0 | 0 | 0 | 1 | 0 | -1 | 1 |
| -1 | 1 | 1 | 2 | 1 | 1 | -4 | 1 | -4 | 1 | -1 | 0 | 2 | 1 | 0 | 1 |
| 0 | 0 | 0 | 0 | 0 | 1 | -7 | -5 | -3 | -1 | 0 | 0 | 3 | 1 | 0 | 0 |
| -1 | 0 | 0 | 0 | 1 | -3 | 3 | 47 | 69 | 38 | 18 | 9 | 4 | 0 | -1 | 1 |
| 1 | -2 | -2 | -5 | -3 | -14 | 70 | 169 | 163 | 160 | 124 | 45 | 1 | 0 | 1 | 1 |
| -10 | -13 | -11 | -9 | -8 | 11 | 133 | 156 | 145 | 155 | 177 | 125 | 10 | 0 | 1 | -1 |
| -9 | -12 | -11 | -9 | -6 | 24 | 148 | 169 | 156 | 160 | 144 | 44 | -2 | 1 | 0 | 1 |
| -3 | -1 | 0 | -2 | 2 | 13 | 126 | 147 | 137 | 67 | 4 | -5 | -5 | -1 | 1 | 2 |
| -2 | -2 | -1 | -2 | 2 | 3 | 4 | 3 | -5 | -11 | -12 | -4 | 2 | -2 | 0 | 2 |
| 0 | 3 | 1 | 2 | 2 | -1 | -5 | -8 | -9 | -7 | -5 | -1 | 1 | 0 | 1 | 0 |
| 0 | 1 | 1 | -1 | 0 | -2 | -5 | -4 | -6 | -4 | -2 | 0 | 1 | 2 | 1 | 2 |
| 0 | 1 | 0 | 1 | 2 | 1 | -3 | -4 | -1 | -2 | 2 | 1 | 1 | -1 | 1 | 1 |
| 0 | 0 | 0 | 0 | 1 | 0 | -1 | -4 | -1 | 0 | 0 | 0 | 0 | 0 | 0 | 0 |

# FIG. 16B

FIG. 17A

# FIG. 17B

1700

1720

| -1 | 0 | -1 | 1 | 0 | 0 | 0 | -2 | -2 | 0 | 0 | 0 | 0 | -1 | 0 | 0 |
|---|---|---|---|---|---|---|---|---|---|---|---|---|---|---|---|
| 1 | 1 | 2 | -2 | 0 | -1 | 0 | -3 | -1 | 1 | 0 | 1 | 0 | -1 | 2 | 0 |
| 1 | 1 | 1 | 0 | 0 | -3 | 0 | -2 | -1 | 1 | 1 | 1 | 0 | 1 | 0 | -1 |
| 1 | -1 | 0 | 0 | 0 | 0 | -2 | -2 | -4 | -1 | 2 | 1 | 1 | 1 | -1 | 2 |
| 1 | 0 | -1 | 0 | 0 | 1 | 0 | -3 | -4 | 0 | -1 | 0 | 1 | 1 | 0 | 1 |
| -1 | 1 | -1 | 1 | 9 | 43 | 18 | -11 | -14 | 0 | 0 | 0 | -1 | -1 | 1 | 1 |
| -2 | -1 | -1 | 5 | 113 | 230 | 111 | 14 | 12 | -4 | 0 | -1 | 0 | 1 | 0 | 2 |
| -1 | -4 | 1 | 4 | 79 | 137 | 49 | 90 | 113 | 2 | -1 | -3 | 0 | 1 | 0 | 1 |
| -2 | -2 | -1 | -1 | 5 | 10 | 22 | 174 | 156 | 7 | 0 | 0 | -1 | -2 | 2 | 2 |
| -1 | 0 | 1 | -2 | -14 | -32 | 21 | 168 | 155 | 7 | 0 | -2 | 1 | -1 | 0 | 1 |
| 0 | -2 | -2 | 0 | -12 | -21 | 15 | 103 | 112 | 9 | 1 | 0 | -1 | 0 | -1 | 1 |
| 0 | -1 | 0 | 0 | -4 | -11 | 4 | 21 | 27 | 9 | 3 | -1 | 1 | -1 | -1 | 0 |
| -1 | 0 | 0 | -1 | -4 | -7 | 1 | 4 | 2 | 3 | 0 | -1 | -1 | -2 | 1 | 0 |
| 1 | 2 | 1 | 0 | -2 | -5 | 0 | -2 | -1 | 2 | 2 | -1 | 0 | -1 | 1 | -1 |
| 0 | 0 | 0 | 0 | -3 | -3 | 0 | -1 | -2 | 0 | 0 | 0 | 0 | 0 | -1 | -1 |

# FIG. 18

START

INPUT TOUCH DATA ~1810

EXTRACT TOUCH COORDINATES, TOUCH ID, AND CHARACTERISTIC (position, ID, peak, area, major, minor) ~1815

1820
IS TOUCH DETERMINATION USING ANOTHER SENSOR REQUIRED? — NO

YES

1835
IS ELECTRONIC DEVICE LOCATED IN POCKET? — NO

YES

1840
DOES MAXIMUM SENSITIVITY EXCEED REFERENCE VALUE? — NO

YES

1855
IS TOUCH AREA LESS THAN REFERENCE VALUE? — NO

YES

1860
DOES TOUCH AREA HAVE CIRCULAR SHAPE? — NO

YES

DETERMINE TOUCH IN POCKET ~1845

DETERMINE FINGER TOUCH ~1825

PERFORM MISTOUCH PREVENTION OPERATION (RESTRICT TOUCH, RESTRICT SENSITIVITY, DISPLAY UI POP-UP, SCREEN OFF) ~1850

PROCESS TOUCH INPUT ~1830

END

# FIG. 19A

1900

1910

| 0 | 2 | 1 | 0 | -3 | -4 | -3 | 0 | 0 | -1 | 0 | 0 | 0 | 0 | -1 | -2 |
|---|---|---|---|---|---|---|---|---|---|---|---|---|---|---|---|
| 1 | 2 | 1 | 0 | -6 | -10 | -8 | -3 | -1 | 0 | -1 | -1 | 0 | 0 | 0 | 0 |
| 0 | 2 | 3 | -2 | -4 | -15 | -19 | -14 | -8 | -5 | -2 | -2 | -2 | 1 | 1 | -1 |
| 1 | 2 | 2 | 0 | -4 | -12 | -15 | -19 | -14 | -8 | 0 | 0 | 0 | 0 | 0 | -2 |
| 0 | 2 | 1 | 3 | -1 | -7 | -14 | -21 | -26 | -29 | -17 | -9 | 0 | -1 | -2 | -2 |
| -2 | 1 | 1 | 2 | 8 | 8 | 0 | -5 | -25 | -42 | -34 | -23 | -15 | -6 | -1 | -1 |
| 0 | 2 | -2 | 4 | 13 | 17 | 14 | 11 | 0 | -23 | -37 | -33 | -37 | -20 | -10 | -2 |
| 0 | -1 | 0 | 2 | 10 | 17 | 17 | 26 | 39 | 16 | -9 | -23 | -33 | -21 | -7 | -1 |
| 2 | 0 | 0 | 0 | 1 | 7 | 11 | 16 | 37 | 29 | 15 | 8 | -10 | -16 | -8 | -3 |
| 2 | -1 | 0 | -1 | -2 | 2 | 6 | 13 | 27 | 45 | 35 | 22 | 6 | -6 | -6 | 0 |
| -1 | -3 | 0 | -2 | -2 | 1 | 3 | 7 | 19 | 39 | 32 | 24 | 21 | 0 | -2 | 2 |
| -1 | -4 | 1 | -2 | 0 | 0 | 1 | 4 | 2 | 15 | 17 | 19 | 26 | 7 | -1 | 0 |
| 0 | 0 | 0 | -1 | -1 | 1 | 0 | -4 | -12 | -7 | 7 | 17 | 21 | 13 | 1 | 0 |
| 0 | 0 | 0 | 0 | 0 | 0 | 1 | -3 | -4 | -4 | 0 | 0 | 0 | 0 | -1 | 0 |
| -1 | -1 | 0 | 0 | 0 | 0 | 0 | 0 | 0 | -6 | -7 | -7 | -5 | -2 | 0 | 0 |

1 : Area 7

# FIG. 19B

1900

1920

| 0 | -3 | -3 | 0 | 1 | 4 | 14 | 18 | 22 | 17 | 4 | -2 | -3 | -2 | 0 | 0 |
|---|---|---|---|---|---|---|---|---|---|---|---|---|---|---|---|
| -2 | -7 | -10 | -10 | -3 | 6 | 9 | 18 | 24 | 30 | 18 | 1 | -6 | 0 | 0 | 0 |
| -11 | -17 | -21 | -20 | -11 | 0 | 2 | -14 | 25 | 34 | 30 | 15 | -1 | -1 | -1 | 0 |
| -5 | -13 | -18 | -19 | -17 | -6 | -4 | -3 | 14 | 40 | 50 | 43 | 17 | 0 | 0 | 0 |
| 0 | -10 | -19 | -25 | -27 | -16 | -12 | -12 | -4 | 18 | 57 | 65 | 59 | 29 | 4 | 0 |
| 0 | -3 | -18 | -44 | -44 | -28 | -17 | -14 | -12 | -9 | 26 | 92 | 100 | 49 | 14 | 1 |
| 0 | -4 | -21 | -72 | -74 | -58 | -38 | -25 | -21 | -25 | -21 | 24 | 108 | 67 | 20 | 2 |
| -1 | -5 | -13 | -62 | -70 | -69 | -61 | -55 | -42 | -34 | -30 | -23 | -33 | -21 | -7 | -1 |
| 0 | -2 | -4 | -37 | -60 | -63 | -70 | -80 | -64 | -45 | -38 | -36 | -33 | 0 | 23 | 1 |
| 0 | -1 | -3 | -11 | -47 | -60 | -57 | -61 | -64 | -44 | -37 | -32 | -29 | -20 | 0 | 2 |
| 4 | 7 | 7 | 11 | -9 | -30 | -36 | -35 | -43 | -41 | -32 | -29 | -25 | -20 | -9 | 0 |
| 1 | 8 | 9 | 17 | 7 | -1 | -11 | -12 | -27 | -28 | -27 | -25 | -20 | -13 | -1 | 1 |
| 0 | 0 | 0 | 11 | 12 | 2 | -1 | 4 | 1 | -17 | -27 | -27 | 21 | -11 | -3 | -1 |
| 0 | 0 | 0 | 13 | 10 | 4 | 6 | 9 | 10 | 0 | -14 | -12 | -10 | -8 | -1 | -1 |
| 0 | 0 | 0 | 0 | 0 | -2 | -3 | 0 | 0 | 1 | 0 | 0 | -4 | -4 | -1 | -1 |

2 : Area 17

# FIG. 19C

1900

1930

| 0 | -5 | -6 | -3 | -2 | 1 | 9 | 15 | 16 | 19 | 13 | -3 | -3 | -8 | -5 | -2 |
|---|---|---|---|---|---|---|---|---|---|---|---|---|---|---|---|
| -2 | -8 | -10 | -8 | -1 | 6 | 8 | 16 | 46 | 80 | 100 | 111 | 130 | 0 | 1 | 1 |
| -9 | -15 | -18 | -18 | -9 | 1 | 4 | 3 | 43 | 85 | 112 | 135 | 148 | 155 | -1 | -1 |
| -9 | -18 | -21 | -23 | -18 | -8 | -6 | -6 | 29 | 84 | 129 | 160 | 174 | 164 | 134 | 0 |
| -7 | -15 | -24 | -30 | -32 | -21 | -15 | -15 | 13 | 54 | 125 | 180 | 205 | 187 | 140 | 22 |
| -15 | -19 | -32 | -57 | -53 | -37 | -24 | -18 | -16 | 32 | 78 | 179 | 243 | 213 | 150 | 22 |
| 2 | -1 | -20 | -60 | -72 | -55 | -34 | -23 | -17 | -23 | 33 | 81 | 202 | 214 | 140 | 28 |
| 3 | 2 | -3 | -50 | -55 | -52 | -40 | -34 | -20 | -11 | -7 | 38 | 81 | 176 | 141 | 41 |
| 1 | 3 | 1 | -27 | -49 | -55 | -53 | -63 | -46 | -27 | -19 | 9 | 20 | 47 | 89 | 32 |
| 7 | 10 | 6 | -1 | -34 | -47 | -44 | -48 | -47 | -31 | -21 | -15 | -12 | -6 | 12 | 18 |
| 6 | 12 | 12 | 17 | -1 | -21 | -23 | -21 | -31 | -26 | -17 | -11 | -8 | 42 | 42 | 18 |
| 2 | 9 | 9 | 17 | 9 | 0 | -10 | -12 | -24 | -26 | -25 | -23 | -17 | -10 | 58 | 10 |
| 0 | 1 | 2 | 8 | 9 | 1 | -4 | 2 | 1 | -19 | -28 | -24 | -23 | -17 | -10 | -2 |
| 2 | 4 | 7 | 11 | 9 | 5 | 7 | 9 | 11 | 0 | -12 | -13 | -10 | -8 | -2 | -1 |
| -1 | 0 | 0 | 0 | 0 | -3 | -3 | 1 | 0 | 2 | 2 | 0 | -3 | -4 | -3 | -1 |

3 : Area 42

# FIG. 19D

1900

1940

| -4 | -8 | -6 | -3 | -1 | 2 | 9 | 15 | 16 | 21 | 14 | 0 | -4 | -5 | -2 | -1 |
|----|----|----|----|----|----|----|----|----|----|----|----|----|----|----|----|
| -2 | -8 | -11 | -9 | -2 | 6 | 9 | 16 | 44 | 69 | 79 | 81 | 89 | -1 | 2 | 1 |
| -8 | -16 | -19 | -19 | -9 | 0 | 3 | 2 | 41 | 72 | 88 | 96 | 96 | 101 | -1 | -1 |
| -5 | -13 | -15 | -18 | -13 | -2 | 0 | -1 | 32 | 76 | 109 | 126 | 124 | 114 | 98 | 16 |
| -2 | -10 | -17 | -23 | -26 | -14 | -10 | -10 | 19 | 49 | 105 | 144 | 155 | 134 | 103 | 16 |
| -10 | -14 | -28 | -54 | -53 | -36 | -23 | -19 | -16 | 23 | 56 | 141 | 189 | 153 | 104 | 13 |
| 0 | 0 | -17 | -65 | -65 | -47 | -27 | -12 | -5 | -10 | 35 | 72 | 185 | 185 | 119 | 28 |
| 0 | 0 | -8 | -54 | -61 | -59 | 48 | -42 | -26 | -16 | 13 | 25 | 60 | 147 | 113 | 28 |
| 1 | 4 | -1 | -26 | -49 | -52 | -53 | -63 | -46 | -26 | -18 | 9 | 16 | 42 | 79 | 27 |
| 8 | 12 | 6 | 0 | -33 | -47 | -42 | -47 | -47 | -31 | -21 | -16 | -11 | -6 | 10 | 15 |
| 0 | 6 | 7 | 10 | -9 | -30 | -32 | -31 | -39 | -34 | -26 | -21 | -16 | -9 | -3 | 2 |
| 0 | 3 | 5 | 14 | 8 | -2 | -12 | -12 | -27 | -28 | -27 | -25 | -19 | -11 | -3 | 0 |
| -1 | 3 | 3 | 9 | 7 | 1 | -2 | 5 | 0 | -16 | -26 | -22 | -20 | -15 | -8 | 0 |
| 0 | 4 | 7 | 11 | 9 | 4 | 8 | 12 | 10 | 0 | -10 | -10 | -6 | -3 | 0 | 0 |
| 0 | 0 | -1 | 0 | 0 | -3 | -2 | 0 | -1 | 0 | 0 | 0 | -2 | -2 | -1 | 0 |

4 : Area 39

# FIG. 19E

1900

1950

| 0 | -4 | -3 | 1 | 3 | 9 | 15 | 16 | 15 | 5 | 0 | -7 | -4 | 0 | 0 | 0 |
|---|----|----|---|---|---|----|----|----|---|---|----|----|---|---|---|
| -2 | -8 | 7 | -5 | 6 | 19 | 62 | 86 | 102 | 113 | 119 | 130 | -32 | 0 | 0 | 1 |
| -1 | -5 | -9 | -11 | 2 | 14 | 71 | 97 | 119 | 132 | 130 | 143 | 150 | -26 | 0 | 0 |
| -3 | -12 | -16 | -18 | -11 | 0 | 49 | 103 | 141 | 157 | 155 | 151 | 157 | 154 | -24 | 1 |
| -3 | -11 | -21 | -26 | -28 | -17 | 28 | 63 | 139 | 179 | 184 | 171 | 159 | 148 | 105 | 0 |
| 1 | -3 | -18 | -42 | -41 | -27 | -24 | 40 | 82 | 179 | 218 | 197 | 173 | 144 | 127 | -1 |
| -1 | -5 | -21 | -70 | -72 | -56 | -42 | -37 | 40 | 81 | 186 | 227 | 188 | 139 | 111 | 1 |
| 1 | -1 | -9 | -57 | -66 | -64 | -57 | -62 | -54 | 24 | 58 | 147 | 180 | 119 | 85 | 0 |
| 0 | 1 | -4 | -31 | -54 | -60 | -64 | -76 | -66 | -49 | 67 | 40 | 94 | 103 | 70 | 0 |
| 1 | -1 | -3 | -11 | -46 | -40 | -57 | -62 | -66 | -50 | -43 | -38 | 28 | 52 | 56 | 1 |
| -1 | 2 | 0 | 2 | -16 | -37 | -43 | -43 | -52 | -48 | -41 | -34 | -25 | -15 | -2 | 0 |
| 3 | 3 | 5 | 11 | 2 | 8 | -19 | -21 | -35 | -38 | -36 | -35 | -24 | -17 | -7 | -2 |
| 0 | 1 | 1 | 7 | 7 | 0 | -5 | 0 | -2 | -18 | -27 | -24 | -22 | -14 | -7 | 0 |
| 0 | -2 | 3 | 7 | 6 | 1 | 1 | 3 | 2 | -3 | -16 | -14 | -7 | -6 | -3 | -1 |
| 0 | 0 | -1 | -1 | -1 | -5 | -7 | -1 | -3 | 0 | 0 | 0 | 0 | 0 | -3 | 0 |

5 : Area 49

# FIG. 19F

4th frames : 32ms

1960          1970          1980

1 : Area 4          2 : Area 7          3 : Area 6

CHANGE AMOUNT : 3          CHANGE AMOUNT : −1

2nd frames : 16ms

| 79 | 44 |
|----|----|
| 106 | 60 |

| 49 | 182 | 104 |
|----|-----|-----|
| 68 | 210 | 126 |

| 22 | 14 |
|----|----|

| 47 | 116 | 149 |
|----|-----|-----|
| 45 | 107 | 134 |

| 26 | 16 |
|----|----|

EP 4 733 904 A1

# FIG. 20

```
                    ┌─────────────┐
                    │    START    │
                    └──────┬──────┘
                           ↓
           ┌───────────────────────────────┐
           │       INPUT TOUCH DATA         │ ~2010
           └───────────────┬───────────────┘
                           ↓
           ┌───────────────────────────────┐
           │ EXTRACT TOUCH COORDINATES,     │
           │ TOUCH ID, AND CHARACTERISTIC   │ ~2015
           │ (position, ID, peak, area,     │
           │  major, minor)                 │
           └───────────────┬───────────────┘
                           ↓                     2020
                    ◇ IS TOUCH DETERMINATION          NO
                      USING ANOTHER SENSOR ────────────┐
                      REQUIRED? ◇                       │
                           │ YES                        │
                           ↓           2035             │
                    ◇ IS TOUCH AREA LESS      NO        │
              ┌───── THAN REFERENCE VALUE? ◇            │
              │            │ YES                        │
              │            ↓           2040             │
              │     ◇ IS CHANGE AMOUNT     NO           │
              │───── OF TOUCH AREA LESS                 │
              │       THAN REFERENCE VALUE? ◇           │
              │            │ YES      2055              │
              │            ↓                            │
              │     ◇ N ≤ 3 ?           NO              │
              │───── (N=NUMBER OF FRAMES) ◇             │
              │            │ YES                        │
              ↓            ↓                            ↓
    ┌──────────────────┐   │    ┌─────────────────────────┐
    │ DETERMINE TOUCH  │   └───→│ DETERMINE FINGER TOUCH   │ 2025
    │ IN POCKET ~2045  │        └───────────┬─────────────┘
    └────────┬─────────┘                    ↓
             ↓                    ┌─────────────────────────┐
   ┌────────────────────────┐     │   PROCESS TOUCH INPUT   │ 2030
   │ PERFORM MISTOUCH       │     └───────────┬─────────────┘
   │ PREVENTION OPERATION   │                 │
   │ (RESTRICT TOUCH,       │~2050            │
   │ RESTRICT SENSITIVITY,  │                 │
   │ DISPLAY UI POP-UP,     │                 │
   │ SCREEN OFF)            │                 │
   └───────────┬────────────┘                │
               └──────────┬───────────────────┘
                          ↓
                   ┌─────────────┐
                   │     END     │
                   └─────────────┘
```

# FIG. 21A

2100

2110

| 0 | -5 | -6 | -3 | -2 | 1 | 9 | 15 | 16 | 19 | 13 | -3 | -3 | -8 | -5 | -2 |
|---|---|---|---|---|---|---|---|---|---|---|---|---|---|---|---|
| -2 | -8 | -10 | -8 | -1 | 6 | 8 | 16 | 46 | 80 | 100 | 111 | 130 | 0 | 1 | 1 |
| -9 | -15 | -18 | -18 | -9 | 1 | 4 | 3 | 43 | 85 | 112 | 135 | 148 | 155 | -1 | -1 |
| -9 | -18 | -21 | -23 | -18 | -8 | -6 | -6 | 29 | 84 | 129 | 160 | 174 | 164 | 134 | 0 |
| -7 | -15 | -24 | -30 | -32 | -21 | -15 | -15 | 13 | 54 | 125 | 180 | 205 | 187 | 140 | 22 |
| -15 | -19 | -32 | -57 | -53 | -37 | -24 | -18 | -16 | 32 | 78 | 179 | 243 | 213 | 150 | 22 |
| 2 | -1 | -20 | -60 | -72 | -55 | -34 | -23 | -17 | -23 | 33 | 81 | 202 | 214 | 140 | 28 |
| 3 | 2 | -3 | -50 | -55 | -52 | -40 | -34 | -20 | -11 | -7 | 38 | 81 | 176 | 141 | 41 |
| 1 | 3 | 1 | -27 | -49 | -55 | -53 | -63 | -46 | -27 | -19 | 9 | 20 | 47 | 89 | 32 |
| 7 | 10 | 6 | -1 | -34 | -47 | -44 | -48 | -47 | -31 | -21 | -15 | -12 | -6 | 12 | 18 |
| 6 | 12 | 12 | 17 | -1 | -21 | -23 | -21 | -31 | -26 | -17 | -11 | -8 | 42 | 42 | 18 |
| 2 | 9 | 9 | 17 | 9 | 0 | -10 | -12 | -24 | -26 | -25 | -23 | -17 | -10 | 58 | 10 |
| 0 | 1 | 2 | 8 | 9 | 1 | -4 | 2 | 1 | -19 | -28 | -24 | -23 | -17 | -10 | -2 |
| 2 | 4 | 7 | 11 | 9 | 5 | 7 | 9 | 11 | 0 | -12 | -13 | -10 | -8 | -2 | -1 |
| -1 | 0 | 0 | 0 | 0 | -3 | -3 | 1 | 0 | 2 | 2 | 0 | -3 | -4 | -3 | -1 |

## FIG. 21B

2100

2120

| -4 | -8 | -6 | -3 | -1 | 2 | 9 | 15 | 16 | 21 | 14 | 0 | -4 | -5 | -2 | -1 |
| -2 | -8 | -11 | -9 | -2 | 6 | 9 | 16 | 44 | 69 | 79 | 81 | 89 | -1 | 2 | 1 |
| -8 | -15 | -19 | -19 | -9 | 0 | 3 | 2 | 41 | 72 | 88 | 95 | 96 | 101 | -1 | -1 |
| -5 | -13 | -15 | -18 | -13 | -2 | 0 | -1 | 32 | 76 | 109 | 176 | 174 | 114 | 98 | 16 |
| -2 | -10 | -17 | -23 | -26 | -14 | -10 | -10 | 19 | 49 | 105 | 144 | 155 | 134 | 103 | 16 |
| -10 | -14 | -28 | -54 | -53 | -35 | -23 | -19 | -16 | 23 | 56 | 141 | 189 | 153 | 104 | 13 |
| 0 | 0 | -17 | -65 | -65 | -47 | -27 | -17 | -5 | -10 | 35 | 72 | 185 | 185 | 119 | 28 |
| 0 | 0 | -8 | -54 | -61 | -59 | -48 | -42 | -26 | -16 | 13 | 25 | 60 | 147 | 113 | 28 |
| 1 | 4 | -1 | -26 | -49 | -52 | -53 | -63 | -45 | -26 | -18 | 9 | 16 | 41 | 79 | 27 |
| 8 | 12 | 6 | 0 | -33 | -47 | -42 | -47 | -47 | -31 | -21 | -16 | -11 | -6 | 10 | 16 |
| 0 | 6 | 7 | 10 | -9 | -10 | -32 | -31 | -39 | -36 | -26 | -21 | -16 | -9 | -3 | 2 |
| 0 | 3 | 5 | 14 | 8 | -2 | -12 | -12 | -27 | -28 | -27 | -25 | -19 | -11 | -3 | 0 |
| -1 | 3 | 3 | 9 | 7 | 1 | -2 | 5 | 0 | -16 | -26 | -22 | -20 | 15 | -8 | 0 |
| 0 | 4 | 7 | 11 | 9 | 4 | 8 | 12 | 10 | 0 | -10 | -10 | -6 | -3 | 0 | 0 |
| 0 | 0 | -1 | 0 | 0 | -3 | -3 | 0 | -1 | 0 | 0 | 0 | -2 | -2 | -1 | 0 |

# FIG. 21C

FIG. 21D

FIG. 21E

2100

2151  2150

| 0 | -4 | -2 | 0 | 1 | 1 | 0 | -4 | 0 | -3 | -2 | -1 | 0 | 0 | 0 | 0 |
| 1 | -1 | -1 | 0 | 7 | 30 | 70 | 60 | 0 | 0 | -3 | -2 | -1 | 0 | 1 | 0 |
| 0 | -2 | -2 | -1 | 12 | 38 | 79 | 65 | 0 | -3 | 0 | -1 | -1 | 1 | 1 | 1 |
| 2 | -1 | -4 | -6 | 2 | 31 | 71 | 59 | 1 | 0 | -1 | -5 | -1 | 0 | 0 | 0 |
| 2 | -3 | -8 | -18 | -7 | 36 | 113 | 103 | 97 | -3 | -6 | -6 | 0 | 0 | 0 | 1 |
| 0 | 2 | -11 | -32 | -24 | 26 | 110 | 100 | 72 | -16 | -9 | -2 | 0 | -2 | 2 | -2 |
| 0 | 1 | -14 | -69 | -74 | 0 | 80 | 81 | 34 | -30 | -15 | 0 | 0 | -1 | 0 | 0 |
| 3 | 2 | -6 | -49 | -45 | -7 | 71 | 80 | 51 | 40 | 56 | 0 | 0 | 0 | -1 | -1 |
| 0 | 2 | -1 | -29 | -45 | -17 | 47 | 69 | 85 | 91 | 77 | 65 | -5 | 0 | 1 | 0 |
| 3 | -1 | 4 | -8 | -46 | -63 | -40 | 55 | 86 | 127 | 120 | 84 | 68 | 6 | 0 | -1 |
| -1 | 1 | 1 | 0 | -24 | -56 | -71 | 7 | 54 | 100 | 05 | 99 | 68 | 1 | -2 | -2 |
| -2 | 0 | -2 | 4 | -8 | -27 | -49 | -52 | 6 | 50 | 94 | 94 | 71 | 9 | 1 | 0 |
| 1 | 2 | -1 | 2 | -3 | -17 | -31 | -24 | -21 | -36 | -27 | 2 | 12 | 6 | 2 | -3 |
| 0 | 0 | 1 | 2 | -1 | -6 | -8 | -7 | -4 | -14 | -23 | -16 | -1 | 7 | 2 | 0 |
| -2 | -4 | -5 | -3 | -3 | -5 | -6 | -3 | -1 | 0 | 0 | 0 | 0 | 0 | 0 | 0 |

2152

97

# FIG. 21F

2100

2161    2160

| 0 | -1 | -1 | 1 | 7 | 6 | -2 | -7 | 0 | 0 | -9 | -4 | -2 | -1 | 0 | 0 |
| -2 | -4 | -4 | 2 | 11 | 37 | 78 | 55 | 0 | -1 | -11 | -9 | -4 | -2 | 1 | 2 |
| 0 | -1 | -3 | 3 | 12 | 44 | 81 | 99 | 52 | 0 | -11 | -9 | -5 | -3 | -1 | 0 |
| 2 | -4 | -5 | -2 | 7 | 38 | 76 | 58 | 52 | 51 | -8 | -11 | -7 | -1 | 2 | 0 |
| 2 | -2 | -10 | -17 | -8 | 35 | 79 | 77 | 55 | 54 | 45 | -11 | -8 | -2 | 3 | 0 |
| 0 | -3 | -13 | -47 | -39 | 21 | 82 | 75 | 65 | 59 | 52 | -12 | -8 | -1 | 1 | 3 |
| 1 | 1 | -15 | -59 | -54 | -7 | 71 | 65 | 20 | 24 | 40 | 34 | 35 | 0 | 3 | 0 |
| 0 | 3 | -4 | -48 | -43 | -15 | 50 | 14 | -34 | -22 | 28 | 46 | 40 | 8 | 1 | -2 |
| 2 | 5 | 0 | -29 | -37 | -20 | 31 | 1 | -33 | -17 | 49 | 63 | 41 | 7 | 0 | -4 |
| 1 | -1 | 2 | -10 | -45 | -51 | 14 | 49 | 26 | 20 | 50 | 43 | 37 | 1 | 0 | -2 |
| -1 | 1 | 1 | 0 | -30 | -52 | -4 | 40 | 57 | 89 | 81 | 52 | 41 | 0 | 0 | 0 |
| -2 | -1 | -2 | 3 | -13 | -41 | -53 | 23 | 51 | 86 | 10 | 31 | 54 | 0 | 0 | -1 |
| 0 | -2 | -2 | 1 | -8 | -35 | -52 | 24 | 56 | 68 | 84 | 89 | 66 | 8 | 2 | 0 |
| 2 | -4 | 0 | 0 | -1 | -16 | -26 | 0 | 11 | 21 | 30 | 42 | 36 | 6 | 2 | -2 |
| 0 | 0 | -1 | 0 | -1 | -7 | -10 | -5 | -2 | 0 | 0 | 0 | 0 | 0 | -1 | -1 |

2162

## FIG. 22A

2200

2210

| -47 | -54 | -39 | -27 | -13 | 3 | -1 | -19 | -21 | -8 | 34 | 121 | 130 | 53 | -20 | -20 |
|---|---|---|---|---|---|---|---|---|---|---|---|---|---|---|---|
| 90 | 36 | -46 | -35 | -18 | 5 | 0 | -34 | -34 | -18 | 54 | 193 | 228 | 88 | -37 | -57 |
| 174 | 90 | -30 | -23 | -10 | 4 | -12 | -30 | -23 | -2 | 63 | 197 | 196 | 49 | -60 | -56 |
| 200 | 163 | 0 | -13 | -14 | -20 | -25 | -27 | -20 | -7 | 21 | 80 | 73 | 15 | -51 | -48 |
| 297 | 209 | 44 | -15 | -26 | -30 | -29 | -32 | -28 | -23 | -23 | 18 | 72 | 51 | -21 | -44 |
| 214 | 216 | 35 | -31 | -41 | -46 | -47 | -44 | -42 | -42 | -41 | 16 | 90 | 122 | 20 | -42 |
| 187 | 154 | 4 | -28 | -36 | -41 | -40 | -39 | -37 | -35 | -32 | 39 | 131 | 150 | 39 | -26 |
| 158 | 127 | 0 | -29 | -40 | -46 | -43 | -41 | -39 | -36 | -28 | 59 | 176 | 145 | 60 | -10 |
| 155 | 93 | -2 | -20 | -31 | -33 | -33 | -33 | -32 | -28 | -15 | 40 | 88 | 58 | 25 | 3 |
| 81 | 41 | 0 | -9 | -15 | -19 | -19 | -16 | -18 | -13 | -3 | 16 | 31 | 27 | 20 | 14 |
| 36 | 16 | 0 | -3 | -10 | -12 | -13 | -13 | -13 | -8 | -2 | 0 | 0 | 0 | 0 | 1 |
| 28 | 10 | -1 | -4 | -6 | -7 | -7 | -6 | -7 | -2 | -1 | 0 | 0 | 6 | 28 | 41 |
| 97 | 42 | -15 | -17 | -22 | -21 | -18 | -20 | -20 | -16 | -16 | 8 | 38 | 90 | 163 | 134 |
| 134 | 52 | -21 | -27 | -30 | -31 | -30 | -28 | -30 | -28 | -33 | 4 | 73 | 150 | 145 | 64 |
| 101 | 98 | 14 | 1 | -1 | -2 | -1 | -4 | -11 | -13 | -18 | -23 | -27 | -23 | -21 | -15 |

FIG. 22B

2200

2220

| -31 | -33 | -23 | -16 | -2 | 2 | -1 | -11 | -11 | -1 | 17 | 70 | 86 | 16 | -13 | -13 |
| 65 | 62 | -32 | -22 | -12 | -2 | -8 | -22 | -22 | -14 | 41 | 193 | 189 | 59 | -37 | -39 |
| 100 | 88 | 6 | -13 | -6 | 1 | -7 | -15 | -12 | 0 | 47 | 137 | 118 | 44 | -50 | -31 |
| 168 | 126 | 17 | -10 | -8 | -12 | -15 | -17 | -13 | -7 | 18 | 57 | 56 | 26 | -45 | -32 |
| 198 | 202 | 36 | -11 | -17 | -16 | -19 | -19 | -15 | -14 | -17 | -19 | -18 | -14 | -34 | -29 |
| 212 | 222 | 32 | -20 | -27 | -30 | -31 | -29 | -27 | -26 | -29 | -34 | 73 | 61 | 33 | -28 |
| 155 | 125 | 17 | -17 | -23 | -25 | -25 | -24 | -22 | -21 | -19 | 47 | 67 | 63 | 35 | -18 |
| 83 | 87 | 17 | -14 | -20 | -25 | -25 | -25 | -21 | -20 | -14 | 46 | 71 | 62 | 42 | -7 |
| 74 | 65 | 11 | -14 | -19 | -21 | -22 | -21 | -20 | -18 | -9 | 34 | 47 | 34 | 24 | -1 |
| 14 | 2 | -4 | -13 | -17 | -17 | -20 | -18 | -17 | -12 | -3 | -2 | 0 | 0 | 0 | 0 |
| 20 | 11 | 0 | 0 | -5 | -4 | -7 | -7 | -6 | -2 | 0 | 0 | 0 | 0 | 0 | 0 |
| 7 | 0 | -5 | -9 | -10 | -10 | -10 | -11 | -9 | -5 | -3 | -1 | -3 | 0 | 5 | 8 |
| 68 | 54 | -13 | -12 | -12 | -13 | -12 | -12 | -12 | -9 | -6 | -19 | 46 | 59 | 113 | 90 |
| 93 | 65 | -5 | -27 | -29 | -30 | -29 | -28 | -31 | -30 | -32 | -48 | 52 | 107 | 171 | 63 |
| 67 | 35 | 8 | 2 | 0 | 0 | 0 | -2 | -7 | -10 | -12 | -16 | -16 | -16 | -15 | -10 |

# FIG. 22C

# FIG. 22D

2200

2240

| -4 | -5 | -3 | -1 | 1 | 1 | 0 | -1 | -2 | 2 | 3 | 18 | 2 | -1 | -5 | -5 |
|---|---|---|---|---|---|---|---|---|---|---|---|---|---|---|---|
| 1 | 0 | -1 | -1 | 0 | 2 | 0 | -4 | -2 | 0 | 2 | 4 | 2 | -1 | -8 | -9 |
| 0 | -1 | -1 | 0 | -3 | 2 | 0 | -2 | -3 | 2 | 3 | 6 | 1 | -1 | -9 | -6 |
| 4 | 4 | 1 | 1 | 0 | -2 | -1 | -1 | 0 | 0 | 1 | 1 | 0 | -2 | -6 | -7 |
| 2 | 5 | 0 | -2 | -1 | -1 | -1 | -3 | 0 | 1 | 1 | 2 | 2 | 3 | 0 | -4 |
| 13 | 14 | 6 | 1 | 0 | -2 | -2 | -1 | 1 | 1 | 0 | 6 | 6 | 7 | 2 | 0 |
| 7 | 5 | 3 | -1 | -1 | -3 | -2 | -3 | 0 | -1 | 3 | 3 | 5 | 8 | 3 | 0 |
| 0 | 1 | 1 | 1 | -2 | -3 | -4 | -2 | 0 | 0 | 2 | 8 | 8 | 11 | 5 | 1 |
| 0 | 2 | 0 | 0 | -3 | -2 | -1 | -2 | 0 | 0 | 5 | 7 | 8 | 8 | 6 | 1 |
| -1 | 1 | 0 | 0 | -2 | -2 | -3 | 0 | -2 | 1 | 2 | 5 | 6 | 7 | 4 | 2 |
| 1 | 0 | 1 | 1 | -3 | -1 | -1 | -2 | -2 | 1 | 1 | 1 | 1 | 0 | -1 | -2 |
| 2 | 2 | 0 | -2 | -1 | -1 | -1 | 0 | -1 | -1 | 0 | 1 | 0 | 0 | 0 | 0 |
| 8 | 1 | 0 | 1 | -2 | -2 | 0 | -1 | -2 | 0 | 0 | -1 | -1 | 2 | 31 | 6 |
| 15 | 5 | 2 | -1 | -1 | -1 | -1 | 0 | -1 | 0 | -1 | 0 | 1 | 5 | 12 | 8 |
| 13 | 6 | 0 | 0 | -1 | 0 | 0 | -1 | 0 | -1 | -1 | -2 | -1 | -2 | -3 | -1 |

# FIG. 23

START

INPUT TOUCH DATA — 2310

EXTRACT TOUCH COORDINATES, TOUCH ID, AND CHARACTERISTIC
(position, ID, peak, area, major, minor) — 2315

CONFIGURE TOUCH BLOCK TIMER VALUE X BASED ON WHETHER
DISPLAY IS TURNED ON/OFF AND POCKET DETERMINATION OF OTHER SENSORS
(x=100ms, 300ms, 1000ms) — 2320

TOUCH RE-INPUT PROCESSING RESTRICTION
DETERMINATION OPERATION — 2325

2330
IS ELECTRONIC
DEVICE DETERMINED TO BE LOCATED
IN POCKET?
NO

YES 2340

SUSPEND TOUCH DETERMINATION FOR
PRECONFIGURED TIME PERIOD

2335
ACQUIRE FINGER TOUCH COORDINATES
(GESTURE)

END

# FIG. 24

<DISPLAY on>

2400

2420

PROCESSOR

2410

TOUCH IC

CPU — 2421

2440

GYRO SENSOR — 2441

MEMORY

2430

SENSOR HUB

PROXIMITY SENSOR — 2442

ILLUMINANCE SENSOR — 2443

2422

<DISPLAY off>

2400

2420

PROCESSOR

2410

TOUCH IC

CPU — 2421

2440

GYRO SENSOR — 2441

MEMORY

2430

SENSOR HUB

PROXIMITY SENSOR — 2442

ILLUMINANCE SENSOR — 2443

2422

FIG. 25

<DISPLAY on>

2400

2410

TOUCH IC

PROCESSOR 2420

CPU 2421

2440

GYRO SENSOR 2441

PROXIMITY SENSOR 2442

ILLUMINANCE SENSOR 2443

MEMORY

2430

SENSOR HUB

2450

<DISPLAY off>

2400

2410

TOUCH IC

PROCESSOR 2420

CPU 2421

2440

GYRO SENSOR 2441

PROXIMITY SENSOR 2442

ILLUMINANCE SENSOR 2443

MEMORY

2430

SENSOR HUB

2450

# FIG. 26A

2600

2610

| -24 | -26 | -24 | -19 | 8 | 30 | 50 | 64 | 73 | 70 | 56 | 9 | -3 | -8 | -15 | -13 |
| -31 | -35 | -31 | -20 | 85 | 150 | 192 | 204 | 197 | 181 | 135 | 2 | -20 | -30 | -35 | -33 |
| -26 | -27 | -25 | -11 | 93 | 151 | 193 | 206 | 194 | 176 | 127 | 2 | -20 | -32 | -35 | -30 |
| -21 | -27 | -21 | 19 | 96 | 154 | 190 | 204 | 196 | 1173 | 116 | -1 | -18 | -28 | -35 | -29 |
| -20 | -23 | -15 | 26 | 102 | 163 | 154 | 203 | 188 | 169 | 112 | -1 | -17 | -22 | -28 | -22 |
| -20 | -22 | -14 | 25 | 95 | 152 | 178 | 190 | 176 | 151 | 97 | -5 | -17 | -23 | -26 | -20 |
| -19 | -21 | -13 | 22 | 83 | 127 | 154 | 164 | 146 | 119 | 73 | -11 | -19 | -22 | -26 | -24 |
| -15 | -13 | -7 | 24 | 76 | 112 | 137 | 145 | 128 | 101 | 64 | -10 | -17 | -22 | -22 | -19 |
| -11 | -6 | 0 | 25 | 70 | 90 | 103 | 110 | 98 | 79 | 2 | -6 | -13 | -15 | -17 | -13 |
| -2 | 0 | 9 | 21 | 44 | 56 | 55 | 56 | 50 | 41 | 3 | -3 | -6 | -8 | -9 | -10 |
| -2 | -1 | 1 | 19 | 44 | 56 | 59 | 55 | 49 | 4 | 2 | -6 | -8 | -9 | -9 | -8 |
| -2 | -1 | 0 | 4 | 11 | 8 | 9 | 4 | 1 | 0 | -1 | -2 | -2 | -4 | -5 | -8 |
| -1 | 0 | 0 | -1 | 2 | 5 | 1 | 0 | -2 | -8 | -7 | -6 | -1 | -1 | 12 | 22 |
| -11 | -14 | -13 | -16 | -16 | -17 | -16 | -19 | -22 | -24 | -25 | -20 | 23 | 100 | 164 | 78 |
| 0 | 3 | 2 | 6 | 2 | 0 | 0 | 0 | -6 | -7 | -6 | -5 | -5 | -4 | -4 | -3 |

# FIG. 26B

2600

2620

| -16 | -19 | -17 | -15 | -11 | -6 | 20 | 55 | 71 | 66 | 44 | 18 | 1 | -4 | -7 | -6 |
|---|---|---|---|---|---|---|---|---|---|---|---|---|---|---|---|
| -10 | -12 | -10 | -6 | -2 | 9 | 39 | 80 | 94 | 84 | 56 | 26 | 2 | -2 | -8 | -9 |
| -3 | -6 | -2 | 0 | 2 | 10 | 32 | 58 | 69 | 60 | 39 | 20 | 1 | -5 | -7 | -6 |
| -4 | -6 | -4 | -1 | 3 | 9 | 25 | 41 | 49 | 42 | 25 | 14 | 1 | -4 | -9 | -8 |
| -7 | -7 | -2 | 1 | 3 | 8 | 18 | 27 | 32 | 30 | 20 | 11 | 1 | -2 | -4 | -7 |
| -8 | -8 | -5 | -2 | 1 | 5 | 8 | 14 | 13 | 12 | 8 | 7 | 1 | -2 | -3 | -7 |
| -4 | -6 | -2 | 2 | 5 | 5 | 8 | 12 | 9 | 9 | 6 | 2 | 0 | 0 | -3 | -6 |
| -7 | -6 | -2 | 2 | 2 | 3 | 7 | 6 | 6 | 6 | 4 | 2 | -1 | -1 | -2 | -7 |
| -2 | -1 | 2 | 4 | 5 | 5 | 6 | 5 | 4 | 5 | 5 | 2 | -1 | -1 | -2 | -1 |
| -6 | -4 | -3 | 2 | 3 | 4 | 4 | 3 | 2 | 3 | 1 | -2 | -2 | 0 | -1 | -3 |
| -2 | -2 | 0 | 1 | 5 | 3 | 6 | 3 | -1 | 0 | 2 | -2 | -1 | -1 | -1 | -2 |
| -2 | -3 | -1 | 0 | 1 | 1 | 4 | 4 | 0 | 0 | 0 | -1 | -1 | -4 | -2 | -2 |
| 1 | 0 | 1 | -2 | 0 | -2 | 1 | 0 | -2 | -6 | -6 | -2 | 0 | 4 | 23 | 35 |
| -26 | -33 | -32 | -33 | -34 | -35 | -33 | -30 | -33 | -35 | -35 | -30 | 1 | 104 | 164 | 73 |
| -2 | -2 | 0 | 0 | 0 | 0 | 0 | 0 | 0 | -1 | 0 | -1 | -1 | 0 | 0 | 0 |

# FIG. 27A

2700

2710

| -19 | -19 | -4 | 1 | -1 | 4 | 4 | 1 | 13 | 12 | 8 | -2 | -11 | -14 | -21 | -13 |
|-----|-----|-----|-----|-----|-----|-----|-----|-----|-----|-----|-----|-----|-----|-----|-----|
| -16 | -14 | 0 | 12 | 8 | 14 | 18 | 12 | -2 | 12 | 5 | -8 | -13 | -21 | -21 | -20 |
| -10 | -4 | 7 | 17 | 15 | 16 | 16 | 15 | 13 | 7 | 0 | -9 | -17 | -22 | -25 | -22 |
| -18 | -6 | 13 | 37 | 38 | 35 | 25 | 19 | 12 | 0 | -9 | -15 | -23 | -27 | -29 | -25 |
| -24 | 7 | 48 | 75 | 84 | 78 | 75 | 73 | 55 | 10 | -15 | -28 | -36 | -41 | -45 | -37 |
| -24 | 16 | 65 | 95 | 101 | 94 | 87 | 86 | 67 | 20 | -16 | -34 | -45 | -50 | -54 | -45 |
| -23 | 19 | 67 | 95 | 97 | 97 | 92 | 89 | 70 | 26 | -10 | -30 | -38 | -43 | -48 | -38 |
| -23 | 25 | 73 | 99 | 103 | 100 | 100 | 91 | 69 | 16 | -21 | -40 | -46 | -49 | -52 | -41 |
| -23 | 27 | 72 | 97 | 102 | 100 | 94 | 88 | 62 | 0 | -36 | -49 | -56 | -61 | -62 | -50 |
| -17 | 34 | 27 | 101 | 102 | 103 | 102 | 94 | 65 | -4 | -32 | -44 | -48 | -50 | -53 | -44 |
| -1 | 51 | 90 | 109 | 109 | 107 | 103 | 100 | 61 | -7 | -29 | -36 | -38 | -39 | -42 | -29 |
| -13 | 29 | 21 | 91 | 94 | 94 | 91 | 78 | 32 | -28 | -42 | -45 | -50 | -50 | -45 | -35 |
| -22 | 42 | 100 | 130 | 135 | 132 | 121 | 103 | 37 | -49 | -56 | -48 | -29 | 0 | 66 | 64 |
| -31 | 61 | 154 | 202 | 202 | 201 | 183 | 159 | 57 | -61 | -62 | -32 | 88 | 119 | 119 | 50 |
| -2 | 31 | 59 | 68 | 68 | 65 | 63 | 25 | -31 | -38 | -38 | -38 | -37 | -40 | -39 | -31 |

# FIG. 27B

2700

2720

| 0 | 13 | 10 | 8 | 12 | 9 | 2 | -8 | -7 | -12 | -18 | -14 | -17 | -17 | -20 | -13 |
|---|----|----|---|----|---|---|----|----|-----|-----|-----|-----|-----|-----|-----|
| 15 | 25 | 21 | 21 | 23 | 19 | 11 | 0 | -9 | -15 | -19 | -23 | -22 | -25 | -23 | -22 |
| 14 | 24 | 21 | 22 | 24 | 19 | 10 | 1 | -5 | -12 | -13 | -19 | -20 | -22 | -22 | -19 |
| -18 | 22 | 20 | 22 | 22 | 13 | 7 | -3 | -7 | -14 | -17 | -17 | -20 | -22 | -21 | -17 |
| -24 | 41 | 39 | 35 | 29 | 19 | 10 | 0 | -7 | -11 | -15 | -15 | -17 | -17 | -20 | -15 |
| 23 | 49 | 51 | 47 | 37 | 19 | 0 | -14 | -23 | -26 | -29 | -30 | -32 | -34 | -34 | -30 |
| 25 | 47 | 50 | 50 | 41 | 25 | 0 | -16 | -23 | -30 | -32 | -34 | -36 | -38 | -37 | -29 |
| 35 | 66 | 69 | 68 | 60 | 30 | 8 | -10 | -20 | -25 | -28 | -30 | -30 | -31 | -33 | -26 |
| 30 | 51 | 52 | 49 | 43 | 23 | 0 | -18 | -26 | -33 | -33 | -35 | -37 | -41 | -41 | -33 |
| -17 | 34 | 27 | 101 | 102 | 103 | 0 | -14 | -23 | -25 | -28 | -28 | -33 | -33 | -36 | -26 |
| -1 | 51 | 90 | 109 | 109 | 107 | 0 | -10 | -17 | -18 | -20 | -16 | -18 | -18 | -20 | -11 |
| 18 | 60 | 58 | 46 | 27 | 7 | -27 | -33 | -37 | -40 | -36 | -18 | 25 | 55 | 89 | 57 |
| 16 | 102 | 96 | 82 | 10 | -10 | -49 | -55 | -56 | -57 | -52 | -17 | 162 | 235 | 247 | 142 |
| 20 | 51 | 46 | 39 | 6 | -13 | -19 | -19 | -28 | -28 | -27 | -20 | 27 | 126 | 172 | 85 |
| 14 | 19 | 14 | 11 | 4 | 2 | 0 | -4 | -6 | -6 | -6 | -5 | -5 | -7 | -6 | -6 |

# FIG. 28

```
                    ┌──────────────┐
                    │    START     │
                    └──────┬───────┘
                           │
           ┌───────────────▼───────────────┐
           │       INPUT TOUCH DATA        │──── 2810
           └───────────────┬───────────────┘
                           │
   ┌───────────────────────▼───────────────────────┐
   │  EXTRACT TOUCH COORDINATES, TOUCH ID, AND CHARACTERISTIC │──── 2815
   │   (position, ID, peak, area, major, minor)     │
   └───────────────────────┬───────────────────────┘
                           │            2820
                      ◇────▼────◇                        YES
                   ◇  IS DISPLAY TURNED ON?  ◇───────────────────┐
                      ◇─────────◇                                │
                           │ NO        2825                      │
           ┌───────────────▼───────────────┐                    │
           │ TOUCH RE-INPUT PROCESSING RESTRICTION │            │
           │     DETERMINATION OPERATION   │                    │
           └───────────────┬───────────────┘                    │
                           │            2830                     │
                      ◇────▼────◇                                │
                   ◇     IS      ◇          NO                   │
              ◇ ELECTRONIC DEVICE DETERMINED TO BE LOCATED ◇────┼────┐
                   ◇    IN POCKET?    ◇                          │    │
                      ◇─────────◇                                │    │
                           │ YES                                 │    │
                           │            2840                      │    │
                      ◇────▼────◇                                │    │
                   ◇ IS ELECTRONIC ◇        YES                  │    │
                   ◇ DEVICE TAKEN OUT OF ◇──────────────────────┼────┤
                   ◇     POCKET?    ◇                            │    │
                      ◇─────────◇                               │    │
                           │ NO      2845                        │    │
           ┌───────────────▼───────────────┐      ┌─────────────▼────▼──────────┐
           │ SUSPEND TOUCH DETERMINATION   │      │   ACQUIRE FINGER TOUCH      │
           │ FOR PRECONFIGURED TIME PERIOD │      │   COORDINATES (GESTURE)     │──2835
           └───────────────┬───────────────┘      └─────────────────────────────┘
                           │
                    ┌──────▼───────┐
                    │     END      │
                    └──────────────┘
```

FIG. 29

## INTERNATIONAL SEARCH REPORT

| | International application No. |
|---|---|
| | **PCT/KR2024/010477** |

### A. CLASSIFICATION OF SUBJECT MATTER

**G06F 3/041**(2006.01)i; **G06F 1/16**(2006.01)i

According to International Patent Classification (IPC) or to both national classification and IPC

### B. FIELDS SEARCHED

Minimum documentation searched (classification system followed by classification symbols)

G06F 3/041(2006.01); G06F 1/26(2006.01); G06F 3/044(2006.01); G06F 3/14(2006.01); H04B 1/40(2006.01); H04B 7/26(2006.01); H04M 1/02(2006.01); H04M 1/73(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴더블(foldable), 플렉서블 디스플레이(flexible display), 터치 센서(touch sensor), 주머니(pocket), 터치 오류 방지(touch error prevention)

### C. DOCUMENTS CONSIDERED TO BE RELEVANT

| Category* | Citation of document, with indication, where appropriate, of the relevant passages | Relevant to claim No. |
|---|---|---|
| Y | KR 10-2023-0023416 A (SAMSUNG ELECTRONICS CO., LTD.) 17 February 2023 (2023-02-17) See paragraphs [0018], [0046]-[0052] and [0140]; and figures 1 and 12. | 1-5,7,15 |
| A | | 6,8-14 |
| Y | JP 09-172476 A (NIPPON DENKI IDO TSUSHIN K.K.) 30 June 1997 (1997-06-30) See paragraphs [0014]-[0015]. | 1-5,7,15 |
| Y | JP 2001-069235 A (SEIKO EPSON CORP.) 16 March 2001 (2001-03-16) See paragraphs [0027]-[0030]. | 4-5,7 |
| A | KR 10-2555229 B1 (SAMSUNG ELECTRONICS CO., LTD.) 14 July 2023 (2023-07-14) See paragraph [0099]. | 1-15 |
| A | KR 10-1134874 B1 (LG ELECTRONICS INC.) 19 April 2012 (2012-04-19) See claim 1. | 1-15 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 October 2024** | **30 October 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/010477**

| Patent document cited in search report | | | Publication date (day/month/year) | Patent family member(s) | | | Publication date (day/month/year) |
|---|---|---|---|---|---|---|---|
| KR | 10-2023-0023416 | A | 17 February 2023 | None | | | |
| JP | 09-172476 | A | 30 June 1997 | JP | 2788883 | B2 | 20 August 1998 |
| JP | 2001-069235 | A | 16 March 2001 | None | | | |
| KR | 10-2555229 | B1 | 14 July 2023 | KR 10-2018-0014575 | | A | 09 February 2018 |
| KR | 10-1134874 | B1 | 19 April 2012 | KR 10-2007-0032176 | | A | 21 March 2007 |

Form PCT/ISA/210 (patent family annex) (July 2022)